# EUROPÄISCHE PATENTSCHRIFT

(11) **EP 3 037 669 B1**
(45) Veröffentlichungstag und Bekanntmachung des Hinweises auf die Patenterteilung: **24.07.2019**
(21) Anmeldenummer: 14199691.8
(22) Anmeldetag: 22.12.2014
(51) Int. Cl.: F04D 15/00, F04D 13/06, F04D 29/42, F24D 3/08, F24D 3/10, F24D 19/10

(54) **Hydraulisches System**
Hydraulic system
Système hydraulique

(43) Veröffentlichungstag der Anmeldung: 29.06.2016
(73) Patentinhaber: Grundfos Holding A/S, 8850 Bjerringbro (DK)
(72) Erfinder: Blad, Thomas, 8850 Bjerringbro (DK); Blad, Christian, 9000 Aalborg (DK)
(74) Vertreter: Patentanwälte Vollmann Hemmer Lindfeld Partnerschaft mbB

(56) Entgegenhaltungen:
- EP-A1- 0 529 353
- EP-A1- 0 569 713
- EP-A1- 2 708 825
- EP-A2- 0 902 240
- EP-A2- 2 775 218
- DE-A1- 1 942 647
- DE-A1- 2 363 231
- FR-A1- 2 655 599
- GB-A- 2 318 179

## Beschreibung

Die Erfindung betrifft ein hydraulisches System.

Hydraulische Systeme, insbesondere hydraulische Kreislaufsysteme sind beispielsweise in Form von Heizung- und/oder Klimaanlagen bekannt, in welchen ein flüssiger Wärmeträger wie beispielweise Wasser in einem Kreislauf gefördert wird. Hierzu weisen die hydraulischen Systeme in der Regel zumindest ein Umwälzpumpenaggregat auf, welches die Flüssigkeit im System umwälzt.

Es ist auch bekannt, dass in derartigen hydraulischen Systemen Schalteinrichtungen wie beispielsweise Ventile angeordnet sein können. In Heizungsanlagen gibt es beispielsweise häufig Umschaltventile, welche ein Umschalten zwischen zwei hydraulischen Kreisen bzw. zwei Heizkreisen ermöglichen. So kann beispielsweise, je nach Schaltstellung eines solchen Ventils, in einer Heizungsanlage ein erwärmter Wärmeträger entweder durch einen Raumheizungskreis oder einen Wärmetauscher zum Erwärmen von Brauchwasser gefördert werden. Die dazu erforderlichen Umschaltventile werden in der Regel elektrisch angetrieben und angesteuert. Das heißt es sind elektrische Antriebe mit erforderlichen elektrischen Anschlüssen erforderlich.

GB 2 318 179 A offenbart ein Heizungssystem mit einem Umwälzpumpenaggregat, welches in zwei Drehrichtungen antreibbar ist. Ausgangsseitig des Pumpenaggregates befindet sich ein bewegliches Ventilelement, welches von der sich im Umfang des Laufrades des Pumpenaggregates ausbildenden Strömung angeströmt wird und bewegbar ist.

Abhängig von der Drehrichtung des Laufrades ändert sich die Strömungsrichtung im Umfangsbereich des Laufrades und das Ventilelement kann in Abhängigkeit von der Strömungsrichtung zwischen zwei Schaltstellungen bewegt werden, wobei abhängig von der Schaltstellung wahlweise einer von zwei ausgangsseitigen Strömungswegen geöffnet und der andere verschlossen wird. So ist es durch Drehrichtungsumkehr des Pumpenaggregates möglich, den Heizwasserkreislauf entweder durch einen Wärmetauscher zum Erwärmen von Brauchwasser oder durch die Heizkreise einer Heizungsanlage zu lenken.

Ein ähnliches System ist aus EP 0 569 713 A1 bekannt. Auch dort ist auf der Druckseite des Pumpenaggregates ein Ventilelement angeordnet, welches abhängig von der Drehrichtung des Antriebsmotors und damit abhängig von der Richtung der sich ausbildenden Strömung zwischen zwei Schaltstellungen umschaltbar ist.

DE 19 42 647 offenbart eine Umwälzpumpe für Heizungsanlagen mit einem an der Saugseite der Umwälzpumpe angeordneten Mischventil. Das Mischventil ist dazu ausgebildet, das Mischungsverhältnis von heißem und kaltem Wasser an der Saugseite der Umwälzpumpe zu ändern. Dieses Mischventil wird druckabhängig über den von der Umwälzpumpe erzeugten Differenzdruck gesteuert, so dass durch Erhöhung oder Verkleinerung des Differenzdruckes bei Drehzahlveränderung des Umwälzpumpenaggregates auch das Mischungsverhältnis und somit die Temperatur des von der Umwälzpumpe geförderten Wassers verändert wird.

Die drehrichtungsabhängige Umschaltung eines Ventils hat den Nachteil, dass die Schaufelkrümmung des Laufrades nicht für eine Drehrichtung zur Erhöhung des Wirkungsgrades optimiert werden kann, ohne den Wirkungsgrad in der anderen Drehrichtung zu verschlechtern. Die druckabhängige Ventilsteuerung hat den Nachteil, dass damit keine unabhängige Druckregelung des Pumpenaggregates ohne Beeinflussung der Ventilstellung mehr möglich ist.

Es ist Aufgabe der Erfindung, ein hydraulisches System in der Weise zu vereinfachen und zu verbessern, dass die Zahl der erforderlichen elektrisch betätigten Schalteinrichtungen im System reduziert wird und gleichzeitig optimal regelbar ist.

Diese Aufgabe wird durch ein hydraulisches System mit den in Anspruch 1 angegebenen Merkmalen sowie durch ein Verfahren zum Betrieb eines hydraulischen Kreislaufsystems mit den in Anspruch 26 angegebenen Merkmalen gelöst. Bevorzugte Ausführungsformen ergeben sich aus den Unteransprüchen, der Beschreibung sowie den Figuren.

Das erfindungsgemäße hydraulische System weist zumindest ein Umwälzpumpenaggregat und zumindest einen mit diesem Umwälzpumpenaggregat verbundenen hydraulischen Kreis auf. Dabei ist der hydraulische Kreis mit dem Umwälzpumpenaggregat so verbunden, dass das Umwälzpumpenaggregat eine Flüssigkeit, beispielsweise Wasser, in dem hydraulischen Kreis umwälzt. Der hydraulische Kreis kann dabei beispielsweise eine Heizungs- oder Kühlanlage sein, in welcher ein flüssiger Wärmeträger, beispielsweise Wasser im Kreislauf gefördert wird. Bei dem Umwälzpumpenaggregat handelt es sich vorzugsweise um ein elektromotorisch angetriebenes Umwälzpumpenaggregat, z.B. ein Kreiselpumpenaggregat, insbesondere mit einem nasslaufenden elektrischen Antriebsmotor.

Das Umwälzpumpenaggregat weist erfindungsgemäß einen Drehzahlsteller auf, welcher es ermöglicht, das Umwälzpumpenaggregat mit zumindest zwei verschiedenen Drehzahlen zu betreiben. Vorzugsweise ist das Umwälzpumpenaggregat über den Drehzahlsteller über einen größeren Bereich in seiner Drehzahleinstellbar, d. h. die Drehzahl kann über einen größeren Drehzahlbereich in mehreren Stufen oder stufenlos verändert werden.

Neben dem Umwälzpumpenaggregat ist erfindungsgemäß in dem hydraulischen Kreis zumindest eine mechanische Schalteinrichtung angeordnet, welche mit dem Druck des im hydraulischen Kreis befindlichen Fluids bzw. der in dem hydraulischen Kreis befindlichen Flüssigkeit beaufschlagt wird. Die mechanische Schalteinrichtung ist in zumindest zwei unterschiedliche Schaltstellungen, d. h. zumindest in eine erste und eine zweite Schaltstellung bewegbar.

Erfindungsgemäß ist vorgesehen, auf einen separaten, beispielsweise elektrischen Antrieb für die mechanische Schalteinrichtung zu verzichten und stattdessen das Umschalten zwischen den Schaltstellungen allein durch die Flüssigkeit bzw. das Fluid, welches sich in dem hydraulischen Kreis befindet, zu bewirken. Das heißt, erfindungsgemäß erfolgt eine Kraftübertragung von dem Umwälzpumpenaggregat auf die mechanische Schalteinrichtung über das in dem hydraulischen Kreis befindliche Fluid. Das bedeutet, die zumindest eine mechanische Schalteinrichtung ist mit dem Umwälzpumpenaggregat über das Fluid in dem hydraulischen Kreis hydraulisch gekoppelt, bevorzugt ausschließlich hydraulisch gekoppelt. Dabei ist bevorzugt keine weitere mechanische Kopplung zwischen dem Umwälzpumpenaggregat und der Schalteinrichtung vorgesehen. Insbesondere ist keine Kopplung zwischen dem Rotor bzw. dem Laufrad des Umwälzpumpenaggregates und der Schalteinrichtung über einen mechanischen Eingriff dieser Bauteile vorgesehen. Das heißt, bevorzugt ist eine ausschließlich hydraulische Kopplung über das Fluid vorgesehen.

Die hydraulische Kopplung ermöglicht es, über den Drehzahlsteller die Drehzahl des Umwälzpumpenaggregates anzupassen und darüber die Schalteinrichtung zu betätigen. Dazu wird durch die Drehzahlanpassung des Umwälzpumpenaggregates über den zumindest einen hydraulischen Kreis eine geeignete hydraulische Kraft erzeugt, welche über den hydraulischen Kreis auf die Schalteinrichtung wirkt und die Bewegung der Schalteinrichtung verursacht. So kann auf einen separaten Antrieb der Schalteinrichtung verzichtet werden. Die Schalteinrichtung wird vielmehr bevorzugt allein durch hydraulische Kräfte, welche über den hydraulischen Kreis übertragen werden, bewegt. Diese hydraulischen Kräfte können gezielt durch Drehzahlanpassung bzw. durch Steuerung der Drehzahl des Umwälzpumpenaggregates durch den Drehzahlsteller erzeugt werden. Vorzugsweise sind dies Drehzahländerungen oder Drehzahlanpassungen, welche im normalen Betrieb des hydraulischen Systems, beispielsweise einer Heizungsanlage, nicht auftreten oder diesen normalen Betrieb nicht beeinträchtigen. So wird der normale Betrieb des hydraulischen Systems durch das Schalten der mechanischen Schalteinrichtung nicht beeinträchtigt.

Erfindungsgemäß ist die mechanische Schalteinrichtung in einer Weise ausgebildet, dass sie auf Druckänderungen aufgrund einer Drehzahländerung des Umwälzpumpenaggregates derart reagiert, dass die mechanische Schalteinrichtung in Abhängigkeit einer Änderung des Druckes wahlweise in eine der Schaltstellungen bewegbar ist.

Erfindungsgemäß ist die Schalteinrichtung in ihrer Umschaltfunktion nicht abhängig vom Absolutwert des Druckes zu gestaltet, sondern so ausgebildet, dass sie auf bestimmte Änderungen des Druckes reagiert, sodass durch gezielte Druckänderungen ein Umschalten von einer Schaltstellung in die andere erreicht wird. So ist die Schalteinrichtung in ihrer Schaltfunktion abhängig von der Geschwindigkeit der Druckänderung, sodass sie beispielsweise so ausgebildet ist, dass sie sich bei einer schnellen Druckänderung in eine erste Schaltstellung und bei einer langsamen Druckänderung in eine zweite Schaltstellung bewegt.

Erfindungsgemäß ist vorgesehen, die Schalteinrichtung derart auszubilden, dass sie auf Unterschiede im Verlauf eines Druckaufbaus des Fluids bei einer Drehzahländerung des Umwälzpumpenaggregates reagiert, um eine Bewegung zwischen den zwei unterschiedlichen Schaltstellungen zu veranlassen. Das heißt erfindungsgemäß ist eine Kombination eines Umwälzpumpenaggregates und einer mechanischen Schalteinrichtung vorgesehen, welche eine bislang ungenutzte Variabilität des Umwälzpumpenaggregates zur Bewegung der Schalteinrichtung ausnutzt. Während die im Betrieb zu erreichende Drehzahl des Umwälzpumpenaggregates in der Regel vom gewünschten Durchfluss bzw. Differenzdruck in dem hydraulischen Kreis bestimmt und vorgegeben wird, hat das Hochfahrverhalten des Umwälzpumpenaggregates in bisherigen hydraulischen Systemen, wie Heizungssystemen, in der Regel keinen Einfluss auf den eigentlichen Betrieb des Systems. Insofern ist es vorgesehen, das Hochfahrverhalten bzw. die Art oder den Verlauf einer Drehzahländerung des Umwälzpumpenaggregates durch Variation dazu zu nutzen, über die hydraulische Kopplung die Schalteinrichtung in eine gewünschte Schaltstellung zu bewegen. Das heißt Umwälzpumpenaggregat und Schalteinrichtung sind so ausgebildet, dass die Schalteinrichtung nicht allein durch Variation des zu erreichenden Enddruckes und/oder des zu erreichenden Absolut- bzw. Enddurchflusses in dem hydraulischen Kreis in eine gewünschte Schaltstellung bewegt wird, sondern in Abhängigkeit des Verlaufes eines Druckaufbaus in dem hydraulischen Kreis in Abhängigkeit eines Verlaufes einer Drehzahländerung des Umwälzpumpenaggregates. Dazu ist die Schalteinrichtung so ausgebildet, dass sie sich bei einer Drehzahländerung des Umwälzpumpenaggregates mit einem ersten Verlauf des Druckaufbaus in eine erste Schaltstellung und bei einer Drehzahländerung des Umwälzpumpenaggregates mit einem von diesem ersten Verlauf abweichenden zweiten Verlauf des Druckaufbaus in die zweite Schaltstellung bewegt. Um die unterschiedlichen Verläufe des Druckaufbaus zu erreichen, wird der Antrieb des Umwälzpumpenaggregates über den Drehzahlsteller in verschiedener Weise angesteuert. Das heißt es ist keine separate elektrische Antriebseinrichtung für die Schalteinrichtung erforderlich, einziges elektrisch anzusteuerndes Bauteil ist vorzugsweise der Antriebsmotor des zumindest einen Umwälzpumpenaggregates. Dieser Antriebsmotor kann durch entsprechende Einstellung des Verlaufes einer Drehzahländerung über den Drehzahlsteller, woraus sich ein unterschiedlicher Verlauf des Druckaufbaus ergibt, gleichzeitig dazu genutzt werden, die entsprechend passend ausgebildete Schalteinrichtung zu betätigen.

Besonders bevorzugt ist die mechanische Schalteinrichtung derart selbsthaltend ausgebildet, dass sie bis zu einer vorbestimmten Drehzahl oder Drehzahländerung des Umwälzpumpenaggregates in der eingenommenen Schaltstellung verbleibt. So kann nach Erreichen der gewünschten Schaltstellung das Umwälzpumpenaggregat insbesondere in herkömmlicher Weise gesteuert bzw. geregelt werden, z. B. um einen gewünschten Differenzdruck über dem Umwälzpumpenaggregat und/oder einen gewünschten Durchfluss in dem hydraulischen Kreis einzustellen. Diese Regelung hat dann keinerlei Einfluss auf die gewählte Schaltstellung. Das heißt im Betrieb ist das Pumpenaggregat bis zu einer definierten Drehzahl oder Drehzahländerung, welche eine Änderung der Schaltstellung der Schalteinrichtung bewirken soll, selbsthaltend. Diese Drehzahländerung ist vorzugsweise eine Drehzahländerung in Form einer Beschleunigung, das heißt eine Erhöhung der Drehzahl aus dem Stillstand des Pumpenaggregates oder ausgehend von einer Basisdrehzahl. Besonders bevorzugt sind das Umwälzpumpenaggregat und die Schalteinrichtung so ausgebildet, dass zum Umschalten zwischen einer ersten und einer zweiten Schaltstellung der Schalteinrichtung die Drehzahl des Umwälzpumpenaggregates zunächst auf eine solche Basisdrehzahl oder bis zum Stillstand reduziert wird und dann ausgehend vom Stillstand oder der Basisdrehzahl ein gewünschter Verlauf der Drehzahlerhöhung und damit ein entsprechend gewünschter Verlauf des Druckaufbaus ausgewählt wird, welcher geeignet ist die Schalteinrichtung in eine gewünschte der möglichen Schaltstellungen zu bewegen bzw. in einer gewünschten der Schaltstellungen zu halten. Bevorzugt sind mittels des Drehzahlstellers zumindest zwei unterschiedliche Drehzahlverläufe des Umwälzpumpenaggregates einstellbar, wobei der Drehzahlsteller weiter bevorzugt derart ausgebildet ist, dass das Umwälzpumpenaggregat Drehzahländerungen mit zumindest zwei verschiedenen Beschleunigungsverläufen ermöglicht. So kann das Umwälzpumpenaggregat beispielsweise ein Umwälzpumpenaggregat mit einem drehzahlgeregelten Antriebsmotor, insbesondere mit Hilfe eines Frequenzumrichters, sein. Der Drehzahlsteller kann somit bevorzugt so ausgebildet sein, dass er die Drehzahl stufenlos variieren kann. Alternativ kann der Drehzahlsteller jedoch auch so ausgebildet sein, dass er zumindest zwei verschiedene vorbestimmte Drehzahlen oder mehrere vorbestimmte Drehzahlen einstellen kann. Die Drehzahlverläufe können insbesondere Rampen beim Anfahren des Umwälzpumpenaggregates sein, welche von dem Drehzahlsteller vorzugsweise unterschiedlich steil eingestellt werden, wobei die Schalteinrichtung dann vorzugsweise so ausgebildet ist, dass sie bei einer langsamen Drehzahländerung eine erste Schaltstellung und bei einer schnellen Drehzahländerung mit steilerer Rampe eine zweite Schaltstellung einnimmt. Die langsame Drehzahländerung bewirkt einen langsamen Druckaufbau in dem hydraulischen Kreis, die schnelle Drehzahländerung hingegen bewirkt einen schnellen Druckaufbau in dem hydraulischen Kreis. Der unterschiedlich schnelle Druckaufbau überträgt sich auf die Schalteinrichtung, welche so ausgebildet ist, dass sie auf die Geschwindigkeit des Druckaufbaus reagieren kann. Der Druckaufbau kann dabei, insbesondere bei Drehzahlerhöhung, kontinuierlich bzw. stetig erfolgen. Alternativ ist auch eine stufenweise Drehzahländerung und damit eine stufenweise Änderung, insbesondere Erhöhung, des Druckes möglich. Dabei kann beispielsweise eine langsame Druckerhöhung so ausgestaltet sein, dass sie in mehreren Schritten bzw. mehreren Stufen erfolgt, während die schnelle Druckerhöhung direkt erfolgt. Auch könnten für die langsamere Druckerhöhung zwischen den Stufen oder Schritten längere Pausen als bei der schnellen Druckerhöhung eingelegt werden. Es ist zu verstehen, dass bei den verschiedenen Verläufen des Druckaufbaus vorzugsweise stets derselbe Enddruck als Betriebsdruck in dem hydraulischen Kreis erreicht wird, so dass nach Betätigung der Schalteinrichtung der sich daran anschließende Betrieb in herkömmlicher Weise ohne Beeinträchtigung erfolgen kann.

Der Drehzahlsteller kann Teil einer übergeordneten oder weitere Funktionen umfassenden Steuereinrichtung sein, welche beispielsweise eine Druck- und/oder Durchflussregelung des Umwälzpumpenaggregates durchführt. Diese Steuereinrichtung kann zusätzlich das Umschalten der mechanischen Schalteinrichtung steuern. Alternativ kann hierfür auch eine separate Steuereinrichtung vorgesehen sein, welche mit dem Drehzahlsteller gekoppelt ist.

Vorzugsweise ist die Schalteinrichtung derart ausgebildet, dass die Bewegungen in die zumindest zwei verschiedenen Schaltstellungen mit unterschiedlichen zeitlichen Verzögerungen erfolgen, wobei vorzugsweise die Bewegungen entlang unterschiedlich langer Wege und/oder entgegen unterschiedlich starker Dämpfungen, Trägheitskräfte und/oder Vorspannkräfte erfolgen. Die Bewegungen in die unterschiedlichen Schaltstellungen erfolgen somit bevorzugt mit unterschiedlicher Dynamik. Die zeitlichen Verzögerungen ermöglichen es, dass durch unterschiedlich schnellen Druckaufbau im hydraulischen System die Schalteinrichtung veranlasst werden kann, eine gewünschte der möglichen Schaltstellungen einzunehmen bzw. beizubehalten. Wenn beispielsweise der Druck schnell erhöht wird, kann die Schalteinrichtung schnell eine Bewegung in eine Schaltstellung vornehmen, welche einer geringeren Verzögerung bzw. Dämpfung unterworfen ist. Eine zweite stärker verzögerte Bewegung wird durch den schnellen Druckaufbau aufgrund der Verzögerung bzw. Dämpfung verhindert bzw. so verlangsamt, dass diejenige Schaltstellung, zu deren Einnahme, eine weniger verzögerte Bewegung erforderlich ist, schneller erreicht wird. Wird jedoch der Druck beispielsweise langsamer erhöht, kann durch die langsame Druckerhöhung die Verzögerung ausgeglichen werden, so dass die Schalteinrichtung beispielsweise in einer Schaltstellung gehalten bzw. in eine Schaltstellung bewegt werden kann, in welcher die stärkere Verzögerung bzw. Dämpfung wirkt. Der unterschiedlich schnelle Druckaufbau kann beispielsweise kontinuierlich mit unterschiedlicher Steigung erfolgen oder aber auch stufenweise z.B. mit unterschiedlich langen Pausen zwischen den Stufen bzw. Schritten erfolgen.

Eine gewünschte Verzögerung kann auf verschiedene Weise erreicht werden, beispielsweise in dem für die einzelnen Schaltstellungen unterschiedlich lange Wege der Schalteinrichtung zurückgelegt werden müssen. Es können alternativ oder zusätzlich Dämpfungselemente Verwendung finden und/oder Reibungs-, Trägheits- oder Vorspannkräfte der Bewegung zu deren Verzögerung entgegenwirken. Auch kann die Schalteinrichtung so ausgestaltet werden, dass die Schwerkraft einer Bewegung in die verschiedenen Schaltstellungen unterschiedlich stark entgegenwirkt. Die Schalteinrichtung kann gezielt so ausgestaltet werden, dass in zumindest einer Bewegungsrichtung in eine erste der Schaltstellungen eine höhere Dämpfung bzw. Verzögerung auftritt, als in einer Bewegungsrichtung in eine zweite Schaltstellung. Dabei ist zu verstehen, dass eine Bewegung in eine der Schaltstellungen im Sinne der Erfindung auch bedeuten kann, dass die Schalteinrichtung in dieser Schaltstellung verbleibt, wenn sie sich zuvor bereits in dieser Schaltstellung befunden hat.

Gemäß einer bevorzugten Ausführungsform des hydraulischen Systems ist das Umwälzpumpenaggregat mit zumindest zwei hydraulischen Kreisen verbunden und die mechanische Schalteinrichtung über zumindest einen der hydraulischen Kreise derart mit Fluiddruck beaufschlagt, dass die Schalteinrichtung mittels der von dem Fluiddruck erzeugten Kräfte bewegbar ist. Das heißt bevorzugt wird die Schalteinrichtung durch den hydraulischen Druck in einem der hydraulischen Kreise, welcher von dem Umwälzpumpenaggregat erzeugt wird, beaufschlagt, wobei die Schalteinrichtung so ausgebildet ist, dass sie bei Drehzahländerung des Umwälzpumpenaggregates, insbesondere bei Drehzahlerhöhung, wie es oben beschrieben wurde, auf dem daraus resultierenden unterschiedlichen Verlauf des Druckaufbaus reagiert, so dass sie in Abhängigkeit von der Art des Verlaufes des Druckaufbaus in eine gewünschte Schaltstellung bewegbar ist. Die Schalteinrichtung kann beispielsweise so angeordnet sein, dass sie über den ersten hydraulischen Kreis mit Druck beaufschlagt wird und eine Schaltfunktion in dem zweiten hydraulischen Kreis bewirkt. Jedoch ist auch bei dieser Funktion das Umschalten bzw. die Bewegung der Schalteinrichtung in die gewünschte Schaltstellung bevorzugt nicht abhängig von der absoluten Höhe eines erreichten Druckes, sondern Abhängig von der Art des Druckverlaufes in dem hydraulischen Kreis, welcher das Umwälzpumpenaggregat mit der Schalteinrichtung verbindet. Besonders bevorzugt können beide hydraulische Kreise mit der Schalteinrichtung verbunden sein und weiter bevorzugt auch beide hydraulischen Kreise mit dem Umwälzpumpenaggregat verbunden sein, wobei das Pumpenaggregat gleichzeitig eine Fluidströmung in beiden hydraulischen Kreisen oder wahlweise, das heißt vorzugsweise umschaltbar, eine Fluidströmung jeweils in einem der hydraulischen Kreise verursacht.

Besonders bevorzugt ist das Umwälzpumpenaggregat mit zumindest zwei hydraulischen Kreisen verbunden und die zumindest eine mechanische Schalteinrichtung ist als zumindest ein Ventil mit zumindest einem beweglichen Ventilelement zur Änderung des Verhältnisses der Durchflüsse durch die zumindest zwei hydraulischen Kreise und insbesondere zum Umschalten eines Strömungsweges zwischen den zumindest zwei hydraulischen Kreisen ausgebildet. So können die zwei hydraulischen Kreise beispielsweise zwei Kreise einer Heizungsanlage, beispielsweise ein erster Kreis durch einen Wärmetauscher zur Erwärmung von Brauchwasser und ein zweiter Kreis als Heizungskreis in einem Gebäude ausgebildet sein. Die Schalteinrichtung kann entsprechend als Ventil, insbesondere als Umschaltventil ausgebildet sein, um die von dem Umwälzpumpenaggregat erzeugte Strömung wahlweise in einen der hydraulischen Kreise zu lenken. So sind bevorzugt zumindest zwei Schaltstellungen der mechanischen Schalteinrichtung vorgesehen, wobei in einer ersten Schaltstellung die Fluidströmung durch den ersten hydraulischen Kreis und in einer zweiten Schaltstellung durch den zweiten hydraulischen Kreis erfolgt. Das Umschalten erfolgt in Abhängigkeit des Verlaufes des Druckaufbaus bei Drehzahländerung, insbesondere beim Beschleunigen oder Anfahren des Umwälzpumpenaggregates, aus dem Stillstand oder ausgehend von einer Basisdrehzahl.

Bevorzugt weist die Schalteinrichtung zumindest eine erste Steuerfläche, auf welche ein Fluiddruck in einem ersten der hydraulischen Kreise, vorzugsweise ein Fluiddruck am Ausgang des ersten hydraulischen Kreises wirkt und zumindest eine zweite Steuerfläche auf, auf welche ein Fluiddruck in einem zweiten der hydraulischen Kreise, insbesondere am Anfang des zweiten hydraulischen Kreises, oder ein Fluiddruck an der Druckseite des Umwälzpumpenaggregates wirkt. Der Fluiddruck an der Druckseite des Pumpenaggregates ist vorzugsweise ein Fluiddruck unmittelbar ausgangsseitig des Umwälzpumpenaggregates, das heißt an einer Stelle stromaufwärts der wesentlichen hydraulischen Widerstände in dem sich anschließenden hydraulischen Kreis, an einer Stelle, an welcher im Wesentlichen noch keine Druckverluste aufgetreten sind. Die erste Steuerfläche ist hingegen bevorzugt mit einem Fluiddruck in dem ersten hydraulischen Kreis beaufschlagt, welcher an einer Stelle im hydraulischen Kreis stromabwärts der Ausgangsseite des Umwälzpumpenaggregates herrscht, das heißt stromabwärts hydraulischer Widerstände und somit an einer Stelle, an welcher ein Druckverlust gegenüber der Ausgangsseite der Pumpe aufgetreten ist. Besonders bevorzugt ist die erste Steuerfläche mit einem Fluiddruck am Ausgang des ersten hydraulischen Kreises beaufschlagt, das heißt an einer Stelle stromabwärts der wesentlichen hydraulischen Widerstände in dem hydraulischen Kreis, besonders bevorzugt angrenzend an die Saugseite des Umwälzpumpenaggregates. So liegt vorzugsweise im Betrieb des hydraulischen Systems über diesem ersten hydraulischen Kreis die von dem Umwälzpumpenaggregat zu erzeugende Druckdifferenz zwischen der ersten Steuerfläche und der zweiten Steuerfläche an.

Anstatt die zweite Steuerfläche mit der Druckseite des Umwälzpumpenaggregates zu verbinden, kann in einer alternativen Ausführungsform die zweite Steuerfläche mit dem zweiten hydraulischen Kreis, insbesondere dem Ausgang des zweiten hydraulischen Kreises verbunden sein. So kann die Schalteinrichtung mit zwei verschiedenen Drücken, welche in den beiden hydraulischen Kreisen anliegen, beaufschlagt werden, um ein Umschalten der Schalteinrichtung zu bewirken. Die Drücke in den beiden hydraulischen Kreisen, insbesondere an deren Ausgängen, können wiederum über die Drehzahl bzw. Drehzahländerungen des Umwälzpumpenaggregates mit Hilfe des Drehzahlstellers beeinflusst werden, so dass über diese hydraulische Drücke ein Umschalten der Schalteinrichtung bewirkt werden kann. Bei dieser Anordnung kann die Schalteinrichtung somit insbesondere direkt an der Saugseite des Umwälzpumpenaggregates angeordnet werden. Wenn die beiden hydraulischen Kreise von einem Knotenpunkt, welcher an der Druckseite des Umwälzpumpenaggregates gelegen ist, abzweigen und mit ihren Ausgängen mit den Steuerflächen an der Saugseite des Umwälzpumpenaggregates in Verbindung stehen, können die Eigenschaften der hydraulischen Kreise bezüglich der Druckübertragung genutzt werden, um unterschiedlich schnell einen Fluiddruck an den beiden Steuerflächen aufzubauen, so dass durch so erzeugte Druckunterschiede ein Umschalten der Schalteinrichtung beispielsweise durch Verlagerung eines Ventilelementes erreicht werden kann. Insbesondere kann die Schalteinrichtung so ausgebildet sein, dass in einem Schaltzustand stets einer der hydraulischen Kreise verschlossen ist. In dem verschlossenen hydraulischen Kreis baut sich ein höherer Druck auf oder schneller ein Druck auf als in dem offenen hydraulischen Kreis, so dass auf die Steuerfläche, welche mit dem in dem jeweiligen Schaltzustand geschlossenen hydraulischen Kreis in Verbindung steht ein höherer Druck wirkt, was ein Umschalten der Schalteinrichtung bewirkt.

Die Steuerflächen sind vorzugsweise mit dem zumindest einen Ventilelement derart verbunden, dass ein auf die Steuerflächen wirkender Fluiddruck zumindest eine auf das Ventilelement wirkende Kraft verursacht, welche zumindest teilweise in Richtung einer Bewegungsachse des Ventilelementes gerichtet ist. Das heißt diese auf das Ventilelement wirkende Kraft hat eine Kraftkomponente in Richtung der Bewegungsachse des Ventilelementes, so dass sie dazu genutzt werden kann, das Ventilelement zu bewegen, insbesondere in eine oder mehrere gewünschte Schaltstellungen zu bewegen bzw. in einer solchen zu halten.

Das heißt, die hydraulische Kraft wird dazu genutzt, die Schalteinrichtung bzw. deren Ventilelement zwischen den zumindest zwei Schaltstellungen zu bewegen. Die Steuerflächen können auf geeignete Weise mechanisch mit dem Ventilelement, beispielsweise durch Ventil- oder Kolbenstangen, verbunden sein oder aber besonders bevorzugt direkt an dem Ventilelement oder einstückig mit dem Ventilelement ausgebildet sein. So weist besonders bevorzugt das Ventilelement selber die Steuerflächen auf, auf welche der Fluiddruck wirkt. Gleichzeitig dient das Ventilelement dazu, eine Schaltfunktion im Strömungsweg des hydraulischen Systems bereitzustellen, insbesondere eine Umschaltfunktion zwischen zwei hydraulischen Kreisen zu ermöglichen. Es ist somit bevorzugt vorgesehen, dass das Ventilelement einerseits das Fluid in dem hydraulischen System beeinflusst, beispielsweise in geeigneter Weise drosselt, mischt oder einen Strömungsweg umschaltet, andererseits von diesem Fluid selber aber auf den Steuerflächen mit Druck beaufschlagt wird, so dass das Fluid selber das Ventilelement bewegen kann. Dabei ist eine Bewegung des Ventilelementes nicht allein von der absoluten Kraft bzw. dem absoluten Druck des Fluids abhängig, sondern wie oben beschrieben von dem Verlauf des Druckaufbaus.

Weiter bevorzugt ist die erste Steuerfläche größer als die zweite Steuerfläche. Durch diese Ausgestaltung kann beispielsweise ein Druckverlust in dem hydraulischen Kreis, welcher keinen Einfluss auf die Funktion der Schalteinrichtung haben soll, kompensiert werden. Der Druckverlust kann durch eine entsprechend vergrößerte Steuerfläche ausgeglichen werden. Im Falle eines Heizungssystems, wie es unten beschrieben wird, kann dies beispielsweise der Druckverlust in einem Primärwärmetauscher sein, in welchem das als Wärmeträger dienende Fluid erwärmt oder im Falle eines Kühlsystems gekühlt wird.

Gemäß einer weiteren bevorzugten Ausführungsform sind die erste und die zweite Steuerfläche derart angeordnet, dass die von dem Fluiddruck an der ersten und der zweiten Steuerfläche erzeugten Kräfte zumindest teilweise einander entgegengesetzt gerichtet sind. Das heißt die Kräfte haben zumindest Kraftkomponenten, welche einander entgegengesetzt sind. Durch diese Anordnung der Steuerflächen wird erreicht, dass zwischen den beiden an den Steuerflächen wirkenden Kräften eine resultierende Differenzkraft entstehet, welche eine Bewegung der Schalteinrichtung bzw. deren Ventilelementes in eine gewünschte Richtung bewirken kann.

Vorzugsweise sind die erste und die zweite Steuerfläche in dem hydraulischen System derart platziert und dimensioniert, dass bei einer Drehzahländerung des Umwälzpumpenaggregates ein Druckaufbau an der ersten Steuerfläche langsamer erfolgt als an der zweiten Steuerfläche, wobei vorzugsweise bei einer ersten schnelleren Drehzahländerung der schnellere Druckanstieg an der zweiten Steuerfläche eine Bewegung der Schalteinrichtung bewirkt, während bei einer zweiten relativ langsameren Drehzahländerung ein Druckaufbau an der ersten und zweiten Steuerfläche derart langsam erfolgt, dass ein Kräftegleichgewicht der auf die Steuerflächen wirkenden Kräfte erhalten bleibt. Bevorzugt ist, wie oben dargestellt, die erste Steuerfläche über einen hydraulischen Kreis mit dem Umwälzpumpenaggregat bzw. der Druckseite des Umwälzpumpenaggregates verbunden. Dieser durch den hydraulischen Kreis gebildete längere Strömungsweg und/oder Strömungswiderstand führt zu einem verzögerten Druckaufbau an der ersten Steuerfläche. Wenn nun die zweite Steuerfläche näher zu der Druckseite des Umwälzpumpenaggregates hin gelegen ist, vorzugsweise unmittelbar stromabwärts der Druckseite des Umwälzpumpenaggregates gelegen ist, ist der Strömungsweg und/oder der Strömungswiderstand zwischen dem Umwälzpumpenaggregat und der zweiten Steuerfläche geringer, so dass der Druckaufbau an der zweiten Steuerfläche schneller erfolgt. Bei einem schnellen Verlauf des Druckaufbaus kann somit ein Druck an der zweiten Steuerfläche schneller anliegen als an der ersten Steuerfläche, wo er verzögert anliegt und es entsteht so für die Zeit der Verzögerung an der zweiten Steuerfläche eine resultierende Kraft, welche genutzt werden kann, um die Schalteinrichtung bzw. deren Ventilelement in eine gewünschte Schaltstellung zu bewegen. Erfolgt hingegen der Druckaufbau langsam, kann auf dieses Weise der verzögerte Druckaufbau an der ersten Steuerfläche kompensiert werden, so dass ein Kräftegleichgewicht an der ersten und der zweiten Steuerfläche erhalten bleibt, so dass es dann vorzugsweise zu keiner Verlagerung der Schalteinrichtung bzw. deren Ventilelementes kommt, so dass das Ventilelement in einer zuvor eingenommenen definierten Ruhestellung verbleibt. Ein grundsätzlicher Druckverlust im hydraulischen Kreis kann, wie oben beschrieben, durch unterschiedliche Größe der Steuerflächen ausgeglichen werden.

Der durch den hydraulischen Kreis hervorgerufene Druckaufbau kann alternativ oder zusätzlich durch einen Bypass zwischen der Druckseite des Umwälzpumpenaggregates und der ersten Steuerfläche bewirkt werden. In dem Bypass ist dazu vorzugsweise zumindest ein Verzögerungselement vorhanden, welches einen verzögerten Druckaufbau bzw. eine verzögerte Druckübertragung durch den Bypass bewirkt, so dass sich das beschriebene Kräftegleichgewicht einstellt. In dem Fall, dass die erste Steuerfläche allein über den Bypass mit Druck beaufschlagt wird, ist die erste Steuerfläche bevorzugt in einer von dem hydraulischen Kreis getrennten Kammer angeordnet, jedoch mit dem Ventilelement mechanisch gekoppelt oder kraftübertragend verbunden. Diese Ausgestaltung hat den Vorteil, dass die Schaltfunktion von der Ausgestaltung des hydraulischen Kreises unabhängig ist und auch bei geschlossenem hydraulischen Kreis funktioniert.

Bei dem vorangehend beschriebenen System werden somit unterschiedliche dynamische Eigenschaften der hydraulischen Kreise ausgenutzt, um mit Hilfe einer unterschiedlichen Dynamik des Druckaufbaus eine Verlagerung bzw. ein Umschalten der Schalteinrichtung zu erreichen.

Anstatt auf ein und dasselbe Ventilelement zu wirken, können die Steuerflächen auch auf unterschiedliche Ventilelemente wirken und es können andere geeignete Gegenkräfte z. B. durch Vorspannung und Verzögerungen durch geeignete Verzögerungselemente erfolgen, so dass auch dann der unterschiedlich schnelle Druckaufbau zum Bewegen jeweils nur eines der Ventilelemente verwendet werden kann.

Vorzugsweise ist das hydraulische System so ausgebildet, dass die Schalteinrichtung sich in ihrer Ruhelage stets in eine definierte der möglichen Schaltstellungen bewegt. Dann kann abhängig vom Verlauf des Druckaufbaus die Schalteinrichtung entweder in dieser ersten Schaltstellung verharren oder in eine zweite Schaltstellung bewegt werden. Dies wird im Sinne der vorangehenden Beschreibung als eine Bewegung zwischen zwei möglichen Schaltstellungen in Abhängigkeit des Verlaufes des Druckaufbaus angesehen. Gemäß einer alternativen Ausführungsform kann die Schalteinrichtung auch so ausgebildet sein, dass sie zwischen zwei Schaltstellungen durch den hydraulischen Druck, welcher von dem Umwälzpumpenaggregat erzeugt wird, bewegbar ist. So ist es nicht erforderlich, dass sich die Schalteinrichtung stets in eine Ruhelage zurück bewegt.

Vorzugsweise ist die Schalteinrichtung zusätzlich mit der Schwerkraft, einer Magnet- und/oder Federkraft beaufschlagt, welche in der Richtung einer Bewegungsachse der Schalteinrichtung, insbesondere in Richtung der Bewegungsachse eines Ventilelementes der Schalteinrichtung wirkt. Eine solche Schwer-, Magnet- und/oder Federkraft bildet eine Vorspannkraft und kann beispielsweise dazu dienen, die Schalteinrichtung bzw. deren Ventilelement oder Ventilelemente in einer Ruhelage, welche vorzugsweise dann gegeben ist, wenn das Umwälzpumpenaggregat steht oder sich auf einer Basisdrehzahl bewegt, in einer vordefinierten ersten Schaltstellung zu halten. Alternativ kann die Schalteinrichtung bzw. ein Ventilelement der Schalteinrichtung auch mit einer weiteren hydraulischen Kraft als Rückstellkraft beaufschlagt sein, sodass die hydraulische Kraft das oder die Ventilelemente in ihre Ruhelage zurückführt. Die hydraulische Kraft ist bevorzugt ebenfalls eine hydraulische Kraft, welche von dem Umwälzpumpenaggregat erzeugt wird. Aus der genannten ersten Schaltstellung kann die Schalteinrichtung dann durch Wahl der Drehzahl oder des Verlaufes einer Drehzahländerung bzw. eines Druckaufbaus in eine gewünschte zweite Schaltstellung bewegt werden oder in der ersten Schaltstellung verharren. Wenn mehr als zwei Schaltstellungen vorgesehen sind, kann die Schalteinrichtung auch so ausgebildet sein, dass ausgehend aus der ersten Schaltstellung durch Änderung des Druckes oder unterschiedliche Verläufe des Druckaufbaus die Schalteinrichtung bzw. ein Ventilelement der Schalteinrichtung in eine von mehreren möglichen weiteren Schaltstellungen bewegt werden kann.

Besonders bevorzugt ist eine Vorspannkraft, d. h. die Schwer-, Magnet-und/oder Federkraft einer von dem Fluiddruck auf die zweite Steuerfläche wirkenden Kraft zumindest teilweise entgegengesetzt gerichtet. Die auf die zweite Steuerfläche wirkende Kraft ist vorzugsweise eine von einem Fluiddruck an der Druckseite des Umwälzpumpenaggregates erzeugte Kraft. Die Schalteinrichtung kann beispielweise so ausgestaltet sein, dass bei geeignetem Druck oder Verlauf des Druckaufbaus die Kraft an der zweiten Steuerfläche so groß wird, dass sie eine entgegengerichtete Vorspannkraft, das heißt z. B. entgegengerichtete Schwer-, Magnet- oder Federkraft, überwindet und die Schalteinrichtung so in eine zweite Schaltstellung bewegt. Bevorzugt ist die Vorspannkraft in dieselbe Richtung gerichtet wie eine Kraft, welche an einer ersten Steuerfläche von dem Fluiddruck hervorgerufen wird. So kann die Schalteinrichtung so ausgebildet sein, dass, wenn an der ersten Steuerfläche ein ausreichend hoher Druck anliegt, dieser Druck eine Kraft erzeugt, welche gemeinsam mit der Vorspannkraft der Druckkraft an der zweiten Steuerfläche derart entgegen wirkt, dass es zu keiner Verlagerung bzw. Bewegung der Schalteinrichtung kommt. Ob eine solche Kraft an der ersten Steuerfläche anliegt oder nicht, kann beispielsweise von der Art des Verlaufes des Druckaufbaus abhängig sein, nämlich davon, ob der Druckaufbau schnell oder langsam erfolgt. Wenn der Druck sich z.B. in einem hydraulischen Kreis ausgehend von dem Umwälzpumpenaggregat verzögert zu der ersten Steuerfläche fortpflanzt, kann beispielsweise durch unterschiedlich schnellen Verlauf des Druckaufbaus ein Zustand erreicht werden, an welchem nur eine ausreichend große hydraulische Kraft an der zweiten Steuerfläche, nicht aber an der ersten Steuerfläche wirkt, um ein Umschalten der Schalteinrichtung zu bewirken. Ferner kann eine ausreichende hydraulische Kraft auch dadurch erzeugt werden, dass das Umwälzpumpenaggregat von dem Drehzahlsteller mit einer höheren Drehzahl betrieben wird, welche einen höheren Ausgangsdruck verursacht.

Gemäß einer besonders bevorzugten Ausführungsform der Erfindung weist die Schalteinrichtung ein Ventilelement auf, welches als beweglicher Hohlzylinder ausgebildet ist, wobei dessen erstes Axialende eine mit dem zweiten hydraulischen Kreis verbunden oder verbindbare Eintrittsöffnung bildet, der Hohlzylinder, vorzugsweise in seiner Umfangswandung, zumindest eine zweite Eintrittsöffnung aufweist, welche mit dem ersten hydraulischen Kreis verbunden oder verbindbar ist, und ein zweites Axialende des Hohlzylinders eine Austrittsöffnung bildet, welche mit einem Eingang des Umwälzpumpenaggregates verbunden ist. Das heißt bei dieser Ausgestaltung kann Fluid aus dem zweiten hydraulischen Kreis durch das erste Axialende des Hohlzylinders, durch den Hohlzylinder hindurch und aus dem zweiten Axialende des Hohlzylinders hinaus zu dem Umwälzpumpenaggregat strömen. Alternativ oder zusätzlich kann Fluid aus dem ersten hydraulischen Kreis z.B. über die Eintrittsöffnung in der Umfangswandung in das Innere des Hohlzylinders und aus dessen zweiten Axialende zu dem Eingang des Umwälzpumpenaggregates strömen. Alternativ kann die zweite Eintrittsöffnung zwischen dem zweiten Axialende des Hohlzylinders und einer gegenüberliegenden Wandung gebildet werden, wobei bei Anlage des zweiten Axialendes und der Wandung die zweite Eintrittsöffnung geschlossen ist. Durch axiale Bewegung des Hohlzylinders können wahlweise die erste Eintrittsöffnung am Axialende und die zweite Eintrittsöffnung unterschiedlich weit geschlossen oder geöffnet werden. Dazu wirken die Eintrittsöffnungen jeweils mit einem korrespondierenden Ventilsitz zusammen, welcher bei Bewegung des Hohlzylinders die Eintrittsöffnungen teilweise oder vollständig verschließt. Somit ist eine Änderung des Mischungsverhältnisses zwischen den beiden hydraulischen Kreisen oder, wenn eine der Eintrittsöffnungen vollständig geschlossen wird, ein Umschalten der Strömung zwischen den beiden hydraulischen Kreisen möglich. Der Hohlzylinder bildet somit ein Ventilelement eines die mechanische Schalteinrichtung darstellenden Ventils.

Bevorzugt ist das zweite Axialende des vorangehend beschriebenen Hohlzylinders mit einem Saugmund eines Laufrades des Umwälzpumpenaggregates in Verbindung. Besonders bevorzugt ist das zweite Axialende direkt mit dem Saugmund des Umwälzpumpenaggregates in Eingriff, umgreift beispielsweise den Saugmund von der Außenseite oder greift in den Innendurchmesser des Saugmundes des Laufrades ein. Alternativ können zwischen dem Hohlzylinder und dem Laufrad aber auch weitere hydraulische Verbindungselemente angeordnet sein. Wenn der Hohlzylinder direkt angrenzend an den Saugmund angeordnet wird, kann ein sehr kompakter Aufbau erreicht werden und die Schalteinrichtung kann sehr einfach direkt an dem Umwälzpumpenaggregat angeordnet oder mit diesen in eine gemeinsame Baueinheit integriert werden.

Weiter bevorzugt sind die erste und die zweite Steuerfläche, wie sie vorangehend beschrieben wurden, mit dem Hohlzylinder kraftübertragend verbunden. Besonders bevorzugt sind die erste und/oder die zweite Steuerfläche direkt an dem Hohlzylinder, insbesondere einstückig mit diesen, ausgebildet. Vorzugsweise wird zumindest eine Steuerfläche von einer axialen Stirnfläche des Hohlzylinders gebildet. So können die für die Betätigung bzw. Bewegung des Hohlzylinders erforderlichen Steuerflächen sehr platzsparend direkt an dem Hohlzylinder angeordnet werden, was ebenfalls einen kompakten Aufbau begünstigt.

Gemäß einer besonders bevorzugten Ausführungsform wird die zweite Steuerfläche von zumindest einem Flächenelement gebildet, welches im Druckbereich des Umwälzpumpenaggregates gelegen ist und vorzugsweise von einem Laufrad des Umwälzpumpenaggregates beabstandet ist. Ein solches Flächenelement kann beispielsweise in Form eines oder mehrerer Vorsprünge, welche sich von dem Hohlzylinder, insbesondere in axialer Richtung, wegerstrecken, gebildet sein. Die Beabstandung von dem Laufrad hat den Vorteil, dass ein konventionelles Laufrad Verwendung finden kann, wie es bei Umwälzpumpenaggregaten ohne die erfindungsgemäße Schalteinrichtung zum Einsatz kommt. Das Laufrad, dessen Saugmund und insbesondere die Abdichtung des Laufmundes können so in konventioneller Weise ausgebildet sein. Insbesondere ist bei dieser Ausgestaltung kein sich relativ zu dem Saugmund bewegendes Bauteil der Schalteinrichtung erforderlich, welches direkt gegen den Saugmund abgedichtet werden muss. Die Flächenelemente können beispielsweise an Vorsprüngen oder Stiften gelegen sein, welche insbesondere gedichtet durch eine oder mehrere Öffnungen in einer Trennwand zwischen Druck und Saugbereich in einem Pumpengehäuse des Umwälzpumpenaggregates hindurch geführt sind.

Es kann beispielsweise ein Druck im Druckbereich des Pumpenaggregates auf eine axiale Stirnfläche eines oder mehrerer Stifte bzw. Vorsprünge, welche sich ausgehend von dem Hohlzylinder in den Druckbereich hineinerstrecken, wirken.

Die Vorsprünge oder Stifte, an welchen die Flächenelemente gelegen sind, sind vorzugsweise gemeinsam mit dem Hohlzylinder in dessen axialer Richtung, das heißt in Richtung dessen Längsachse bewegbar. Bei einer solchen Bewegung verbleiben jedoch vorzugsweise die Flächenelemente im Druckbereich des Pumpenaggregates. So sorgen die Flächenelemente dafür, dass der Hohlzylinder in einer Richtung, das heißt in einer Axialrichtung von dem Fluiddruck an der Druckseite des Umwälzpumpenaggregates, das heißt an der Ausgangsseite des Laufrades beaufschlagt werden kann. Die Flächenelemente bilden so die oben beschriebene zweite Steuerfläche.

Anstatt die genannten Flächenelemente an zusätzlichen Vorsprüngen oder Stiften vorzusehen, kann das Flächenelement auch von Abschnitten des genannten zweiten Axialendes des Hohlzylinders gebildet sein, das heißt von einem Abschnitt der axialen Stirnfläche an dem Axialende des Hohlzylinders. Auch ist es möglich, dass die zweite Steuerfläche von der gesamten axialen Stirnfläche des Hohlzylinders an dessen zweiten Axialende gebildet wird. In diesem Fall würde dann der gesamte Hohlzylinder mit seinem zweiten Axialende in den Druckbereich des Pumpengehäuses eingreifen. So könnte der Hohlzylinder z.B. mit seinem zweiten Axialende direkt das Laufrad umgreifen bzw. den Saugmund des Laufrades umgreifen und eine Trennwand zwischen Saug- und Druckbereich des Pumpengehäuses kann dichtend am Außenumfang des Hohlzylinders anliegen. Das heißt der Hohlzylinder greift durch einen Ringspalt, welcher den Saugmund des Laufrades umgibt, in den Druckbereich des Pumpengehäuses ein.

Die erste Steuerfläche ist vorzugsweise in Form einer Schulter oder Auskragung am Innenumfang oder Außenumfang des Hohlzylinders ausgebildet und ist mit einem Bereich eines hydraulischen Kreises, welcher mit dem Umwälzpumpenaggregat verbunden ist, in Verbindung. Vorzugsweise ist diese erste Steuerfläche, wie beschrieben, an der Austrittsseite des hydraulischen Kreises, das heißt nahe der Saugseite des Umwälzpumpenaggregates, gelegen. Die erste Steuerfläche ist dabei bevorzugt entgegengesetzt zu der zweiten Steuerfläche gerichtet, so dass an beiden einander entgegengesetzt gerichteten Kräfte entstehen.

Der Hohlzylinder kann wie oben beschrieben zusätzlich mit einer Feder- und/oder Magnetkraft beaufschlagt sein. So kann beispielsweise eine Druckfeder auf den Hohlzylinder derart wirken, dass er durch die Druckfeder in Richtung seines zweiten Axialendes gedrückt wird.

Gemäß einer weiteren bevorzugten Ausführungsform der Erfindung ist das Ventilelement der mechanischen Schalteinrichtung als beweglicher Schieber ausgebildet, dessen in Bewegungsrichtung erste axiale Stirnseite eine erste Steuerfläche und dessen in Bewegungsrichtung zweite axiale Stirnseite eine zweite Steuerfläche bildet, welche jeweils mit dem Fluiddruck aus einem der hydraulische Kreise, einem Fluiddruck an der Saugseite des Umwälzpumpenaggregates oder einem Fluiddruck an der Druckseite des Umwälzpumpenaggregates beaufschlagt sind. Besonders bevorzugt kann es sich bei dem Schieber um einen in Richtung einer, insbesondere geraden, Bewegungsachse frei beweglichen Ventilkörper handeln. Die Steuerflächen des beweglichen Schiebers bilden die in Bewegungsrichtung vordere und hintere Fläche des Schiebers, so dass ein auf diese Steuerflächen wirkender Druck in der Bewegungsrichtung des Schiebers eine treibende Kraft erzeugen kann.

Vorzugsweise verschließt das Ventilelement, welches bevorzugt als der vorangehend beschriebene Schieber ausgebildet ist, in einer ersten Schaltstellung den ersten hydraulischen Kreis und in einer zweiten Schaltstellung den zweiten hydraulischen Kreis, wobei das Ventilelement die hydraulischen Kreise mit einer sich parallel zu der Bewegungsrichtung erstreckenden Fläche verschließt, welche vorzugsweise von zumindest einer Dichtung begrenzt ist. Die Dichtung ist vorzugsweise derart beweglich, dass sie anhängig von dem an der von der Dichtung begrenzten Fläche anliegenden Fluiddruck in dichtende Anlage tritt. Dadurch, dass der Verschluss der hydraulischen Kreise durch eine nicht in die Bewegungsrichtung des Ventilelementes gerichtete Fläche geschieht, wird erreicht, dass der in den hydraulischen Kreisen wirkende Fluiddruck nicht unmittelbar auf die Steuerflächen des Ventilelementes wirkt. Es ist vielmehr möglich, das beispielsweise zumindest eine der Steuerflächen lediglich über einen Bypass aus einem hydraulischen Kreis mit Druck beaufschlagt wird, wobei ein solcher Bypass beispielsweise über ein zusätzliches Ventil geöffnet oder geschlossen werden kann. Besonders bevorzugt kann solch ein Bypass durch einen Leckstrom gebildet sein, welcher am Ventilelement vorbeiströmt. Als Ventil zum Öffnen und Schließen dieses Leckstromes kann die beschriebene bewegliche Dichtung dienen, welche sich erst bei einem bestimmten Fluiddruck dichtend an eine gegenüberliegende Wandung, insbesondere die Wandung einer Führung des Ventilelementes anlegt.

Weiter bevorzugt ist zumindest eine der ersten und der zweiten Steuerflächen des Ventilelementes einem Druckraum zugewandt, an welchem ein Ventil gelegen ist, welches ausgebildet ist, eine Druckbeaufschlagung des Druckraumes mit einem Fluiddruck aus einem der hydraulischen Kreise, der Saugseite des Umwälzpumpenaggregates oder der Druckseite des Umwälzpumpenaggregates zu steuern, wobei das Ventil vorzugsweise druckabhängig öffnet. Auch diese Ausgestaltung findet besonders bevorzugt in Kombination mit dem vorangehend beschriebenen Schieber Verwendung. Das Ventil kann beispielsweise ein federvorgespanntes Rückschlagventil sein. Dabei ist das Rückschlagventil vorzugsweise zwischen der Saugseite des Umwälzpumpenaggregates und dem Druckraum angeordnet, so dass das Rückschlagventil bei einem ausreichend großen Sog an der Saugseite des Umwälzpumpenaggregates bzw. einer ausreichend großen Druckdifferenz über dem Ventil geöffnet wird. Auf diese Weise kann die Steuerfläche, welche diesem Druckraum zugewandt ist, druckentlastet werden oder mit einer von dem Sog hervorgerufenen Kraft beaufschlagt werden.

Gemäß einer weiteren bevorzugten Ausführungsform ist die Schalteinrichtung derart ausgebildet, dass zumindest eine der beiden Steuerflächen zur Bewegung des Ventilelementes mit einem Fluiddruck aus demjenigen hydraulischen Kreis beaufschlagt wird, welcher aktuell von dem Ventilelement zumindest teilweise verschlossen ist. Auch diese Ausgestaltung findet bevorzugt bei dem als Schieber ausgebildeten Ventilelement Verwendung. Wenn einer der hydraulischen Kreise im Wesentlichen verschlossen ist, baut sich in diesem der Druck auf, welcher an dem Abzweig- bzw. Knotenpunkt wirkt, an welchem sich die beiden hydraulischen Kreise trennen. Dabei wird davon ausgegangen, dass die Schalteinrichtung an der Saugseite des Umwälzpumpenaggregates und der genannte Knotenpunkt an der Druckseite gelegen ist. Wenn der hydraulische Kreis teilweise verschlossen ist, bedeutet dies, dass beispielsweise ein oben beschriebener Bypass oder Leckstrom vorhanden sein kann, um das Ventilelement in gewünschter Richtung anzutreiben. So wird nicht die Strömung bzw. der hydraulischen Druck in dem gerade geöffneten hydraulischen Kreis zur Bewegung des Ventilelementes genutzt, sondern ein Fluiddruck bzw. eine Fluidströmung aus dem gerade geschlossenen hydraulischen Kreis wird dazu genutzt, dass Ventilelement so zu bewegen, dass dieser Kreis geöffnet und der andere Kreis geschlossen wird.

Gemäß einer weiteren bevorzugten Ausführungsform ist die Schalteinrichtung derart ausgebildet, dass das Ventilelement zwischen zwei Schaltstellungen durch gezielte, von der Drehzahl bzw. dem Drehzahlverlauf des Umwälzpumpenaggregates abhängige Druckbeaufschlagung hin- und herbewegt werden kann. So ist stets ein direktes Umschalten von der einen Schaltstellung in die andere Schaltstellung allein durch Ansteuerung des Umwälzpumpenaggregates möglich.

In dem vorangehend beschriebenen Ausführungsbeispielen bildet die mechanische Schalteinrichtung ein Ventil mit vorzugsweise einem einzigen beweglichen Ventilelement.

Gemäß einer alternativen Ausführungsform der Erfindung kann die mechanische Schalteinrichtung zumindest ein erstes und ein zweites bewegliches Ventilelement aufweisen, von dem das erste Ventilelement in einem ersten hydraulischen Kreis und das zweite Ventilelement in einem zweiten hydraulischen Kreise angeordnet ist, wobei das erste und das zweite Ventilelement unterschiedliche dynamische Eigenschaften aufweisen. Zur Ausbildung der unterschiedlichen dynamischen Eigenschaften sind das erste und das zweite Ventilelement beispielsweise in ihrer Bewegung in Öffnungsrichtung unterschiedlich stark gedämpft oder verzögert reagierend ausgebildet und/oder weisen z. B. unterschiedlich stark in der Öffnungsrichtung entgegengesetzte Vorspannkräfte auf. Das erste und das zweite Ventilelement können in dem ersten und dem zweiten hydraulischen Kreis so angeordnet sein, dass sie an einer Abzweigstelle liegen. Das heißt an dem ersten und zweiten Ventilelement können der erste und der zweite hydraulische Kreis beispielsweise von einem gemeinsamen Zulauf abzweigen oder der erste und der zweite hydraulische Kreis können über das erste und zweite Ventilelement in einen sich anschließenden gemeinsamen Leitungsabschnitt einmünden. So können die beiden Ventilelemente dazu dienen, das Verhältnis der Strömungen durch den ersten und zweiten hydraulischen Kreis zu variieren oder ein vollständiges Umschalten des Strömungsweges zwischen dem ersten und dem zweiten hydraulischen Kreis zu bewirken, indem stets eines der Ventilelemente ein geschlossenen Schaltstellung und ein an das andere Ventilelement entsprechend in einer geöffneten Schaltstellung ist.

Wenn beide Ventilelemente an einer Abzweigung gelegen sind, ist der sich an die Ventilelemente anschließende gemeinsame Leitungsabschnitt, sei es stromaufwärts oder stromabwärts der Ventilelemente, bevorzugt mit dem zumindest einen Umwälzpumpenaggregat verbunden. Diese Ausgestaltung bewirkt, dass der von dem Umwälzpumpenaggregat erzeugten Fluiddruck über diesen gemeinsamen Leitungsabschnitt gleichermaßen auf beide Ventilelemente wirkt. Jedes der Ventilelement weist zumindest eine entsprechende Steuerfläche auf, auf welche dieser Fluiddruck wirkt, und welche eine Kraft auf das Ventilelement in Richtung dessen Bewegungsachse erzeugt, über welche eine Bewegung des Ventilelementes möglich ist. Es ist auch möglich, dass die Ventilelemente jeweils an ihrer Eintritts- und an ihrer Austrittsseite eine Steuerfläche aufweisen, so dass von beiden Seiten auf das Ventilelement ein Fluiddruck wirkt und eine Bewegung des Ventilelements durch eine resultierende Differenzkraft zwischen beiden Seiten des Ventilelementes hervorgerufen werden kann. Besonders bevorzugt sind die Ventilelemente ferner mit einer Vorspannkraft beaufschlagt. Diese Vorspannkraft kann beispielsweise von einer Magnet- und/oder Federkraft hervorgerufen werden, wie sie oben beschrieben wurde.

Um eine Reaktion der zwei Ventilelemente auf unterschiedliche Drücke oder unterschiedliche Verläufe des Druckaufbaus zu ermöglichen, weisen die beiden Ventilelemente vorzugsweise unterschiedliche dynamische Eigenschaften, d. h. Bewegungseigenschaften auf So können die Ventilelemente beispielsweise in ihrer Bewegungsrichtung zwischen den Schaltstellungen unterschiedlich große Hübe aufweisen, unterschiedlich stark gedämpft sein und/oder unterschiedlich starke dieser Bewegungsrichtung entgegengesetzte Trägheits-, Reibungs- und/oder Vorspannkräfte aufweisen. Das heißt bei gleichem, auf die Ventile wirkenden Fluiddruck, wird sich eines der Ventilelemente langsamer bewegen oder seine Bewegung später beginnen als das andere Ventilelement. Gleichzeitig oder alternativ können die Ventilelemente unterschiedlich stark vorgespannt sein, so dass unterschiedlich starke Kräfte, das heißt unterschiedlich starke Fluiddrücke zum Bewegen der Ventilelemente erforderlich sind. Besonders bevorzugt sind die Ventilelemente durch die Vorspannkraft derart vorgespannt, dass sie durch die Vorspannkraft in einer geschlossenen Stellung gehalten werden. In dieser geschlossenen Stellung sind die Ventilelemente mit einem korrespondierenden Ventilsitz in Anlage oder zu dem Ventilsitz minimal beabstandet. Das heißt in der geschlossenen Stellung kann, wie weiter unten beschrieben wird, ein minimaler Durchgang durch das Ventil bestehen bleiben, welcher sich beim Öffnen des Ventils vergrößert. Allerdings ist auch eine umgekehrte Ausgestaltung möglich, in welcher die Ventilelemente durch eine Vorspannkraft in einer geöffneten Stellung gehalten werden und durch den hydraulischen Druck in eine geschlossene Stellung bewegt werden.

Bevorzugt wirkt der von dem Umwälzpumpenaggregat erzeugte Fluiddruck auf eine Steuerfläche des Ventilelementes, so dass an der Steuerfläche eine Kraft entsteht, welche einer Vorspann- bzw. Schließkraft des Ventilelementes entgegen wirkt und das Ventilelement gegen die Vorspannkraft in eine zweite Schaltstellung, d. h. je nach Ausführungsform in eine geöffnete oder eine geschlossene Schaltstellung bewegen kann. Die Vorspannkräfte sind vorzugsweise so gerichtet und dimensioniert, dass sie die Ventilelemente in einer ersten, z. B. der geschlossenen Schaltstellung halten, wenn das Umwälzpumpenaggregat außer Betrieb ist oder sich, wie oben beschrieben, mit einer Basisdrehzahl bewegt, bei welcher kein ausreichend hoher Fluiddruck zum Öffnen der Ventilelemente, das heißt zum Bewegen in deren zweiten Schaltstellung erzeugt wird.

Besonders bevorzugt sind das erste und das zweite Ventilelement derart gekoppelt, dass sich stets nur ein Ventilelement in seiner geöffneten Schaltstellung oder stets nur ein Ventilelement in seiner geschlossenen Schaltstellung befinden kann. Das heißt das andere Ventilelement verbleibt dann jeweils in der anderen möglichen Schaltstellung. Wenn eines der Ventilelemente sich zuerst in seine zweite, z. B. geöffnete Schaltstellung bewegt, bewirkt es über die Kopplung eine Blockade des jeweils anderen Ventilelementes, so dass dieses sich nun nicht mehr in die zweite geöffnete Schaltstellung bewegen kann. Bei umgekehrter Ausgestaltung, bei welcher sich die Ventilelemente aus einer ersten, geöffneten Schaltstellung in eine zweite, geschlossene Schaltstellung bewegen, bewirkt die Kopplung dann, dass sich nur eines der Ventilelemente in die geschlossene Schaltstellung bewegen kann, während das andere Ventilelement dann so blockiert wird, dass es in seiner geöffneten Schaltstellung verbleibt. So kann ein Umschalten der Strömungswege zwischen dem ersten und dem zweiten hydraulischen Kreis realisiert werden. In Kombination mit den oben beschriebenen unterschiedlichen dynamischen Eigenschaft der Ventilelemente kann über Steuerung des Verlaufes des Druckaufbaus bei Drehzahländerung des Umwälzpumpenaggregates gezielt eines der beiden Ventilelemente zuerst aus seiner ersten in seine zweite Schaltstellung bewegt werden, da eines der Ventilelemente schneller auf den Druckaufbau reagieren wird.

So kann beispielweise eines der Ventilelemente mit einer stärkeren Vorspann- bzw. Schließkraft, welche beispielsweise von einem Federelement erzeugt wird, beaufschlagt sein als das andere Ventilelement. Das Ventilelement welches mit der schwächeren Vorspannkraft beaufschlagt ist, ist vorzugsweise gleichzeitig in seiner Bewegung gedämpft bzw. verzögert, so dass es sich langsamer bewegt. Bei dieser Ausgestaltung wird bei einem schnellen Druckaufbau über das Umwälzpumpenaggregat erreicht, dass die hohe Vorspannkraft an dem ersten Ventilelement durch einen entsprechend hohen Fluiddruck überwunden wird, bevor sich das zweite Ventilelement in seine gzweite Stellung bewegt hat. Dies erfolgt, weil die Bewegung des zweiten Ventilelementes, welches schon bei einem geringeren Druck aufgrund der geringeren Vorspannkraft einsetzt, derart verzögert bzw. langsam erfolgt, dass die zweite Schaltstellung, in welcher das erste Ventilelement blockiert wird, langsamer erreicht wird als der Fluiddruck, welcher zum Bewegen des ersten Ventilelementes erforderlich ist. Wenn das erste Ventilelement in seiner zweiten, d. h. je nach Ausführungsform geöffneten oder geschlossenen, Schaltstellung ist, blockiert es dann das zweite Ventilelement, so dass dieses sich nicht mehr vollständig oder gar nicht in seine entsprechende zweite Schaltstellung bewegen kann. Wenn nun umgekehrt der Druckverlauf so gewählt wird, dass ein langsamer Druckanstieg erfolgt, oder zunächst nach Erreichen des Fluiddruckes zum Überwinden der geringeren Vorspannkraft des zweiten Ventilelementes eine weitere Drehzahlerhöhung ausgesetzt bzw. verzögert wird, kann sich das zweite Ventilelement langsam in seine zweite Schaltstellung bewegen und diese erreichen, bevor der Fluiddruck so groß ist, dass die Vorspannkraft des ersten Ventilelementes überwunden wird. Wenn dann dieser höhere Fluiddruck erreicht wird, kann sich das erste Ventilelement nicht mehr in seine zweite Schaltstellung bewegen, da es über die Kopplung mit dem ersten Ventilelement entsprechend blockiert wird.

Während bei dem ersten beschriebenen Ausführungsbeispiel mit nur einem einzigen Ventilelement eine Verzögerung des Druckaufbaus an einer Steuerfläche bevorzugt über den sich anschließenden hydraulischen Kreis selber erreicht wird, ist diese Verzögerung bei der beschriebenen zweiten Ausführungsform mit zumindest zwei Ventilelementen bevorzugt von der Ausgestaltung des sich anschließenden hydraulischen Kreises unabhängig, da die Verlangsamung bzw. Verzögerung der Bewegung eines der Ventilelemente durch die Gestaltung des Ventils bzw. Ventilelementes selber hervorgerufen werden kann.

Die Verzögerung kann beispielsweise durch ein Dämpfungselement an dem Ventilelement erfolgen oder aber auch durch die Konstruktion des Ventiles selber hervorgerufen werden. So kann das Ventil beispielsweise so ausgebildet werden, dass an dem Ventilelement hydraulische Kräfte wirken, welche zu einer Verzögerung der Bewegung führen. So kann z. B. zwischen dem Ventilelement und einem gegenüberliegenden Ventilsitz auch im geschlossenen Zustand ein Spalt verbleiben, durch welche eine Spaltströmung fließt, welche hydraulische Kräfte verursacht, die der Öffnungskraft entgegengesetzt wirken und so zu einer Verzögerung der Öffnungsbewegung führen.

Das erfindungsgemäße hydraulische System ist besonders bevorzugt als hydraulisches Heizungs- und/oder Kühlsystem ausgebildet, wobei vorzugsweise einer der zumindest zwei hydraulischen Kreise durch einen Sekundärwärmetauscher zum Temperieren von Brauchwasser und einer der zumindest zwei hydraulischen Kreise durch zumindest ein zu temperierendes Objekt verläuft. Das zu temperierende Objekt kann beispielsweise ein Gebäude sein und der zweite hydraulische Kreis verläuft durch einen oder mehrere Heizkörper oder Fußbodenheizungskreise des Gebäudes. Stromaufwärts beider hydraulischer Kreise kann ein Primärwärmetauscher gelegen sein, durch welchen das Fluid zunächst gefördert wird, um es zu temperieren, das heißt aufzuheizen oder zu kühlen. Wenn Brauchwasser erwärmt oder gekühlt werden soll, wird die beschriebene mechanische Schalteinrichtung vorzugsweise so geschaltet, dass das Fluid von dem Umwälzpumpenaggregat durch denjenigen hydraulischen Kreis gefördert wird, welcher durch den beschriebenen Sekundärwärmetauscher verläuft. Wird eine Temperierung von Brauchwasser nicht gewünscht, wird die mechanische Schalteinrichtung in ihrer andere Schaltstellung gebracht, in welcher das Fluid von dem Umwälzpumpenaggregat durch denjenigen hydraulischen Kreis gefördert wird, welcher durch das zu temperierende Objekt verläuft.

Eine solche Ausgestaltung eignet sich insbesondere bei Kompaktheizungsanlagen, wie sie für Wohnungen und kleinere Gebäude verwendet werden. Bei diesen Anlagen ist auch von Vorteil, dass durch die erfindungsgemäße Schalteinrichtung, welche ausschließlich durch Variation des Drehzahlverlaufes des Pumpenaggregates betätigt wird, auf einen zusätzlichen Antrieb für die Schalteinrichtung verzichtet werden kann, wodurch sich die Herstellungskosten für eine derartige Heizungsanlage verringern und das Ausfallrisiko reduziert wird.

Weiter bevorzugt sind das Umwälzpumpenaggregat und die zumindest eine Schalteinrichtung in einer gemeinsamen Baueinheit, insbesondere einer integrierten hydraulischen Baueinheit für eine Kompaktheizungsanlage angeordnet. Gegenstand dieser Anmeldung ist daher auch eine solche Baueinheit, insbesondere eine Baueinheit für eine Kompaktheizungsanlage, welche ein Umwälzpumpenaggregat und die zumindest eine Schalteinrichtung enthält. Dabei weisen das Umwälzpumpenaggregat und die Schalteinrichtung vorzugsweise zumindest ein gemeinsames Gehäuseteil auf. Es ist zu verstehen, dass diese Baueinheit zusammen mit einem oder mehreren der vorangehend beschriebenen Merkmale, insbesondere mit Merkmalen der Schalteinrichtung, verwirklicht werden kann.

Die Anordnung in einer Baueinheit bedeutet, dass die Schalteinrichtung und das Umwälzpumpenaggregat in baulicher Nähe zueinander angeordnet sind. Die integrierte hydraulische Baueinheit für eine Kompaktheizungsanlage enthält üblicherweise das Umwälzpumpenaggregat sowie die erforderlichen Ventile und Sensoren und ist weiter bevorzugt direkt mit einem Sekundärwärmetauscher verbunden. Sie muss somit in einer Heizungsanlage über externe Verrohrungen lediglich mit einem Primärwärmetauscher, einen Brauchwasserzulauf, einem Brauchwasserablauf und den Anschlüssen eines externen Heizungskreises verbunden werden. Sie bildet somit den zentralen hydraulischen Bestandteil der Heizungsanlage. Die integrierte hydraulische Baueinheit ist vorzugsweise aus einem oder mehreren Bauteilen gebildet, in denen die erforderlichen Strömungswege zwischen der Schalteinrichtung, dem Umwälzpumpenaggregat und dem genannten Sekundärwärmetauscher gelegen sind. Vorzugsweise sind die Bauteile der integrierten hydraulischen Baueinheit als Spritzgussteile aus Kunststoff gefertigt.

Besonders bevorzugt liegt die Schalteinrichtung direkt an dem Umwälzpumpenaggregat und ist vorzugsweise in ein Pumpengehäuse des Umwälzpumpenaggregates integriert. So kann die Schalteinrichtung beispielsweise im Saugraum des Pumpengehäuses, vorzugsweise hinter oder direkt angrenzend an einer Trennwand, welche den Saugraum vom Druckraum des Pumpengehäuses trennt, gelegen sein. So wird ein besonders kompakter Aufbau erreicht. Alternativ kann die Schalteinrichtung auch an der Druckseite in das Pumpengehäuse integriert sein. Die Schalteinrichtung weist vorzugsweise drei hydraulische Anschlüsse auf, wobei ein erster hydraulischer Anschluss direkt mit der Saugseite oder der Druckseite des Umwälzpumpenaggregates verbunden ist, ein zweiter hydraulischer Anschluss mit einem durch einen Sekundärwärmetauscher verlaufenden hydraulischen Kreis verbunden ist und ein dritter Anschluss mit einem hydraulischen Kreis verbunden ist, welcher durch ein zu temperierendes Objekt verläuft. Insbesondere in einer integrierten hydraulischen Baueinheit sind die Anschlüsse dabei vorzugsweise so gelegen, dass der zweite hydraulische Anschluss gewinkelt zu dem dritten hydraulischen Anschluss, insbesondere rechtwinklig angeordnet ist. Der dritte hydraulische Anschluss erstreckt sich dabei weiter bevorzugt in der Einbaulage der Baueinheit vertikal nach unten, während der zweite hydraulische Anschluss sich horizontal erstreckt. Dies ist vorteilhaft, da ein Sekundärwärmetauscher, welcher beispielsweise als Plattenwärmetauscher ausgebildet sein kann, in Heizungsanlagen in der Regel an der Rückseite der hydraulischen Baueinheit gelegen ist, wäh-rend sich die externen Anschlüsse zur Anbindung des hydraulischen Kreises, welcher zu einem zu temperierendes Objekt verläuft, sowie die weiteren externen Anschlüsse, beispielsweise Brauchwasserzulauf und Brauchwasserablauf, in der Regel vertikal nach unten erstrecken. So können die Anschlüsse der Schalteinrichtung direkt mit den erforderlichen Anschlüssen der hydraulischen Baueinheit verbunden sein oder diese bilden. Die gewinkelte Anordnung der Anschlüsse begünstigt darüber hinaus die gewinkelte Anordnung der an den Anschlüssen gelegenen Ventilelemente in der oben beschriebenen Weise, durch welche die Kopplung bzw. gegenseitige Bewegungsblockade erreicht werden kann.

Ferner ist Gegenstand der Offenbarung ein Verfahren zum Betrieb eines hydraulischen Kreislaufsystems mit zumindest einem Umwälzpumpenaggregat und zumindest einer hydraulisch mit dem Umwälzpumpenaggregat verbundenen mechanischen Schalteinrichtung, welche in zumindest zwei Schaltstellungen bewegbar ist, wobei eine Bewegung der Schalteinrichtung zwischen einer ersten und einer zweiten Schaltstellung durch eine Drehzahlanpassung des Umwälzpumpenaggregates erfolgt, durch welche zumindest eine auf die Schalteinrichtung wirkende und eine Bewegung der Schalteinrichtung verursachende hydraulische Kraft erzeugt wird. Die Drehzahlanpassung erfolgt, wie oben beschrieben, vorzugsweise über einen geeigneten Drehzahlsteller. Durch unterschiedliche Drehzahlen können im hydraulischen System, wie oben beschrieben, unterschiedliche hydraulische Drücke erzeugt werden, welche zur Bewegung der Schalteinrichtung genutzt werden können. Die Verwendung der Drehzahlanpassung des Umwälzpumpenaggregates zum Bewegen der Schalteinrichtung hat den Vorteil, dass für die Schalteinrichtung auf einen separaten Antrieb verzichtet werden kann und vielmehr die zur Steuerung des Umwälzpumpenaggregates ohnehin vorhandenen Komponenten zusätzlich dazu genutzt werden können, ein Schalten bzw. eine Bewegung der Schalteinrichtung zu verursachen.

Erfindungsgemäß erfolgt eine Bewegung der Schalteinrichtung zwischen der ersten und der zweiten Schaltstellung in Abhängigkeit des Verlaufs eines Druckaufbaus, welcher durch das Umwälzpumpenaggregat erfolgt. Unterschiedliche Drücke können durch unterschiedliche Drehzahlen des Umwälzpumpenaggregates erzeugt werden. Ein unterschiedlicher Verlauf des Druckaufbaus wird durch den unterschiedlichen Verlauf einer Drehzahländerung des Umwälzpumpenaggregates hervorgerufen, insbesondere bei einer Drehzahlerhöhung. Bezüglich weiterer Details des Verfahrens wird auf die vorangehende Beschreibung der Vorrichtung verwiesen. Die sich aus den oben beschriebenen Vorrichtungsmerkmalen ergebenden Funktionen bzw. Verfahrensabläufe stellen gleichzeitig bevorzugte Merkmale des erfindungsgemäßen Verfahrens dar.

Bei einem ersten Verlauf des Druckaufbaus wird die Schalteinrichtung in eine erste Schaltstellung und bei einem zweiten von dem ersten Verlauf abweichenden Druckaufbau wird die Schalteinrichtung in eine zweite Schaltstellung bewegt. Insbesondere erfolgt dabei, wenn die Schalteinrichtung als Ventil ausgebildet ist, eine Bewegung zumindest eines Ventilelementes zwischen einer ersten und einer zweiten Schaltstellung. Wie oben beschrieben kann eine Bewegung beispielsweise durch einen schnelleren Druckaufbau hervorgerufen werden, während bei einem langsameren Druckaufbau die Schalteinrichtung bzw. deren Ventilelement in einer ersten Schaltstellung verbleibt.

Nachfolgend wird die Erfindung beispielhaft anhand der beigefügten Figuren beschrieben. In diesen zeigt:
- Fig. 1: schematisch ein hydraulisches System gemäß der Erfindung,
- Fig. 2: eine Schnittansicht eines Umwälzpumpenaggregates mit einer integrierten Schalteinrichtung gemäß einer ersten Ausführungsform der Erfindung,
- Fig. 3: die Schalteinrichtung gemäß Fig. 2 in einer zweiten Schaltstellung,
- Fig. 4: die Kombination eines Umwälzpumpenaggregates mit einer Schalteinrichtung gemäß einer zweiten Ausführungsform der Erfindung in einer Schnittansicht,
- Fig. 5: die Schalteinrichtung gemäß Fig. 4 in einer zweiten Schaltstellung,
- Fig. 6: eine Schalteinrichtung für ein hydraulisches System gemäß der Erfindung gemäß einer dritten Ausführungsform in einer Schnittansicht,
- Fig. 7: die Schalteinrichtung gemäß Fig. 6 in einer ersten Schaltstellung,
- Fig. 8: die Schalteinrichtung gemäß Fig. 6 in einer zweiten Schaltstellung,
- Fig. 9: eine Schalteinrichtung für ein hydraulisches System gemäß der Erfindung gemäß einer vierten Ausführungsform in einer Schnittansicht,
- Fig. 10: die Schalteinrichtung gemäß Fig. 9 in einer ersten Schaltstellung,
- Fig. 11: die Schalteinrichtung gemäß Fig. 9 in einer zweiten Schaltstellung,
- Fig. 12: eine Schnittansicht eines Pumpenaggregates mit einer integrierten Schalteinrichtung gemäß einer fünften Ausführungsform der Erfindung,
- Fig. 13: eine Explosionsansicht eines Umwälzpumpenaggregates mit einer integrierten Schalteinrichtung gemäß einer sechsten Ausführungsform der Erfindung,
- Fig. 14: eine Schnittansicht des Pumpengehäuses gemäß Fig. 13,
- Fig. 15: eine Schnittansicht eines Ventils mit Verzögerungseinrichtung,
- Fig. 16: eine Schnittansicht eines Ventilblockes mit dem Ventil gemäß Fig. 15 in einer ersten Schaltstellung,
- Fig. 17: den Ventilblock gemäß Fig. 16 in einer zweiten Schaltstellung,
- Fig. 18: schematisch die zwei unterschiedlichen Federkennlinien zweier Ventile gemäß Fig. 6 - 12 sowie 16 und 17,
- Fig. 19: eine alternative Ausgestaltung zu der Ausgestaltung gemäß Fig. 14,
- Fig. 20: eine Schnittansicht eines Umwälzpumpenaggregates mit einer integrierten hydraulisch betätigten Schalteinrichtung,
- Fig. 21: eine perspektivische Explosionsansicht des Pumpengehäuses des Umwälzpumpenaggregates gemäß Fig. 20,
- Fig. 22: eine perspektivische Explosionsansicht des Pumpengehäuses gemäß Fig. 21 von der Rückseite her gesehen,
- Fig. 23: eine Schnittansicht der Schalteinrichtung gemäß Fig. 20 in einer ersten Schaltstellung,
- Fig. 24: eine Ansicht gemäß Fig. 23, bei welcher sich die Schalteinrichtung in einer zweiten Schaltstellung befindet, und
- Fig. 25: eine Schnittansicht einer Variante der anhand von Fig. 20 - 24 beschriebenen Schalteinrichtung.

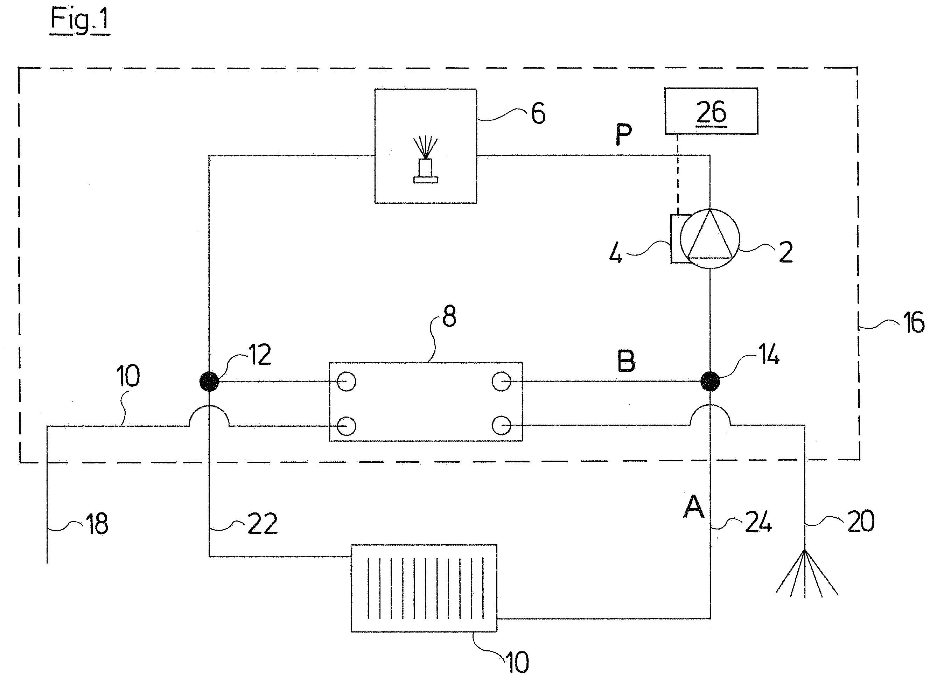

Fig. 1 zeigt eine Heizungsanlage als ein Beispiel für ein hydraulisches System gemäß der Erfindung. Diese Heizungsanlage verwendet einen flüssigen Wärmeträger, insbesondere Wasser, welcher im Kreislauf durch das hydraulische System gefördert wird. Das hydraulische System weist dazu ein Umwälzpumpenaggregat 2 auf. Das Umwälzpumpenaggregat kann in herkömmlicher Weise ausgestaltet sein, das heißt zumindest ein Laufrad aufweisen, welches von einem elektrischen Antriebsmotor angetrieben wird, welcher vorzugsweise als Spaltrohrmotor, das heißt als nasslaufender elektrischer Antriebsmotor ausgebildet ist. Weiter bevorzugt ist direkt an dem Umwälzpumpenaggregat oder in das Umwälzpumpenaggregat integriert eine elektronische Steuerung angeordnet, mittels welcher das Pumpenaggregat in seiner Drehzahl regelbar ist. Die elektronische Steuerung kann dazu insbesondere einen Frequenzumrichter aufweisen. Besonders bevorzugt ist die elektronische Steuerung in einem Elektronikgehäuse bzw. Klemmenkasten 4 angeordnet, welches Teil des Umwälzpumpenaggregates 2 bildet, das heißt insbesondere direkt am Motor- oder Statorgehäuse angeordnet ist.

Das hydraulische System weist ferner einen Primärwärmetauscher 6 auf, welcher stromabwärts des Umwälzpumpenaggregates 2 angeordnet ist. Hier ist der Primärwärmetauscher 6 als Heizkessel gezeigt. Es ist jedoch zu verstehen, dass der Primärwärmetauscher 6 beispielsweise auch ein Kühlaggregat oder eine andere Wärme- oder Kältequelle sein kann. Ferner weist das hydraulische System einen Sekundärwärmetauscher 8 auf, welcher zur Temperierung (hier zur Erwärmung) von Brauchwasser dient. Der Sekundärwärmetauscher 8 weist dazu zwei Strömungswege auf, wobei durch einen ersten Strömungsweg der durch das Umwälzpumpenaggregat 2 und den Primärwärmetauscher 6 verlaufende Heizkreis verläuft und durch einen zweiten Strömungsweg eine Brauchwasserleitung 10 für das zu erwärmende Brauchwasser. Dieser Strömungsweg des Heizkreises durch den Sekundärwärmetauscher 8 bildet einen zweiten hydraulischen Kreis B, während ein erster hydraulischer Kreis A als Raumheizungskreis durch einen oder mehrere Heizkörper 10 eines zu heizenden bzw. zu temperierenden Gebäudes, führt. Es ist zu verstehen, dass als Heizkörper 10 auch andere geeignete Wärmetauchscher, beispielsweise auch ein oder mehrere Kreise einer Fußbodenheizung Verwendung finden könnten. Der erste hydraulische Kreis A und der zweite hydraulische Kreis B bilden über das Umwälzpumpenaggregat 2 und den Primärwärmetauscher 6 jeweils geschlossene hydraulische Kreise, in denen der Wärmeträger umgewälzt wird.

Eingangsseitig zweigen die hydraulischen Kreise A und B an einem Abzweigpunkt 12 voneinander ab und sind ausgangsseitig an dem zweiten Abzweigpunkt 14 wieder miteinander verbunden. Um die von dem Umwälzpumpenaggregat 2 erzeugte Strömung des Wärmeträgers durch den hydraulischen Kreis ausgangsseitig des Primärwärmetauschers 6 wahlweise durch den ersten hydraulischen Kreis A oder den zweiten hydraulischen Kreis B zu leiten, wird an dem Abzweigpunkt 12 oder dem Abzweigpunkt 14 eine Schalteinrichtung in Form eines Umschaltventils angeordnet, welches wahlweise einen der Strömungswege durch einen der hydraulischen Kreise A und B öffnet und den Strömungsweg durch den jeweils anderen hydraulischen Kreis verschließt.

Der in Fig. 1 gestrichelt umrandete Teil des hydraulischen Systems kann in eine Heizungsanlage vorzugsweise in eine Kompaktheizungsanlage 16 integriert sein, wobei alle Bauteile bis auf den Primärwärmetauscher 6 und den Sekundärwärmetauscher 8 in einer Baueinheit wie einem hydraulischen Block integriert sein können. Eine solche Heizungsanlage 16 weist dann im Wesentlichen vier hydraulische Anschlüsse auf, nämlich einmal einen Brauchwassereingang 18 und einen Brauchwasserausgang 20 sowie für den ersten hydraulischen Kreis A einen Vorlaufanschluss 22 und ein Rücklaufanschluss 24. Übe diese vier hydraulischen Anschlüsse 18, 20, 22 und 24 wird die Heizungsanlage 16 in bekannter Weise mit externen Verrohrungen verbunden.

In bekannten Heizungsanlagen 16 ist an dem Abzweigpunkt 12 oder dem Abzweigpunkt 14 ein Umschaltventil angeordnet, welches elektrisch angetrieben wird, um angesteuert von einer Steuereinrichtung, wenn erwärmtes Brauchwasser gefördert wird, den Wärmeträgerstrom durch den Sekundärwärmetauscher 8 zu leiten und dann, wenn Wärme im Raumheizungskreis, das heißt am Heizkörper 10 verlangt wird, den Wärmeträgerstrom durch den ersten hydraulischen Keris A und damit durch den oder die Heizkörper 10 zu leiten. Erfindungsgemäß ist nun vorgesehen, auf einen solchen separaten elektrischen Antrieb einer Umschalteinrichtung bzw. eines Umschaltventils zu verzichten und das Umschalten allein durch geeignete Ansteuerung des Umwälzpumpenaggregates 2 zu bewirken. Dazu ist eine Steuereinrichtung 26 vorgesehen, welche beispielsweise eine zentrale Steuereinrichtung 26 sein kann, welche auch den Primärwärmetauscher 6 in Form eines Brenners steuert und über zumindest einen geeigneten Sensor den Brauchwasserbedarf erfasst. Die Steuereinrichtung 26 kann als separates Bauteil ausgebildet sein oder beispielsweise auch mit der Steuereinrichtung des Umwälzpumpenaggregates 2 zu einer Steuereinrichtung integriert sein, insbesondere auch vollständig in dem Elektronikgehäuse 4 des Umwälzpumpenaggregates 2 angeordnet sein. Die Steuereinrichtung 26 gibt der Steuerung des Umwälzpumpenaggregates 2 ein Signal, ob eine Brauchwassererwärmung oder eine Versorgung des Raumheizungskreises mit dem Wärmeträger gewünscht ist. Die elektronische Steuerung des Umwälzpumpenaggregates 2, welche einen Drehzahlsteller bildet, steuert dann das Umwälzpumpenaggregat 2 so, dass über eine mechanische Schalteinrichtung in dem Abzweigpunkt 12 oder dem Abzweigpunkt 14 die Strömung wahlweise durch einen der hydraulischen Kreise A und/oder B gelenkt wird. Dabei ist die mechanische Schalteinrichtung allein hydraulisch mit dem Umwälzpumpenaggregat 2 über das Fluid, das heißt den Wärmeträger, welcher von dem Umwälzpumpenaggregat 2 gefördert wird, gekoppelt.

Beispiele für derartige Schalteinrichtungen werden nachfolgend beschrieben.

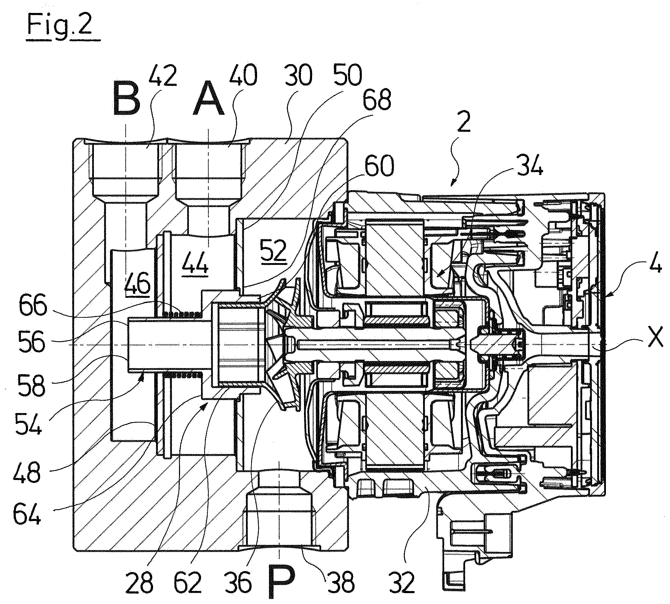

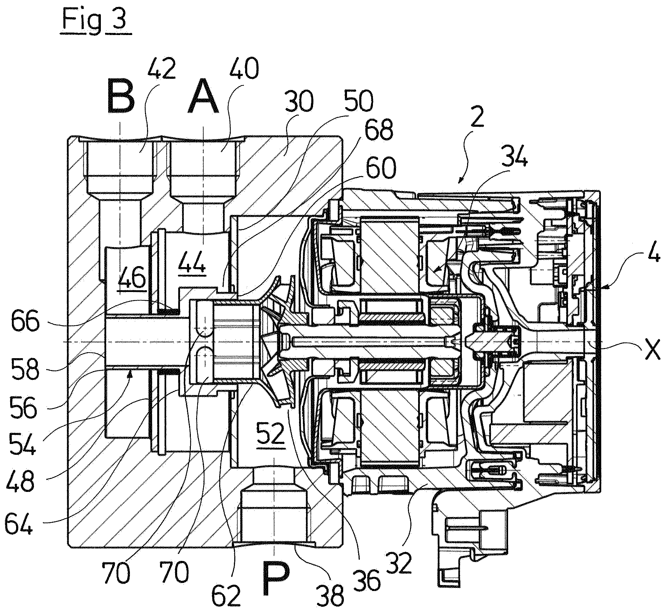

Fig. 2 und 3 zeigen ein erstes Ausführungsbeispiel, bei welchem die Schalteinrichtung 28 gemeinsam mit dem Abzweigpunkt 14 in ein Pumpengehäuse 30 des Umwälzpumpenaggregates 2 integriert ist. Mit dem Pumpengehäuse 30 ist ein Motorgehäuse 32 verbunden, in welchem ein in bekannter Weise ausgestalteter elektrischer Antriebsmotor 34 in Form eines Spaltrohrmotors angeordnet ist. An dem Motorgehäuse 32 axialseitig ist ein Klemmenkasten 4 angeordnet. Der elektrische Antriebsmotor 34 treibt in bekannter Weise über eine Welle ein Laufrad 36 an, welches in dem Pumpengehäuse 30 rotiert. Das Pumpengehäuse 30 weist in diesem Beispiel drei Anschlüsse, nämlich einen druckseitigen Anschluss 38 zur Anbindung des druckseitigen gemeinsamen Zweiges P der hydraulischen Kreise, welcher durch den Primärwärmetaucher 6 verläuft, sowie zwei saugseitige Anschlüsse 40 und 42 auf. Der Anschluss 40 ist mit dem ausgangsseitigen Ende des ersten hydraulischen Kreises A und der Anschluss 42 mit dem Ausgang des zweiten hydraulischen Kreises B verbunden. Die Anschlüsse 40 und 42 münden jeweils in einer Kammer 44 und 46 im Inneren des Pumpengehäuses 30. Diese saugseitigen Kammern 44 und 46 sind durch eine Trennwand 48 voneinander getrennt. Die saugseitige Kammer 44 ist darüber hinaus an ihrer anderen Seite durch eine weitere Trennwand 50 von dem Druckraum 52 im Inneren des Pumpengehäuses 30 verbunden. In den Druckraum 52 münden die umfangsseitigen Austrittsöffnungen des Laufrades 36. Ferner ist der Druckraum 52 mit dem druckseitigen Anschluss 38 verbunden.

Die Schalteinrichtung zum Umschalten zwischen den hydraulischen Kreisen A und B wird durch ein hohlzylindrisches Ventilelement 54 gebildet. Der Hohlzylinder des Ventilelementes 54 erstreckt sich mit einem ersten Axialende 56 in die saugseitige Kammer 46 hinein. Dazu erstreckt sich der Zylinder durch eine Öffnung in der Trennwand 48 hindurch, wobei der Innenumfang der Öffnung vorzugsweise am Außenumfang des Zylinders im Wesentlichen dichtend zur Anlage kommt. Fig. 2 zeigt eine erste Schaltstellung des Ventilelementes 54, in welcher das erste Axialende 56 von dem gegenüberliegenden Boden 58 der Kammer 46 beabstandet ist. Die Öffnung am ersten Axialende 56 des Ventilelementes 54 ist in dieser Position geöffnet, so dass eine Verbindung zu dem zweiten hydraulischen Kreis B hergestellt ist. Das zweite Axialende 60 des holzylindrischen Ventilelementes 54 erstreckt sich in den Druckraum 52 hinein und umschließt den Saugmund 62 des Laufrades 36. Der zylindrische Saugmund 62 ist dabei in axialer Richtung x ausreichend lang bzw. verlängert ausgebildet, so dass das hohlzylindrische Ventilelement 54 auf dem Außenumfang des Saugmundes 62 in axialer Richtung x verschiebbar ist. Im Inneren der saugseitigen Kammer 44 weist das Ventilelement 64 eine radial nach außen gerichtete Auskragung bzw. Schulter 64 auf, welche eine Ringfläche bildet und dem zweiten Axialende 60 abgewandt ist. Zwischen dieser Schulter 64 und der Trennwand 48 ist darüber hinaus eine Druckfeder 66 angeordnet, welche das Ventilelement 54 in seine erste Schalstellung drückt, welche in Fig. 2 gezeigt ist. In dieser ersten Schaltstellung ist die Öffnung am ersten Axialende 56 wie beschrieben geöffnet. In dieser ersten Schaltstellung liegt das Ventilelement 54 in seiner am weitesten dem Laufrad 36 zugewandten Position. Die Bewegung in Richtung des Laufrades wird durch eine Stufe 68 am Außenumfang des Ventilelementes 54 begrenzt, welche an der Trennwand 50 zur Anlage kommt. Das Ventilelement 54 erstreckt sich mit seinem an der Schulter 64 im Außendurchmesser erweiterten Bereich durch eine Öffnung in der Trennwand 50 hindurch, in die Drucckammer 52 hinein, wobei der Innenumfang dieser Öffnung in der Trennwand 50 am Außenumfang des Ventilelementes 54 im Wesentlichen dichtend anliegt. Dabei ist das Ventilelement 54 jedoch in den Öffnungen in den Trennwänden 48 und 50 in axialer Richtung x bewegbar.

Die in Fig. 2 gezeigte Schaltstellung stellt die Ruhelage des Ventilelementes 54 dar, welche das Ventilelement einnimmt, wenn der Antriebsmotor 34 abgeschaltet ist.

Fig. 3 zeigt nun im Unterschied zu Fig. 2 das Ventilelement 54 in seiner zweiten Schaltstellung, in welcher sich das Ventilelement in seiner in axialer Richtung x weiter von dem Laufrad 36 beabstandeten Position befindet. In dieser zweiten Schaltstellung liegt das erste Axialende 60 am Boden 58 der saugseitigen Kammer 46 im Inneren des Pumpengehäuses 30 an. Dadurch wird die Öffnung am ersten Axialende 56 des Ventilelementes 54 verschlossen, so dass keine Verbindung von den saugseitigem Anschluss 42 und damit dem zweiten hydraulischen Kreis B zum Saugmund 62 des Laufrades 36 gegeben ist. Der zweite hydraulische Kreis B ist damit verschlossen. Die Druckfeder 66 ist in dieser zweiten Schaltstellung weiter gestaucht als in der ersten Schaltstellung.

In der zweiten Schaltstellung, welche in Fig. 3 gezeigt ist, hat sich darüber hinaus der umfänglich erweiterte Abschnitt des Ventilelementes 54 in axialer Richtung x auf dem Saugmund 62 verschoben, so dass in diesem Abschnitt Öffnungen 70 in der Umfangswandung des Hohlzylinders des Ventilelementes 54 freigegeben werden. Diese Eintrittsöffnungen bzw. Öffnungen 70 sind in der in Fig. 2 gezeigten ersten Schaltstellung durch die verlängerte zylindrische Umfangswandung des Saugmundes 62 verschlossen. In der zweiten Schaltstellung gemäß Fig. 3 sind die Öffnungen 70 geöffnet, so dass eine Verbindung von der saugseitigen Kammer 44 in das Innere des Ventilelementes 54 und damit in das Innere des Saugmundes 62 des Laufrades 36 hergestellt ist. So ist der erste hydraulische Kreis A über den saugseitigen Anschluss 40, die saugseitige Kammer 44 und das Innere des Ventilelementes 54 mit dem Umwälzpumpenaggregat 2 verbunden, so dass in dieser Schaltstellung Flüssigkeit durch den ersten hydraulischen Kreis A gefördert wird, wenn der Antriebsmotor 34 des Umwälzpumpenaggregates 2 angetrieben wird. Ein Umschalten zwischen den vorangehend beschriebenen zwei Schaltstellungen erfolgt allein durch Ansteuerung des Umwälzpumpenaggregates 2 mithilfe eines Drehzahlstellers in der Weise, dass unterschiedliche Verläufe des Druckaufbaus beim Hochfahren erreicht werden. Wenn ausgehend vom Stillstand aus der in Fig. 2 gezeigten Ruhestellung der Antriebsmotor 34 mit einer höheren Beschleunigung, das heißt beispielsweise bei stetiger Beschleunigung mit einer steileren Rampe angefahren wird, führt dies in der Druckkammer 52 zu einem schnellen Druckaufbau. Der sich dort aufbauende Druck pflanzt sich über den druckseitigen Anschluss 38 durch den Zweig P des hydraulischen Kreises über den Primärwärmetauscher 6 und den Abzweigpunkt 12 zunächst in beide hydraulische Kreise A und B fort und wirkt in der saugseitigen Kammer 44 auf die Schulter 64, welche eine erste Steuerfläche bildet. Gleichzeitig wirkt der Druck in der Druckkammer 52 auf das zweite Axialende 60, das heißt die Stirnfläche am zweiten Axialende 60 des Ventilelementes 54, welche eine zweite Steuerfläche bildet.

Aufgrund der Länge des ersten hydraulischen Kreises A, welcher den Raumheizungskreis bildet, benötigt der Druckaufbau in diesem Kreis eine gewisse Zeit. Darüber hinaus treten Druckverluste in den Heizkörpern 10 und auch im Primärwärmetauscher 6 auf. Diese Druckverluste, insbesondere der Druckverlust im Primärwärmetauscher 6 kann dadurch ausgeglichen werden, dass die von der Schulter 64 gebildete erste Steuerfläche größer ist als die zweite Steuerfläche, welche von der Stirnfläche am zweiten Axialende 60 gebildet wird. Aufgrund des verzögerten Druckaufbaus über den hydraulischen Kreis A liegt somit zunächst der volle ausgangseitige Druck des Laufrades 36 nur an der zweiten Steuerfläche, das heißt am zweiten Axialende 60 des Ventilelementes 54 an. Die Flächenverhältnisse und die Stärke der Druckfeder 66 sowie die Geschwindigkeit des Druckaufbaus sind so miteinander abgestimmt, dass an der axialen Stirnseite 60 somit eine Druckkraft entsteht, welche der Druckfeder 66 in axialer Richtung X entgegenwirkt und deren Federkraft übersteigt, so dass das Ventilelement 54 durch die auftretende Druckkraft in die zweite Schaltstellung bewegt wird, welche in Fig. 3 gezeigt ist. Das heißt durch dieses schnelle Anfahren des Umwälzpumpenaggregates 2 wird das Ventilelement 54 in seine zweite Schaltstellung bewegt, in welcher der erste hydraulische Kreis A geöffnet wird und gleichzeitig der zweite hydraulische Kreis B durch Anlage des ersten axialen Stirnendes 56 an dem Boden 58 geschlossen wird. Wenn nun die Öffnungen 70 zu der saugseitigen Kammer 44 geöffnet sind, liegt in der saugseitigen Kammer 44 der saugseitige Druck des Umwälzpumpenaggregates an und es wirkt auf die erste Steuerfläche 64 keine Druckkraft, welche die Druckfeder 66 unterstützen könnte, das Ventilelement 54 zurück in die erste Schaltstellung zu bewegen. Das bedeutet, wenn das Umwälzpumpenaggregat 2 nach dieser Beschleunigung mit ausreichender Drehzahl und ausreichendem Ausgangsdruck in den Druckraum 52 weiter betrieben wird, ist das Ventilelement 54 in diesem Betriebszustand selbsthaltend und das Umwälzpumpenaggregat 2 fördert ausschließlich durch den ersten hydraulischen Kreis A. Dabei ist eine weitere Drehzahlregelung des Umwälzpumpenaggregates 2 zur Druckregelung möglich, solange ein Minimaldruck, bei welchem die Kraft der Druckfeder 66 die hydraulische Kraft an der zweiten Steuerfläche am zweiten Axialende 60 übersteigen würde, nicht unterschritten wird. Wenn das Umwälzpumpenaggregat 2 abgeschaltet wird, verringert sich der Druck in den Druckraum 52, die hydraulische Kraft am zweiten Axialende 60 fällt weg und die Druckfeder 66 bewegt das Ventilelement 54 wieder in die in Fig. 2 gezeigte erste Schaltstellung, welche die Ruhelage darstellt.

Wenn nun das Umwälzpumpenaggregat 2 bzw. dessen Antriebsmotor 34 aus dieser Ruhelage langsamer beschleunigt wird, das heißt beispielweise stetig mit einer flacheren Rampe angefahren wird, baut sich der Druck im hydraulischen System langsamer auf. Das heißt in der druckseitigen Kammer 52 bzw. im Druckraum 52 baut sich der Druck langsamer auf und auch in dem ersten hydraulischen Kreis A baut sich der Druck langsamer auf, so dass die Verzögerung des Druckaufbaus ausgeglichen wird und ein Kräftegleichgeweicht zwischen den an der von der Schulter 64 gebildeten ersten Steuerfläche und der zweiten Steuerfläche an dem zweiten Axialende 60 wirkenden hydraulischen Kräften erhalten bleibt, so dass keine hydraulische Kraft entsteht, welche das Ventilelement 54 entgegen der Kraft des Federelementes 66 in seine zweite Schaltstellung bewegen könnte. Das heißt das Ventilelement 54 verbleibt auch nach Beschleunigung in der in Fig. 2 gezeigten ersten Schaltstellung und wird durch den an der Schulter 64 wirkenden Druck gemeinsam mit der Druckfeder 66 selbsthaltend in dieser Position gehalten. In diesem Zustand wird nun der Wärmeträger im Kreislauf durch den zweiten hydraulischen Kreis B gefördert.

Es ist zu erkennen, dass somit allein durch unterschiedliche Art des Verlaufes des Druckaufbaus bzw. der Beschleunigung des Umwälzpumpenaggregates 2 ein Umschalten zwischen den beiden hydraulischen Kreisen A und B durch Verlagerung des Ventilelementes 54 möglich ist. Wenn aus der zweiten in Fig. 3 gezeigten Schaltstellung wieder zurück in die erste Schalstellung geschaltet werden soll, ist es erforderlich, dass Umwälzpumpenaggregat kurz anzuhalten oder die Drehzahl auf eine Basisdrehzahl zu verlangsamen, bei welcher der Druck in dem Druckraum 52 soweit abnimmt hat, dass die Federkraft der Druckfeder 66 das Ventilelement 54 wieder in seine erste Schaltstellung bewegen kann. Anschließend erfolgt dann die beschriebene langsame Beschleunigung, um das Ventilelement 54 in dieser ersten Schaltstellung zu halten. Die unterschiedliche Beschleunigung muss nicht stetig mit unterschiedlich steilen Rampen erfolgen. Es könnte auch eine schrittweise bzw. stufenweise Beschleunigung mit Pausen zwischen den einzelnen Drehzahlerhöhungen gewählt werden.

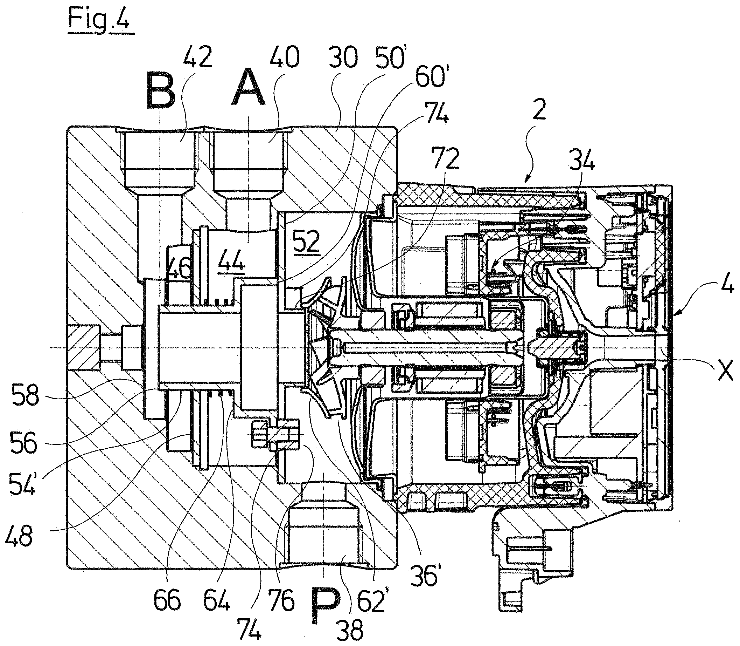

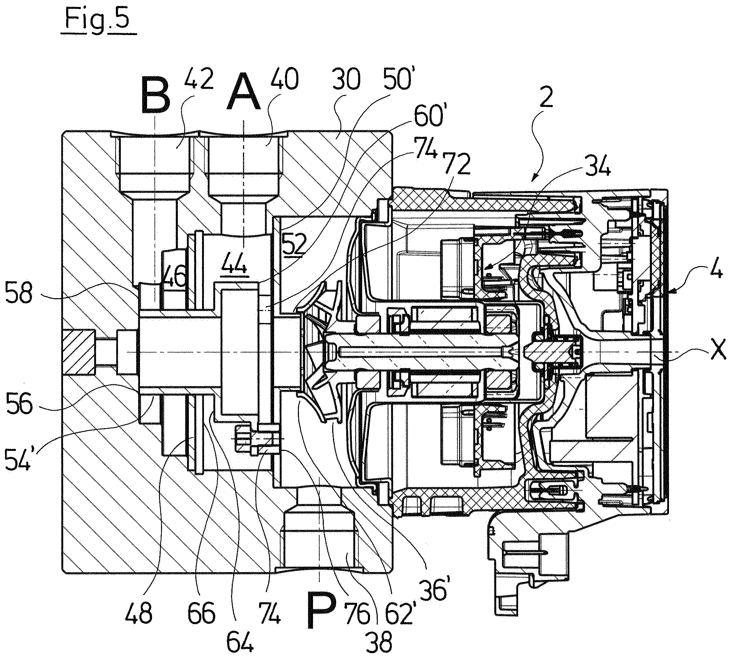

Die Fig. 4 und 5 zeigen eine zweite Ausführungsform der Erfindung, welche im Wesentlichen der ersten Ausführungsform, welche anhand der Fig. 2 und 3 beschrieben wurde, entspricht. Nachfolgend werden nur die Unterschiede erläutert. Der Hauptunterschied liegt in der Gestaltung des zweiten Axialendes des Ventilelementes 54. Bei der zweiten Ausführungsform erstreckt sich das zweite Axialende 60' nicht in den Druckraum 52 hinein. Bei dieser zweiten Ausführungsform liegt das zweite Axialende 60' in der zweiten Schalstellung an der dem der saugseitigen Kammer 44 zugewandten Seite der Trennwand 50' an und bildet somit gleichzeitig einen Anschlag in axialer Richtung x. Das Laufrad 36' weist einen kürzeren Saugmund 62' auf, in welchen ein rohrförmiger Vorsprung 72 an der Trennwand 50' eingreift. Der rohrförmige Vorsprung 72 umgibt die Öffnung in der Trennwand 50', welche der saugseitigen Kammer 44 zugewandt ist. In der gezeigten ersten Schaltstellung in Fig. 4 liegt das zweite Axialende 60' des Ventilelementes 54' an der Trennwand bzw. Trennscheibe 50' an, so dass ein Strömungsweg von der saugseitigen Kammer 44 zu dem Saugmund 62' des Laufrades 36' verschlossen ist. Gleichzeitig ist ein Strömungsweg durch den Vorsprung 32 und durch das Innere des Ventilelementes 54' hindurch zu der sauseitigen Kammer 46 und damit dem saugseitigen Anschluss 42 geöffnet, da das erst Axialende 56 von dem Boden 58 beabstandet ist. In dieser ersten Schaltstellung wird entsprechend der ersten Schaltstellung, welche in Fig. 2 gezeigt ist, somit durch den zweiten hydraulischen Kreis B gefördert. In der zweiten Schaltstellung welche in Fig. 5 gezeigt ist, liegt das erste Axialende 56 an dem Boden 58 an und der Strömungsweg durch den zweiten hydraulischen Kreis B ist, wie anhand von Fig. 3 beschrieben, verschlossen. Gleichzeitig ist das zweite Axialende 60' des Ventilelementes 54' von der Trennwand 50' beabstandet, so dass durch den Spalt zwischen der Trennwand 50' und dem zweiten Axialende 60', welcher eine Eintrittsöffnung bildet, ein Strömungsweg aus der saugseitigen Kammer 44 in das Innere des rohrförmigen Vorsprunges 72 und damit in den Saugmund 62'des Laufrades 36' hinein geöffnet ist. In dieser zweiten Schaltstellung wird somit analog zu der anhand von Fig. 3 beschriebenen zweiten Schaltstellung durch den ersten hydraulischen Kreis A gefördert.

Bei diesem zweiten Ausführungsbeispiel ist die zweite Steuerfläche an dem Ventilelement 54' durch Stifte 74 ersetzt, welche sich parallel zur Längsachse X von dem zweiten Axialende 60' wegerstrecken. Die Stifte 74 erstrecken sich durch Öffnungen in der TrennWand 50' hindurch in den Druckraum 52 hinein, so dass die axiale Stirnseite 76 in den Druckraum 52 hineinragt bzw. von dem Druck in dem Druckraum 52 beaufschlagt ist. Die Stifte 74 sind dabei durch Öffnungen in der Trennwand 50' hindurchgeführt, welche in radialer Richtung von dem Saugmund 62' und dem rohrförmigen Vorsprung 72 beabstandet sind. Die Stifte 74 sind im Wesentlichen gedichtet durch die Trennwand 50' bzw. die in dieser ausgebildeten Öffnung hindurchgeführt. Es sind mehrere, vorzugsweise gleichmäßig um den Umfang verteilte Stifte 74 vorgesehen, welche so abgestimmt und gewählt sind, dass ihre axialen Stirnseiten 76 gemeinsam eine zweite Steuerfläche bilden, welche in ihrer Größe auf die Größe der von der Schulter 64 gebildeten ersten Steuerfläche und die Federkraft der Druckfeder 66 abgestimmt ist, um die anhand von Fig. 2 und 3 beschriebene Umschaltfunktionalität in Abhängigkeit des Verlaufes des Druckaufbaus zu ermöglichen. Das Umschalten erfolgt in derselben Weise, wie anhand von Fig. 2 und 3 beschrieben, mit dem einzigen Unterschied, dass der Druck in den Druckraum 52 nicht direkt auf das zweite Axialende 60' des Ventilelementes 54' sondern auf die axialen Stirnflächen 76 der Stifte 74 wirkt. Auch bei dieser Ausführungsform ist es so, dass durch schnelle Beschleunigung des Umwälzpumpenaggregates 2 und einem damit verbundenen schnellen Druckaufbau in dem Druckraum 52 aufgrund der Verzögerung der Druckübertragung über den ersten hydraulischen Kreis A das Ventilelement 54 aus der in Fig. 4 gezeigten ersten Schaltstellung in die in Fig. 5 gezeigte zweite Schaltstellung bewegt werden kann, wo es dann für den weiteren Betrieb selbsthaltend verbleibt. Bei langsamer Beschleunigung wird ein Kraft- bzw. Druckgleichgeweicht zwischen den axialen Stirnseiten 76 auf der einen Seite und der Schulter 64 sowie der Druckfeder 66 auf der anderen Seite beibehalten, so dass es zu keiner Verlagerung des Ventilelementes 54' kommt.

Die zwei vorangehend beschriebenen Ausführungsbeispiele betreffen eine Schalteinrichtung mit einem einzigen Ventilelement, welche zur Anordnung an der Saugseite des Umwälzpumpenaggregates 2, das heißt am Abzweigpunkt 14 vorgesehen ist. Nachfolgend werden nun weitere Ausführungsformen der Erfindung beschrieben, bei welcher die Schalteinrichtung als Ventil mit zwei Ventilelementen vorgesehen ist, wobei Ausführungsformen zur Anordnung an dem Abzweigpunkt 12 oder zur Anordnung an dem Abzweigpunkt 14 beschrieben werden.

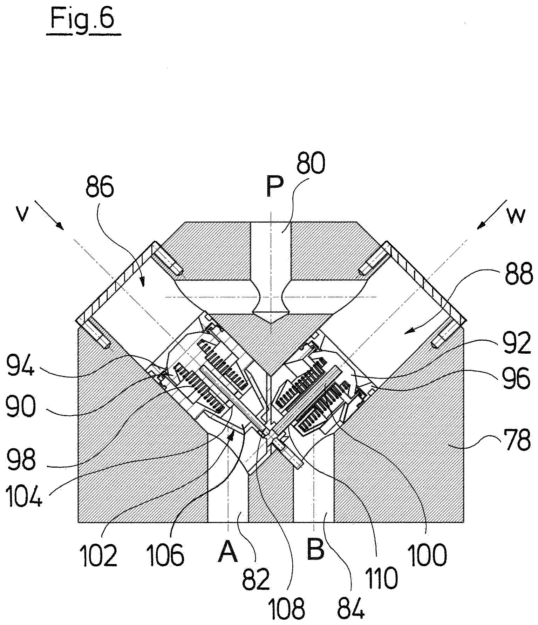

Die anhand der Fig. 6 - 8 beschriebene Ausführungsform einer Schalteinrichtung ist zur Anordnung an der Druckseite des Umwälzpumpenaggregates 2, das heißt am Abzweigpunkt 12 vorgesehen. An diesem Abzweigpunkt 12 wirkt lediglich der Druckverlust des Primärwärmetauschers 6, der wesentlichere Druckverlust in den hydraulische Kreisen A und B erfolgt jedoch zwischen den Abzweigpunkten 12 und 14 durch den Sekundärwärmtauscher 8 und die Heizkörper 10.

Die Schalteinrichtung weist ein Gehäuse in Form eines Ventilblockes 78 auf, welcher einen druckseitigen Anschluss 80 zur Verbindung mit dem Zweig P der hydraulischen Kreise, das heißt der Ausgangsseite des Primärwärmetauschers 6, aufweist. Ferner weist der Ventilblock 78 zwei ausgangsseitige Anschlüsse 82 und 84 auf, von welchen der Anschluss 82 mit dem ersten hydraulischen Kreis A, das heißt über den Vorlaufanschluss 22 mit den Heizkörpern 10, und der Anschluss 84 mit dem zweiten hydraulischen Kreis B, das heißt mit dem Sekundärwärmetauscher 8 verbunden ist.

In dem Ventilblock 78 sind zwei Ventile 86 und 88 angeordnet. Die Ventile 86 und 88 bilden gemeinsam eine Schalteinrichtung und sind jeweils nach Art von Rückschlagventilen ausgestaltet. Dabei liegt das Ventil 86 im Strömungsweg zwischen dem Anschluss 80 und dem Anschluss 82 für den ersten hydraulischen Kreis A und das Ventil 88 liegt im Strömungsweg zwischen dem Anschluss 80 und dem ausgangsseitigen Anschluss 84 für den zweiten hydraulischen Kreis B. In der in Fig. 6 gezeigten Ruhelage sind beide Ventile 86, 88 in einer ersten Schaltstellung geschlossen, das heißt das Ventilelement 90 des Ventiles 86 liegt an dem Ventilsitz 94 und das Ventilelement 92 des Ventils 88 an einem korrespondierenden Ventilsitz 96 an. Das Ventil 86 weist eine Druckfeder 98 und das Ventil 88 eine Druckfeder 100 auf, welche eine Vorspannung erzeugen und das jeweilige Ventilelement 90, 92 in die in Fig. 6 gezeigte geschlossene Ruhelage drücken. Die Druckfedern 98 und 100 sind unterschiedlich dimensioniert. Das erste Ventil 86 weist eine schwächere Druckfeder 98 als die Druckfeder 100 des zweiten Ventils 88 auf.

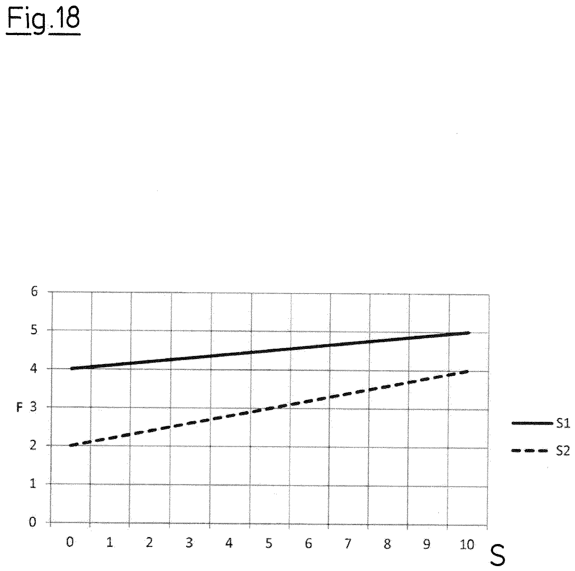

Die unterschiedliche Dimensionierung der Druckfedern 98 und 100 ist in Fig. 18 dargestellt. Fig. 18 zeigt schematisch die Kennlinie S1 der Druckfeder 100 und die Kennlinie S2 der Druckfeder 98. In dem Diagramm gemäß Fig. 18 ist die Kraft F über den Weg S aufgetragen, wobei die Kraft F in diesem Diagramm nicht die Federkraft, sondern der erzeugte Druck bzw. die erzeugte Förderhöhe des Umwälzpumpenaggregates 2 an dessen Druckseite ist. Es ist zu erkennen, dass die schwächere Druckfeder 98 eine geringere Vorspannkraft erzeugt als die stärkere Druckfeder 100. In der geschlossenen Ruhelage, in welcher sich das zugehörige Ventilelement noch nicht in Öffnungsrichtung bewegt hat, ist in diesem Beispiel eine Förderhöhe von 2m erforderlich, um das erste Ventil 86 zu öffnen, während eine Förderhöhe von 4m erforderlich ist, um den Öffnungsvorgang des Ventils 88, welches die stärkere Druckfeder 100 aufweist, zu bewirken. Gleichzeitig ist zu erkennen, dass in diesem Ausführungsbeispiel die schwächere Druckfeder 98 eine etwas steilere Federkennlinie S2 aufweist, wodurch die verzögerte Bewegung des Ventils 86 bzw. dessen Ventilelementes 90 unterstützt wird. An dem Diagramm gemäß Fig. 18 ist zu erkennen, dass bei einem langsamen Druckaufbau beispielsweise zwischen 2m und 4m Förderhöhe das Ventil 86 mit der schwächeren Druckfeder 98 durch Bewegung des zugehörigen Ventilelementes 90 in die zweite Schaltstellung geöffnet werden kann, bevor sich das Ventilelement 92 des zweiten Ventils 88 bewegt. So kann, wie unten beschrieben wird, das Ventilelement 90 zuerst in eine Position bewegt werden, in welcher die Öffnung des Ventilelementes 92 blockiert wird, bevor der Druck soweit erhöht wird, dass auch das Ventilelement 92 in seine geöffnete Position bewegt wird.

Zusätzlich ist das Ventil 86 mit einer Dämpfungs- bzw. Verzögerungseinrichtung 102 versehen. Die Verzögerungseinrichtung 102 weist einen geschlossenen flüssigkeitsgefüllten Raum auf, in welchen ein zylindrischer Kolben 104 des Ventilelementes 90, bei dessen Bewegung in die geöffnete Stellung eintaucht. Über eine als Drosselstelle fungierende Öffnung 106 kann Flüssigkeit aus dem geschlossen Volumen der Verzögerungseinrichtung 102 verzögert entweichen, wenn der Kolben 104 in das Volumen eintaucht. So kommt es zu einer Dämpfung bzw. Verzögerung der Bewegung des Ventilelementes 90 in der Öffnungsrichtung v.

Durch Kombination der schwächeren Druckfeder 98 mit dieser Verzögerungseinrichtung 102 ist es wiederum möglich durch Variation des Druckaufbaus bei Beschleunigung des Pumpenaggregates 2 gezielt eines der Ventile 86 und 88 zu öffnen. Wird ein schneller Druckaufbau, beispielsweise mit einer steilen Rampe für die Beschleunigung oder einem sprunghaften Anstieg auf einen hohen Betriebsdruck gewählt, wird sich das Ventilelement 92, da es in seiner Bewegung nicht verzögert wird, schneller in seiner Öffnungsrichtung w bewegen als das Ventilelement 90, welches über die Verzögerungseinrichtung 102 in seiner Bewegung verzögert wird. Wird ein langsamer Druckaufbau mit mehreren Schritten oder mit einer flacheren Rampe für die Beschleunigung und den Druckaufbau gewählt, wird zuerst ein Druck in dem Anschluss 80 erreicht werden, welche nur ausreichend ist, die Federkraft der Druckfeder 98, welche schwächer ausgebildet ist zu überwinden, während der Druck noch nicht ausreicht, das Ventilelement 92 gegen die Drucckraft der Druckfeder 100 zu bewegen. Das heißt, dann wird sich zunächst das Ventilelement 90 in der Öffnungsrichtung v in seine geöffnete Schaltstellung bewegen. Das zweite Ventilelement 92 wird sich erst dann gegen die Druckfeder 100 bewegen, wenn der Druck, welcher auf das Ventilelement 92 an dessen dem Anschluss 80 hydraulisch zugewandten Stirnseite wirkt, ausreichend groß ist, die entgegenwirkende Federkraft zu überwinden.

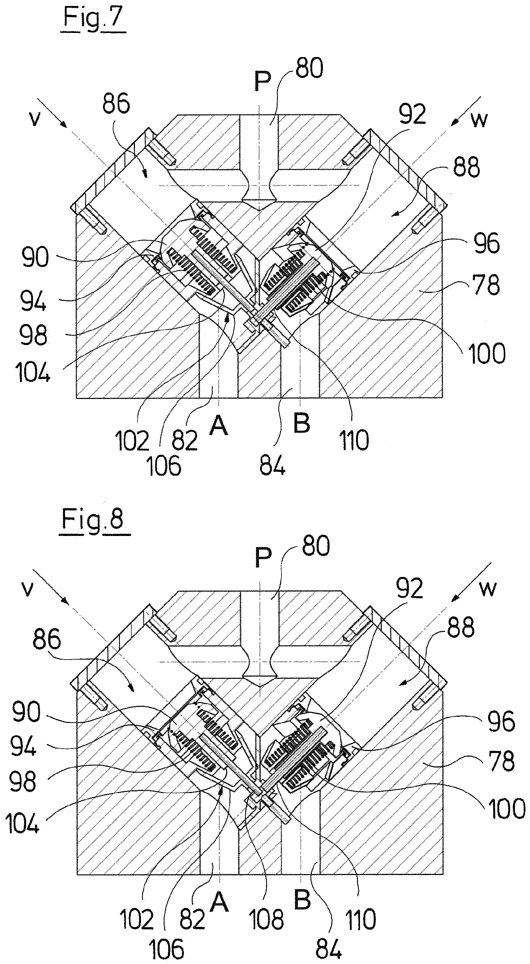

Darüber hinaus sind die Ventilelemente 90 und 92 so ausgestaltet, dass sie mechanisch gekoppelt sind bzw. sich gegenseitig blockieren. Die Bewegungsachsen bzw. Öffnungsrichtungen v und w der beiden Ventilelemente 90 und 92 sind im Winkel von 90° zueinander gewinkelt und schneiden einander. Darüber hinaus weist das Ventilelement 90 an seinem dem Ventilsitz 94 abgewandten Axialende eine stiftförmige Verlängerung 108 auf, welche einen Führungsstift bildet. Entsprechend weist das zweite Ventilelement 92 an seinem dem Ventilsitz 96 abgewandten Ende eine stiftförmige Verlängerung 110 auf, welche einen Führungsstift bildet. Die stiftförmige Verlängerung 108 erstreckt sich in Richtung der Bewegungsachse bzw. Öffnungsrichtung v des Ventilelementes 90. Die stiftförmige Verlängerung 110 erstreckt sich entlang der Längs- bzw. Bewegungsachse bzw. Öffnungsrichtung w des zweiten Ventilelementes 92. Die stiftförmigen Verlängerungen 108 und 110 sind so dimensioniert, dass dann, wenn sich das Ventilelement 90 in seiner geöffneten Position befindet, dessen stiftförmige Verlängerung 108 in die Bewegungsbahn des Ventilelementes 92 hineinragt, so dass dessen stiftförmige Verlängerung 110 am Außenumfang der stiftförmigen Verlängerung 108 zur Anlage kommt. Dieser Zustand ist in Fig. 8 gezeigt. Dies verhindert, dass wenn das erste Ventilelement beim langsamen Druckaufbau zuerst öffnet, sich bei weiterer Druckerhöhung auch das zweite Ventilelement 92 in seine geöffnete Position bzw. Schaltstellung bewegen kann. Das heißt auch wenn der Druck im Anschluss 80, welcher auf das Ventilelement 92 wirkt, soweit ansteigt, dass die hydraulische Kraft die Kraft der Druckfeder 100 übersteig, kann sich das Ventilelement 92 nicht mehr in seine geöffnete Stellung bewegen. Wenn umgekehrt das zweite Ventilelement 92 zuerst öffnet, bewegt sich dessen stiftförmige Verlängerung 110 in die Bewegungsbahn der stiftförmigen Verlängerung 108 des ersten Ventilelementes 90, so dass bei einer Öffnungsbewegung die stiftförmige Verlängerung 108 des Ventilelementes 90 am Außenumfang der stiftförmigen Verlängerung 110anstößt, wie in Fig. 7 gezeigt ist. Das heißt, wenn sich das Ventilelement 92 bei schnellem Druckaufbau zuerst in seine geöffnete Position bzw. Schaltstellung bewegt, kann sich das erste Ventilelement 90 anschließend nicht mehr in seine geöffnete Position bewegen und es wird eine zweite Schaltstellung der gesamten Ventilanordnung erreicht.

So kann auch bei dieser Ausführungsform die Schalteinrichtung allein durch die hydraulische Kraft, welche vom Umwälzpumpenaggregat 2 auf die geförderte Flüssigkeit bzw. den Wärmeträger wirkt, geschaltet werden. Diese hydraulische Kraft wirkt in Form in eines Druckes auf die Steuerflächen der Ventilelemente 90 und 92. Da die Ventilelemente 90 und 92 beide am Abzweigpunkt 12 liegen, ist die Verzögerung des Druckaufbaus vom Umwälzpumpenaggregat 2 bis zu dem Ventilelementen 90 und 92 gleich. Dennoch reagieren beide Ventil 86 und 88 nicht gleich schnell, da das Ventilelement 90 des Ventils 86 in seiner Bewegung durch das Verzögerungselement 102 gebremst wird und so die Ventile 86 und 88 eine unterschiedliche Dynamik aufweisen.

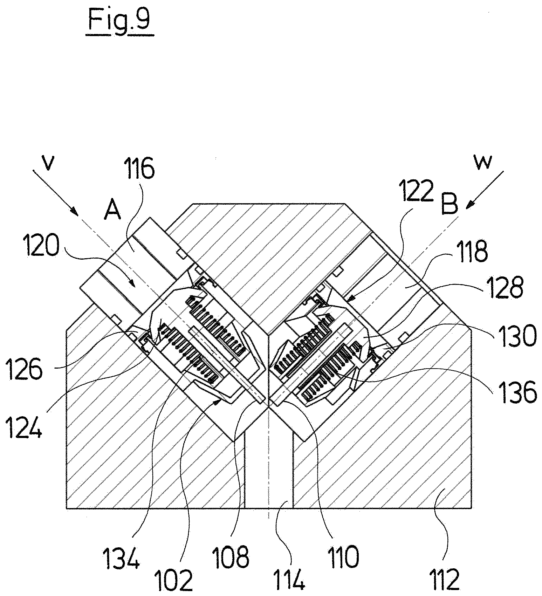

Die Fig. 9 - 11 zeigen ein weiteres Ausführungsbeispiel für eine Schalteinrichtung ähnlich der Schalteinrichtung, welche anhand von Fig. 7 und 8 beschrieben wurde, mit dem Unterschied, dass die Schalteinrichtung gemäß Fig. 9 - 11 zur Anordnung am Abzweigpunkt 14, das heißt an der Saugseite des Umwälzpumpenaggregates 2 vorgesehen ist.

Bei dieser Ausführungsform weist der Ventilblock 112 einen Auslass 114 auf, welcher zur Verbindung mit der Saugseite des Umwälzpumpenaggregates 2 vorgesehen ist. Ferner sind in dem Ventilblock zwei Einlässe 116 und 118 vorhanden, wobei der Einlass 116 mit der Ausgangsseite des hydraulischen Kreises A und der Einlass 118 mit der Ausgangsseite des hydraulischen Kreises B verbunden ist. Das bedeutet, der Einlass 116 weist eine Verbindung zu dem Rücklaufanschluss 24 und der Einlass 118 eine Verbindung zu dem Sekundärwärmetauscher 8 auf, sofern der Ventilblock 112 bei dem Ausführungsbeispiel gemäß Fig. 1 zum Einsatz kommt. In dem Einlass 116 ist ein erstes Ventil 120 und in dem Einlass 118 ein zweites Ventil 122 angeordnet. Fig. 9 zeigt die eine Ruhelage bildende erste Schaltstellung der beiden Ventile 120, 122, wobei von dem Ventil 120 das Ventilelement 124 an einem Ventilsitz 126 anliegt. In dem zweiten Ventil 122 liegt ein Ventilelement 128 an einem Ventilsitz 130 an. Jedes der Ventile weist eine Druckfeder 132, 134 auf, welche die Ventilelemente 124 und 128 in die in Fig. 9 gezeigte geschlossene Position drücken. Auch bei dieser Ausführungsform ist die Druckfeder 134 schwächer ausgebildet als die Druckfeder 136. D. h. die Druckfeder 136 weist wie anhand der vorangehenden Ausführungsform erläutert eine größere Federkonstante und/oder eine größere Vorspannung als die Druckfeder 134 auf. Das Ventil 120 ist darüber hinaus mit einer Verzögerungseinrichtung 102 versehen, wie sie anhand der Fig. 6 - 8 beschrieben wurde. Es wird an dieser Stelle auf diese Beschreibung verwiesen. Auch weisen die Ventilelemente 124 und 128 stiftförmige Verlängerungen 108 und 110 auf, wie sie anhand der Fig. 6 - 8 beschrieben wurden. Im Unterschied zu dem Ausführungsbeispiel gemäß Fig. 6 - 8 wirkt auf die Ventile 120 und 122 gemäß Fig. 9 - 12 nicht eine einheitliche Drucckraft auf die Steuerflächen an den den Einlässen 116 und 118 zugewandten Seiten der Ventilelemente 124 und 128. Stattdessen wirkt eine einheitliche Saugkraft über den Auslass 114 auf die entgegengesetzte Seite der Ventilelemente 124 und 128. Jedoch kann auch bei diesem Ausführungsbeispiel ein Schalten der Ventile 120 und 122 allein über die Art des Verlaufes des Druckanstieges bei Beschleunigung des Umwälzpumpenaggregates 2 erreicht werden.

Wird eine schnelle Beschleunigung mit einem schnellen Druckaufbau auf einen vorbestimmten Druck, welcher ausreicht, die Kraft der stärkeren Druckfeder 136 zu überwinden, gewählt, wird sich schnell ein ausreichend starker Unterdruck an dem Auslass 114 und über den hydraulischen Kreis B ein Druck an dem Einlass 118 aufbauen, welcher gegen die Druckfeder 136 das Ventilelement 128 in der Öffnungsrichtung w verschiebt und das Ventil 122 so öffnet. Gleichzeitig verschiebt sich die stiftförmige Verlängerung 110 des Ventilelementes 128 in den Bewegungspfad des Ventilelementes 124 und dessen zugehöriger stiftförmiger Verlängerung 108. So wird bei geöffnetem Ventil 122 eine Öffnung des in seiner Bewegung verzögerten Ventils 120 unterbunden, indem die stiftförmige Verlängerung 108 des Ventilelementes 124 an der stiftförmigen Verlängerung 110 anschlägt. So wird eine erste Schaltstellung der gesamten Ventilanordnung erreicht. Die verzögerte Bewegung des Ventilelementes 124 erfolgt über die Verzögerungseinrichtung 102. Zusätzlich kann der Druckaufbau zu dem Einlass 116 über den ersten hydraulischen Kreis A, wie oben anhand des ersten Ausführungsbeispiels beschrieben, verzögert erfolgen. Bei entsprechender Auslegung könnte auch diese Verzögerung ausreichen, so dass auf die Verzögerungseinrichtung 102 in diesem Ausführungsbeispiel verzichtet werden könnte.

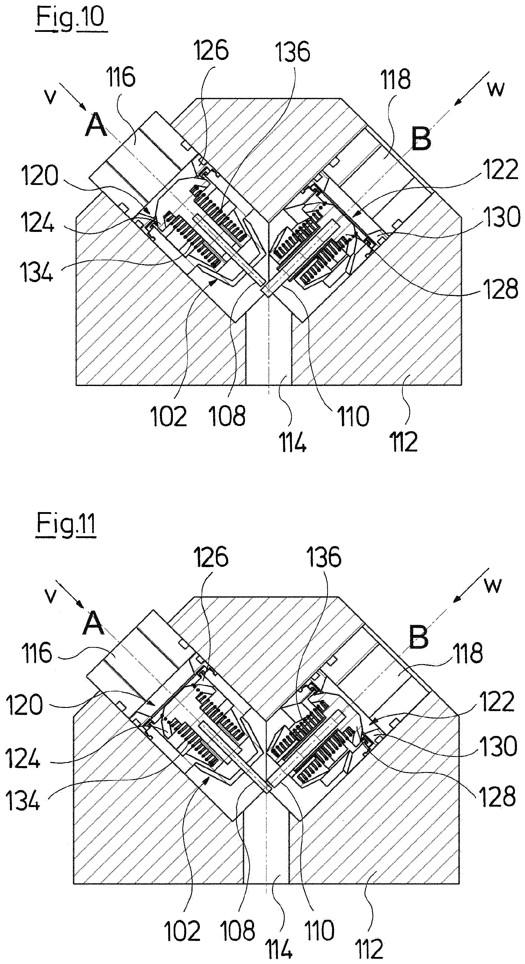

Erfolgt der Druckaufbau langsamer oder stufenweise zunächst auf einen Druck, welcher geringer ist, als der Druck, welcher erforderlich ist, das Ventilelement 128 gegen die Druckfeder 136 zu verschieben, wird sich aufgrund der geringeren Federkraft der Druckfeder 134 zunächst nur das Ventilelement 124 in der Öffnungsrichtung v bewegen, wie in Fig. 11 gezeigt ist. D. h. das Ventil 120 öffnet zuerst. Über die stiftförmige Verlängerung 108 wird dann das zweite Ventil 122 blockiert, so dass dieses sich nicht mehr öffnen kann. So wird eine zweite Schaltstellung der von den Ventilen 120 und 122 gebildeten Ventilanordnung erreicht. Beim Abschalten des Umwälzpumpenaggregates und Druckabbau bewegen sich die Ventilelemente 124 bzw. 128 über ihre Druckfedern 134 und 136 wieder in die in Fig. 9 gezeigte Ausgangslage zurück.

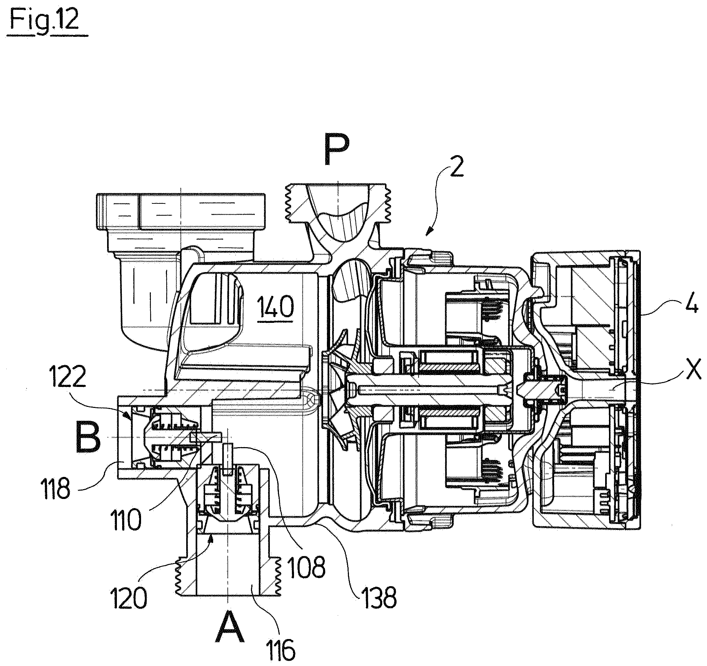

Die Anordnung zweier Ventile 120 und 122, wie sie anhand der Fig. 9 -11 beschrieben wurde, kann auch direkt in ein Pumpengehäuse 138 eines Umwälzpumpenaggregates 2 integriert werden. Bei dieser in Fig. 12 gezeigten Anordnung münden die Ausgangsseiten der beiden Ventile 120 und 122 nicht in einen gemeinsamen Auslass 114, wie in den Fig. 9 - 11 gezeigt, sondern direkt in den Saugraum 140 im Inneren des Pumpengehäuses 138. So kann die Aufnahme für die Ventile 120 und 122 einstückig mit dem Pumpengehäuse 138 ausgebildet werden. Insbesondere eignet sich eine solche Ausgestaltung dazu, direkt in eine Kompaktheizungsanlage, insbesondere in den hydraulischen Block einer solchen Kompaktheizungsanlage integriert zu werden. So kann der Einlass 116 direkt den Rücklaufanschluss 24 für den Raumheizungskreis bilden und der Einlass 118 kann direkt mit dem Sekundärwärmetauscher 8 verbunden werden.

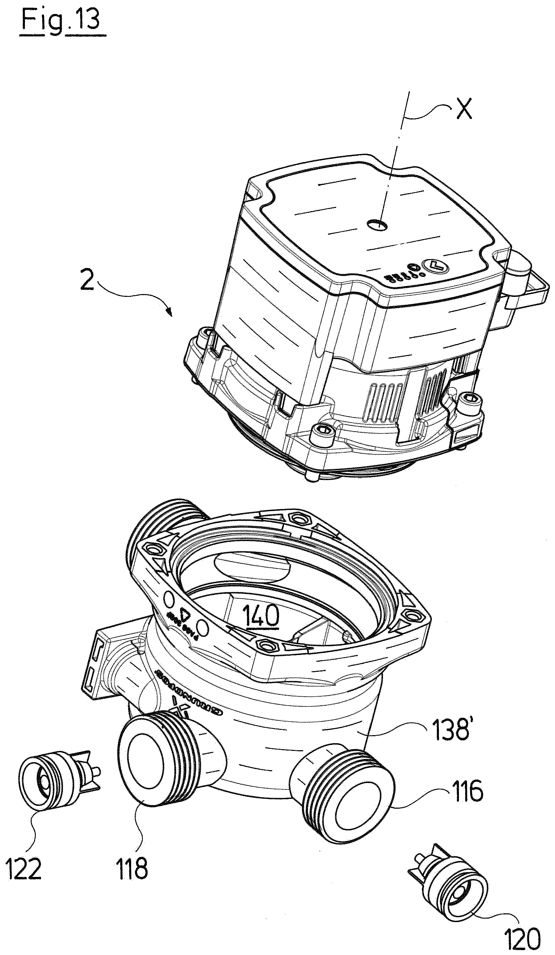

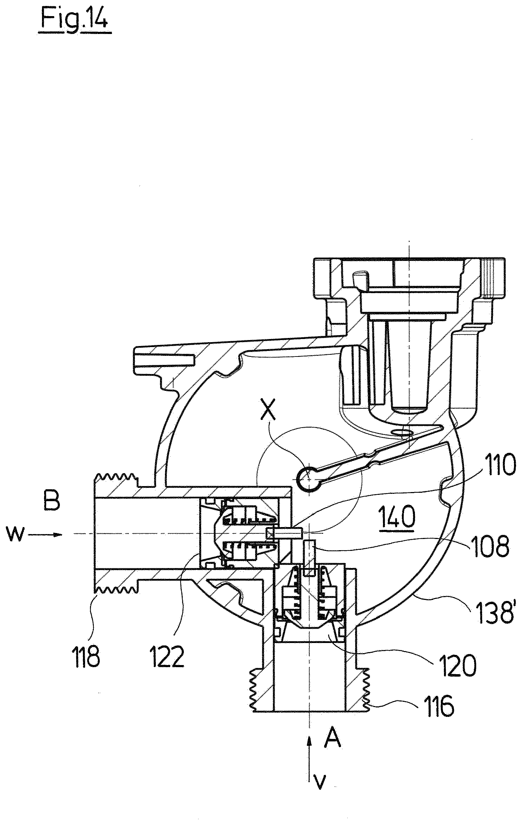

Fig. 13 und 14 zeigen eine alternative Ausgestaltung zu der Anordnung gemäß Fig. 12, welche sich von der in Fig. 12 gezeigten Anordnung nur dadurch unterscheidet, dass der Einlass 118 nicht rückseitig in einer Richtung parallel zur Drehachse X des Umwälzpumpenaggregates gerichtet ist, sondern seitlich in einem Winkel von 90° zu dem Einlass 116 gerichtet ist, so dass beide Einlässe 116 und 118 rechtwinklig zueinander und rechtwinklig zur Drehachse X des Umwälzpumpenaggregates gerichtet sind. Eine solche Anordnung kann gegenüber der in Fig. 12 gezeigten Anordnung beispielsweise dann von Vorteil sein, wenn ein Sekundärwärmetauscher 8 nicht rückseitig sondern seitlich an das Pumpengehäuse 138' angesetzt werden soll.

Hinsichtlich der Funktionsweise der die Schalteinrichtung bildenden Ventile 120 und 122 bei den Ausführungsformen gemäß Fig. 12 - 14 wird auf die vorangehende Beschreibung bezüglich der Fig. 6 - 11 verwiesen.

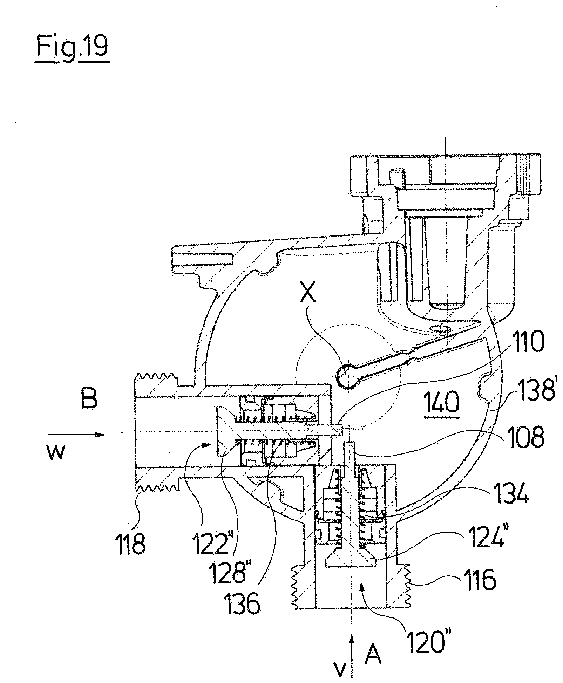

In den vorangehend beschriebenen Ausführungsbeispielen sind die Ventile 86, 88, 120, 120' und 122 so ausgebildet, dass sie in ihrer ersten, die Ruhelage bildenden Schaltstellung geschlossen sind und durch die auftretenden hydraulischen Kräfte gezielt in eine geöffnete zweite Schaltstellung bewegt werden. Es ist jedoch zu verstehen, dass die Ventile auch in umgekehrter Weise ausgebildet sein können und in ihrer ersten, eine Ruhelage bildenden Schaltstellung geöffnet sind. Durch die auftretenden hydraulischen Kräfte, welche von dem Unwälzpumpenaggregat verursacht werden, können die Ventile dann gezielt in eine zweite geschlossene Schaltstellung bewegt werden. Ein solches Ausführungsbeispiel ist in Fig. 19 gezeigt, welche eine alternative Ausgestaltung zu der in Fig. 14 gezeigten Ausgestaltung darstellt. Bei der Ausführungsform gemäß Fig. 19 sind anstelle der Ventile 120 und 122 Ventile 120" und 122" mit Ventilelementen 124" und 128" gezeigt, welche jeweils durch Druckfedern 134 und 136 in der vorangehend beschriebenen Weise in ihrer ersten Schaltstellung gehalten werden, welche in diesem Fall eine geöffnete Schaltstellung ist. Entsprechend der vorangehenden Beschreibung lassen sich die Ventilelemente 122" und 124" aufgrund der unterschiedlichen Vorspannkräfte und unterschiedlichen dynamischen Eigenschaften durch entsprechende Ansteuerung des Umwälzpumpenaggregates 2 gezielt in eine zweite Schaltstellung bringen, in welcher sie geschlossen sind. Dabei bewirken die stiftförmigen Verlängerungen 108 und 110 wie vorangehend beschrieben ein gegenseitiges Blockieren der Ventile 120" und 122". Die Funktionsweise der Ventile 120" und 122" entspricht dabei der vorangehend beschriebenen Funktionsweise der Ventile 120 und 122. Der einzige Unterschied liegt darin, dass in dem in Fig. 19 gezeigten Beispiel die Ventilelemente 124" und 128" von einer geöffneten in eine geschlossene Position bewegt werden anstatt von einer geschlossenen in eine geöffnete Position.

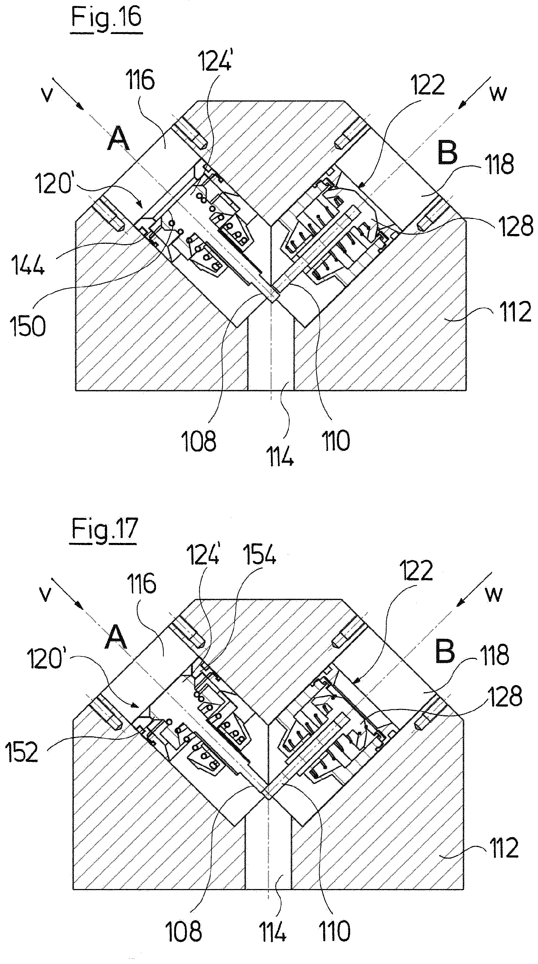

Die Fig. 16 und 17 zeigen eine alternative Anordnung zweier Ventile entsprechend der Ventile 120 und 122, wie sie anhand der Fig. 9 - 14 beschrieben wurden. Das Ventil 122, welches den Strömungsweg zu dem zweiten hydraulischen Kreis B freigibt oder schließt, entspricht dabei der vorangehenden Beschreibung. Das Ventil 120', welches den Strömungsweg zu dem ersten hydraulischen Kreis A freigibt oder schließt, ist in seiner Dämpfungs- bzw. Verzögerungsfunktion anders als in den Ausführungsbeispielen gemäß Fig. 9 - 14 ausgestaltet.

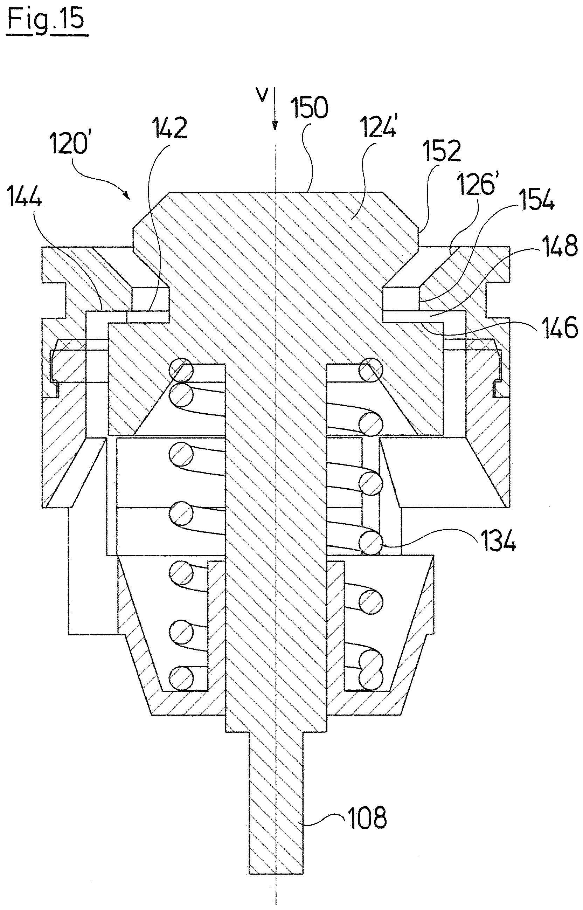

Der Aufbau des Ventils 120' ist vergrößert in einer Schnittansicht in Fig. 15 gezeigt. Das Ventil 120' unterscheidet sich von dem Ventil 120 in dem Aufbau des Ventilelementes 124' und des Ventilsitzes 126'. Fig. 15 zeigt die geschlossene Schaltstellung des Ventils 120'. In dieser Schaltstellung liegt das Ventilelement 124' über einen Vorsprung 142 an einer Innenseite des Ventilsitzes 126' an. Die Innenseite 144 ist dem Einlass 116 abgewandt. Der Vorsprung 142 ist an einer radial nach außen auskragenden Schulter 146 des Ventilelementes 124' gelegen. Der Vorsprung 142 bewirkt, dass in dieser ersten Stellung das Ventil 120' nicht vollständig geschlossen ist, sondern vielmehr zwischen der Schulter 146 und der Innenseite 144 des Ventilsitzes 126' ein radial nach außen gerichteter Ringspalt 148 ausgebildet wird. Durch diesen Ringspalt 148 erfolgt eine radial nach außen gerichtete Strömung, welche nach dem Gesetz von Bernoulli auf den das Ventilelement 124' an der Schulter 46 eine der Öffnungsrichtung v entgegengesetzte Kraft bewirkt. Diese Kraft ist somit in dieselbe Richtung gerichtet, wie die Federkraft der Druckfeder 134. Der Fluiddruck wirkt auf die Stirnseite 150 des Ventilelementes 124', wobei die Stirnseite 150 eine Steuerfläche darstellt. Wenn der Fluiddruck groß genug ist, ist die hydraulische Kraft, welche auf die Steuerfläche 150 wirkt, größer als die Kraft der Druckfeder 134 und die in dem Ringspalt 148 entstehende Axialkraft, so dass das Ventilelement 124' in Öffnungsrichtung bewegt wird. Dabei vergrößert sich die Spaltbreite des Ringspaltes 148, so dass die der Öffnungskraft entgegengesetzt gerichtete hydraulische Kraft an der Schulter 146 verringert wird.

Während der weiteren Bewegung des Ventilelementes 124' in Öffnungsrichtung v bewegt sich eine Ringfläche 152 am Außenumfang des Ventilelementes 124' nahe dessen Stirnseite 150 in den Bereich des Innenumfangs 154 des Ventilsitzes 126'. Die Ringfläche 152 weist einen Durchmesser auf, welcher gleich oder geringfügig kleiner als der Innendurchmesser des Innenumfangs 154 ist. Wenn die Ringfläche 152 dem Innenumfang 154 des Ventilsitzes 126' gegenüberliegt, ist das Ventil 120' im Wesentlichen geschlossen. Diese geschlossene Position ist in Fig. 17 gezeigt. In dieser Position ist das Ventil 122 wie oben beschrieben durch den schnellen Druckaufbau bereits geöffnet und blockiert dann über seine stiftförmige Verlängerung 110 wie oben beschrieben eine weitere Öffnung des Ventils 120' Dies ist sie erste Schaltstellung der Schalteinrichtung. Wenn die weitere Bewegung nicht durch die stiftförmige Verlängerung 110 des Ventilelementes 128 blockiert ist, bewegt sich das Ventilelement 124' weiter in die Öffnungsrichtung v, wobei die Ringfläche 152 den Innenumfang 154 des Ventilsitzes 126' passiert, so dass zwischen der Innenseite 144 und der Stirnseite 150 des Ventilelementes 124', wie in Fig. 16 gezeigt, ein Spalt gebildet wird und so das Ventil 120' in seiner geöffneten zweiten Stellung ist. In dieser Position blockiert wie oben beschrieben die stiftförmige Verlängerung 108 des Ventilelementes 124' das Ventilelement 128 in seiner Bewegung, so dass sich dieses nicht in seine geöffnete Position bewegen kann. In dieser zweiten Schalstelle, ist dann über das Ventil 120' der erste hydraulische Kreis A geöffnet, während der zweite hydraulische Kreis B geschlossen ist.

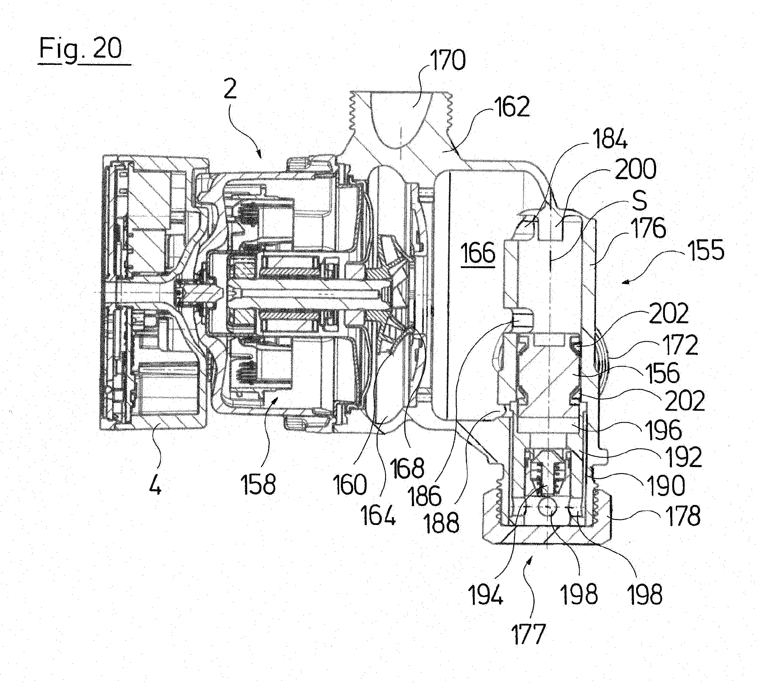

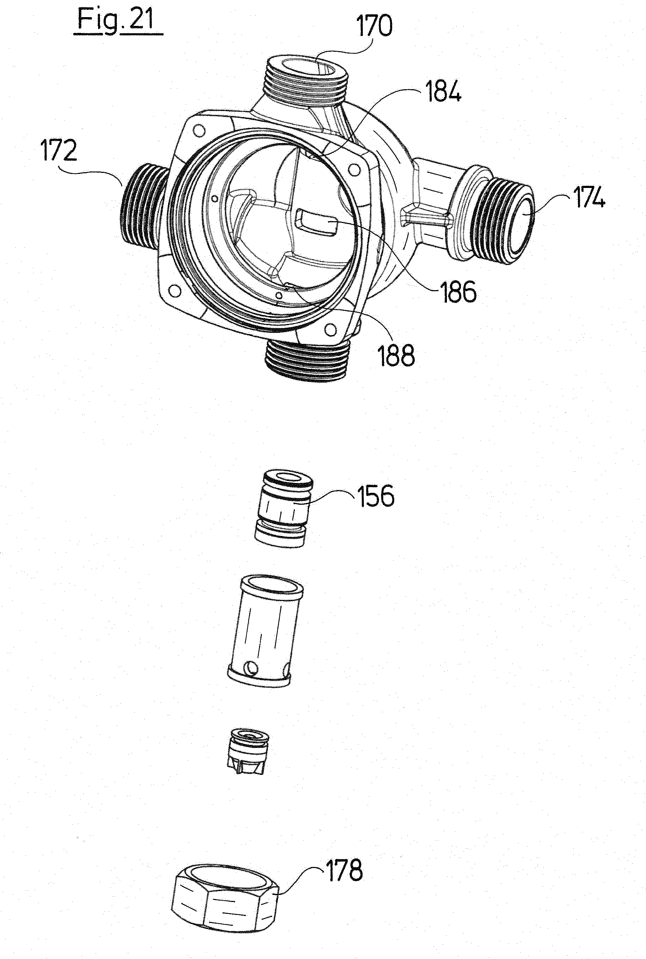

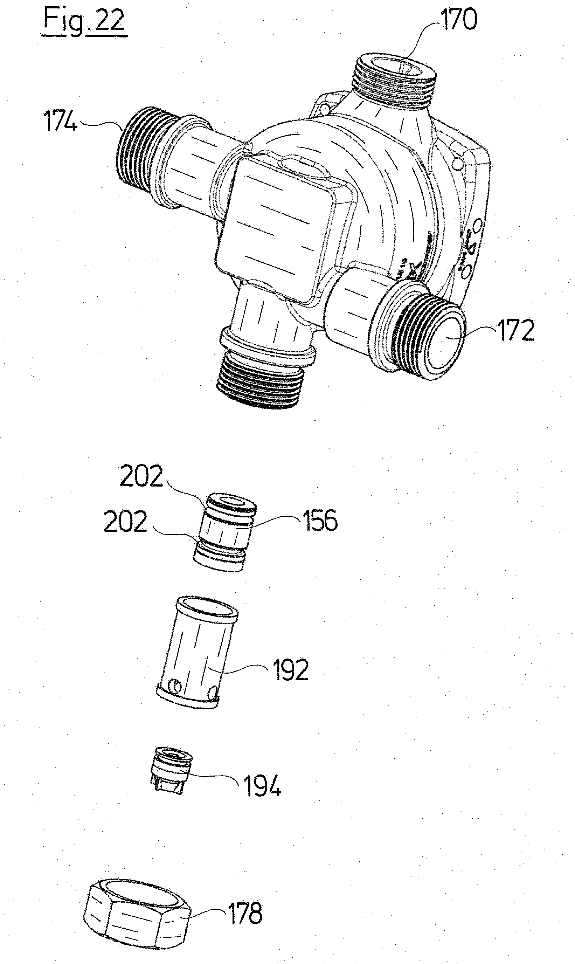

Anhand der Fig. 20 - 24 wird eine Alternative zu der anhand der Fig. 2 -5 beschriebenen Schalteinrichtung 28 beschrieben. Auch bei der in den Fig. 20 - 24 gezeigten Schalteinrichtung 155 handelt es sich um ein Umschaltventil zum Umschalten des Strömungsweges zwischen zwei hydraulischen Kreisen. Entsprechend der Ausgestaltung gemäß Fig. 2 bis 5 ist auch bei der Ausführungsform gemäß Fig. 20 - 24 lediglich ein Ventilelement 156 vorgesehen. Die in den Fig. 20 - 24 gezeigte Schalteinrichtung 155 integriert das in Fig. 1 gezeigte Umwälzpumpenaggregat 2 und den in Fig. 1 gezeigten Knoten- bzw. Abzweigpunkt 14 in eine Baueinheit. Das heißt die in Fig. 20 gezeigte Kombination aus Umwälzpumpenaggregat 2 und Schalteinrichtung 155 ist zum Einbau an dem Abzweigpunkt 14 des in Fig. 1 gezeigten hydraulischen Systems vorgesehen.

Das in Fig. 20 gezeigte Umwälzpumpenaggregat 2 besteht aus einem elektrischen Antriebsmotor 158, welcher in einem Statorgehäuse angeordnet ist und ein Laufrad 160 antreibt. Das Laufrad 160 ist in einem Pumpengehäuse 162 gelegen, welches mit dem Statorgehäuse, in welchem sich der Antriebsmotor 158 befindet, verbunden ist. An der dem Pumpengehäuse 162 abgewandten Axialseite des Antriebsmotors 158 ist das Elektronikgehäuse 4 angeordnet, welches wie anhand von Fig. 1 beschrieben, die Regel- bzw. Steuerelektronik für den Antriebsmotor 158, insbesondere einen Frequenzumrichter zur Drehzahlstellung beherbergt. Darüber hinaus kann, wie anhand von Fig. 1 beschrieben, das Elektronikgehäuse 4 gleichzeitig auch die Steuereinrichtung 26 beinhalten, welche die Umschaltfunktion in der nachfolgend beschriebenen Weise durch Drehzahlanpassung des Antriebsmotors 158 steuert.

Wie in der Ausführungsform gemäß Fig. 19 ist die Schalteinrichtung bzw. das Umschaltventil 155 bei diesem Ausführungsbeispiel direkt in das Pumpengehäuse 162 integriert. Das Pumpengehäuse 162 weist in seinem Inneren einen Druckraum 164 auf, in welchem das Laufrad 160 rotiert. Ferner ist ein Saugraum 166 in den Pumpengehäuse 162 ausgebildet, in welchen die saugseitigen Anschlüsse des Umwälzpumpenaggregates 2 münden und welcher mit dem Saugmund 168 des Laufrades 160 in Verbindung steht. Das Pumpengehäuse 162 weist drei Anschlüsse auf, einen druckseitigen Anschluss 170, welcher mit dem Druckraum 164 in Verbindung steht, sowie zwei Sauganschlüsse 172 und 174. Der saugseitige Anschluss 172 dient der Verbindung mit dem ersten hydraulischen Kreis A und der saugseitige Anschluss 174 dient zur Verbindung mit dem zweiten hydraulischen Kreis B, wie sie in Fig. 1 gezeigt sind. Die saugseitigen Anschlüsse 172 und 174 münden in die Umschalt- bzw. Schalteinrichtung 155. Die Schalteinrichtung 155 stellt die Verbindung von den Sauganschlüssen 172 und 174 zu dem Saugraum 166 her, wobei durch Verlagerung des Ventilelementes 156 in der Schalteinrichtung 155 wahlweise der Anschluss 172 oder der Anschluss 174 mit dem Saugraum 166 in Verbindung gebracht werden kann. So kann die Strömung zwischen dem ersten hydraulischen Kreis A und dem zweiten hydraulischen Kreis B umgeschaltet werden.

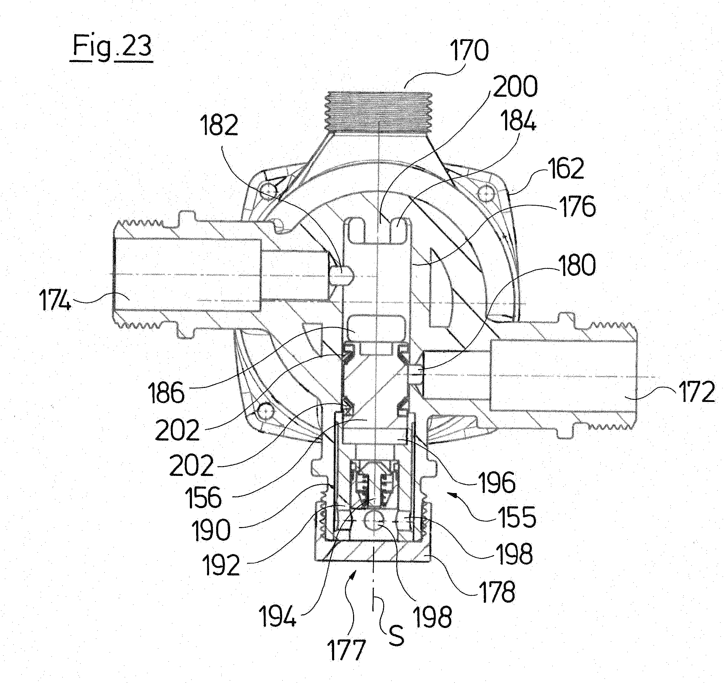

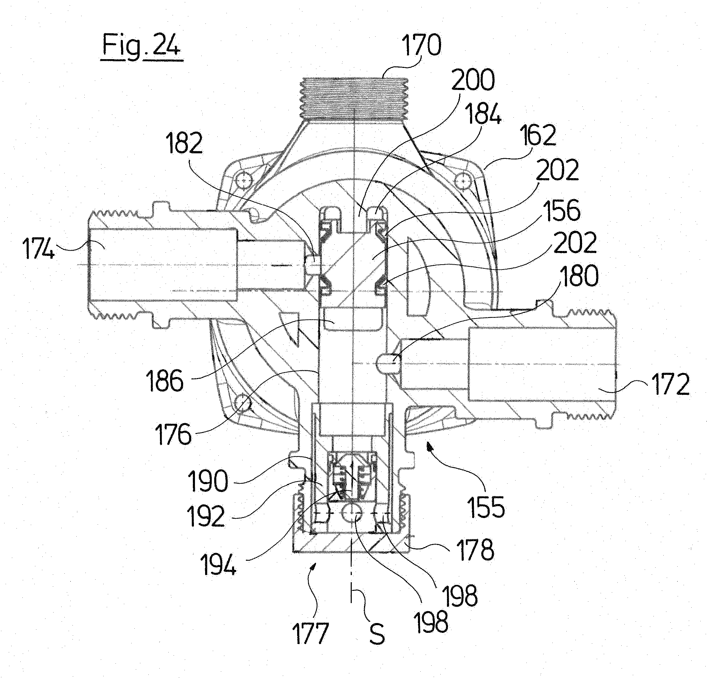

Die Schalteinrichtung 155 weist ein sich entlang der Längsachse S erstreckendes Führungsrohr 176 auf, in welchem das Ventilelement 156, welches eine zylindrische Grundform aufweist, in Richtung der Längsachse S beweglich geführt ist. Das Führungsrohr 176 ist an einem ersten Axialende 177 offen ausgebildet und durch ein Verschlusselement in Form einer Schraubkappe 178 verschlossen. Die von dem Verschlusselement 178 verschlossene Öffnung dient als Montageöffnung. Der saugseitige Anschluss 172 endet an einer Öffnung 180 in der Umfangswandung des Führungsrohres 176. Der saugseitige Anschluss 174 endet in einer Öffnung 182, welche ebenfalls in der Umfangswand des Führungsrohres 176 gelegen ist. Dabei sind die Öffnungen 180 und 182 in axialer Richtung in Richtung der Längsachse S des Führungsrohes 146 voneinander beabstandet. In seiner in Fig. 23 gezeigten ersten axialen Endlage überdeckt der Ventilkörper 156 die Öffnung 180, während er in seiner zweiten axialen Endlage, welche in Fig. 24 gezeigt ist, die Öffnung 182 überdeckt und die Öffnung 180 freigibt. So können wechselseitig durch Verlagerung des Ventilkörpers 156 die Öffnungen 180 und 182 geöffnet werden, so dass wechselseitig die Anschlüsse 172 und 174 mit dem Inneren des Führungsrohres 176 in fluidleitende Verbindung gebracht werden können.

Das Führungsrohr 176 weist darüber hinaus drei Öffnungen 184, 186 und 188 auf, welche ebenfalls in Richtung der Längsachse S axial voneinander beabstandet sind und das Innere des Führungsrohres 176 mit dem Saugraum 166 verbinden. Die Öffnungen 184 und 186 sind direkt mit dem Inneren des Führungsrohres 176 verbunden. Die untere Öffnung 188 hingegen mündet in einen Ringraum 190, welcher im Inneren des Führungsrohres 176 durch eine eingesetzte Hülse 192 gebildet wird. Die Hülse 192 ist von dem offenen ersten Axialende her in das Führungsrohr 176 eingesetzt und weist einen Außenumfang auf, welcher kleiner ist als der Innenumfang des Führungsrohres 176 an diesem ersten Axialende ist, so dass zwischen dem Innenumfang des Führungsrohres 176 und dem Außenumfang der Hülse 192 der Ringraum 190 gebildet wird. Die Hülse 192 dient gleichzeitig als Ventilträger und beherbergt ein federvorgespanntes Rückschlagventil 194. Das Rückschlagventil 194 liegt so am ersten Axialende des Führungsrohres 176. Zwischen dem Rückschlagventil 194 und dem Ventilelement 156 ist ein Druckraum 196 ausgebildet. Das Rückschlagventil 194 ist so angeordnet, dass es gegen den Druck in dem Druckraum 196 schließt, das heißt von dem Druck in dem Druckraum 196 gegen die Federvorspannung geöffnet werden kann. An der dem Druckraum 156 abgewandten Seite des Rückschlagventils 194 sind in der Hülse 192 Öffnungen 198 zu dem Ringraum 190 hin ausgebildet. Das heißt diese dem Ventilelement 156 abgewandte Seite des Rückschlagventils 194 steht mit dem Saugraum 166 in Verbindung.

An dem dem offenen Ende abgewandten zweiten Axialende des Führungsrohres 176 ist in dessen Inneren ein Anschlag 200 angeorndet. Der Anschlag 200 ist so gelegen, dass, wenn das Ventilelement 156 in seiner zweiten in Fig. 24 gezeigten Endlage an den Anschlag 200 anschlägt, die Öffnung 184 zum Inneren des Führungsrohres 176 an dessen Axialende geöffnet bleibt. So ist stets die dem Anschlag 200 zugewandte Axialseite des Ventilelementes 156 in druckübertragender Verbindung mit dem Saugraum 166.

Das Ventilelement 156 ist mit Spiel im Inneren Führungsrohres 176 geführt. Zur Abdichtung weist das Ventilelement 156 in zwei axial beabstandeten ringförmigen Nuten zwei Dichtungen 202 auf, welche ein v-förmiges Profil aufweisen. Die Dichtungen 202 sind so ausgebildet, dass sie sich erst bei einem vorbestimmten Druck in dem Bereich, welcher zwischen dem Außenumfang des Ventilelementes 156 und der gegenüberliegenden Innenwandung des Führungsrohres 26 zwischen den beiden Dichtungen 202 gelegen ist, entfalten und an der Innenwandung des Führungsrohres 176 dichtend anliegen. Das heißt die Dichtungen 202 kommen nur dann dichtend zur Anlage, wenn zwischen Ihnen ein ausreichend hoher Druck wirkt, wie es beispielsweise dann der Fall sein kann, wenn eine der Öffnungen 180 und 182 zwischen den Dichtungen 202 liegt. Die Dichtungen 202 wirken somit so, dass sie bei Bewegung des Ventilelementes 156 nicht dichtend an dem Führungsrohr 176 anliegen, sondern lediglich in den beschriebenen Endlagen des Ventilelementes 156 in dichtender Anlage mit dem Führungsrohr 176 treten.

Zum Betrieb ist das Pumpengehäuse 162 mit der Schalteinrichtung 155 in der in Fig. 20 - 24 gezeigten Einbaulage auszurichten, so dass die Längsachse S des Führungsrohres vertikal gerichtet ist. Dies bewirkt, dass das Ventilelement 156 im drucklosen Zustand durch die Schwerkraft in die in Fig. 23 gezeigte erste, untere Endlage fällt. Ausgehend von dieser Endlage kann das Pumpenaggregat 2 durch entsprechende Ansteuerung des Antriebsmotors 158 über die Steuereinrichtung 26 so betätigt werden, dass das Ventilelement 156 wahlweise in der in Fig. 23 gezeigten ersten Endlage verbleibt, in welcher der hydraulische Kreis A durch die Heizkörper 10 verschlossen ist und der hydraulischen Kreis B durch den Sekundärwärmetauscher 8 geöffnet ist, oder in seine zweite in Fig. 24 gezeigte Endlage bewegt wird, in welcher der erste hydraulische Kreis A geöffnet und der zweite hydraulische Kreis B verschlossen ist. Dies erfolgt wie folgt.

Wenn das Pumpenaggregat mit langsamer Drehzahl bzw. langsamer Drehzahlerhöhung bzw. Beschleunigung gestartet wird, baut sich über den Abzweigpunkt 12 in dem geschlossenen ersten hydraulischen Kreis A ein Druck auf. Aufgrund des Spiels des Ventilelementes 156 in dem Führungsrohr 156 pflanzt sich dieser Druck durch einen Spalt in Form eines Leckstroms zwischen dem Ventilkörper 156 und der Innenwandung des Führungsrohres 176 in den Druckraum 196 hinein fort. Gleichzeitig herrscht an der entgegengesetzten Axialseite des Ventilelementes 156 der Druck im Saugraum 166, da dieser über die Öffnungen 182 und 186 mit dem Innenraum des Führungsrohres 176 in Verbindung ist. Dieser Druck ist geringer als der sich in dem ersten hydraulischen Kreis A aufbauende Druck, so dass durch den Leckagestrom, welcher durch den Anschluss 172, den Spalt zwischen Ventilelement 156 und Führungsrohr 176 in den Druckraum 196 strömt, das Ventilelement 156 nach oben in seine in Fig. 24 gezeigte zweite Endlage bewegt wird. In dieser zweiten Endlage ist nun die Öffnung 182 von dem Ventilelement 156 verschlossen, während die Öffnung 180 zu dem Anschluss 172 geöffnet ist. Ferner gibt das Ventilelement 156 dann die Öffnung 186 zu dem Saugraum 166 frei, so dass eine direkte Verbindung des Anschlusses 172 zu dem Saugraum 166 geschaffen wird. Gleichzeitig bleibt die Öffnung 184 zu dem Saugraum 166 geöffnet, so dass an dem oberen Axialende des Ventilelementes 156 weiterhin ein Sog wirkt. Gleichzeitig wird das Ventilelement 156 durch den sich nun im zweiten hydraulischen Kreis B aufbauenden Druck über den Anschluss 174 radial mit Druck beaufschlagt und so gegen die Innenwandung des Führungsrohres 176 gedrückt. Durch diesen Druck falten sich auch die Dichtungen 202 auseinander und führen zu einer Abdichtung des Spaltes zwischen Ventilelement 156 und der Innenwandung des Führungsrohres 176. So verbleibt das Ventilelement 156 dann in der in Fig. 24 gezeigten Schaltstellung, nämlich oberen Ventilstellung, in welcher der ersten hydraulische Kreis A, welcher im Beispiel in Fig. 1 einen Heizkreis bildet, geöffnet ist. Wenn das Pumpenaggregat 2 ausgeschaltet wird, wird das System drucklos und das Ventilelement 156 fällt schwerkraftbedingt wieder in seine in Fig. 23 gezeigte erste Endlage.

Wenn nun das Pumpenaggregat 2 mit einer hohen Drehzahl oder einer schnellen Drehzahlerhöhung gestartet wird, entsteht aufgrund des hydraulischen Widerstandes in dem geöffneten hydraulischen Kreis B zunächst ein Sog bzw. Unterdruck in dem Saugraum 166, die Federvorspannung des Rückschlagventils 194 ist so gewählt, dass das Rückschlagventil 194 durch diesen Sog gegen seine Federvorspannung öffnet. Allerdings ist die Federvorspannung so gewählt, dass bei dem vorangehend beschriebenen langsamen Anfahren des Pumpenaggregates der so entstehende Sog nicht ausreicht, das Rückschlagventil 194 zu öffnen. Das Öffnen des Rückschlagventils 194 führt dazu, dass sich in dem Druckraum 196 nun kein weiterer Druck aufbauen kann, welcher das Ventilelement 156 weiter nach oben verschieben würde, und das Ventilelement 156 verbleibt im Wesentlichen in seiner in Fig. 23 gezeigten ersten Schaltstellung bzw. Endlage, so dass der zweite hydraulische Kreis B durch den Sekundärwärmetauscher 8 zur Brauchwassererwärmung geöffnet bleibt. Der am Anschluss 172 anliegende Druck reicht aber weiterhin dazu aus, die Dichtungen 202 so zur Entfaltung zu bringen, dass sie das Ventilelement 156 gegen die Innenwandung des Führungsrohres 176 abdichten, so dass der Leckstrom durch den Anschluss 172 in dem Druckraum 196 im Wesentlichen unterbrochen wird. Es findet kein Druckaufbau in dem Druckraum 196 statt und auch bei weiterer Drehzahländerung bzw. Drehzahlerhöhung verlagert sich das Ventilelement 156 nicht in die in Fig. 24 gezeigte Endposition.

Es werden somit zwei stabile Schaltstellungen geschaffen, welche jeweils, solange das Pumpenaggregat 2 in Betrieb sind, selbsthaltend sind. Je nachdem, mit welchem Drehzahlverlauf das Pumpenaggregat 2 aus der Ruhelage angefahren wird, kann das Ventilelement 156 in eine von zwei möglichen Schaltstellungen bewegt werden und somit ein Umschalten zwischen den hydraulischen Kreisen A und B erreicht werden.

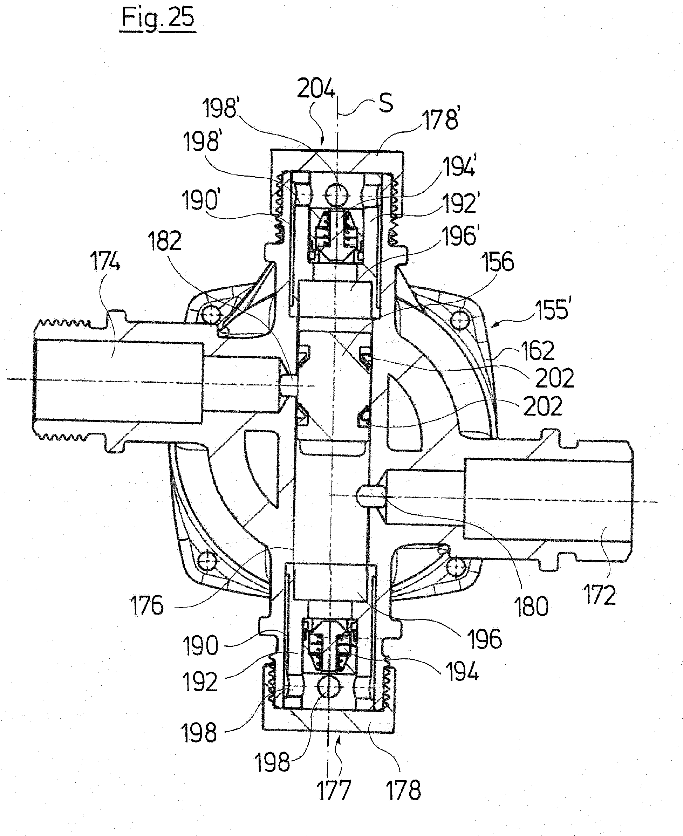

Die anhand von Fig. 20 - 24 beschriebene Ausführungsform erfordert eine Ausrichtung der Achse S in vertikaler Richtung, so dass das Ventilelement 156 durch Schwerkraft in seine erste Endlage zurückfallen kann, oder die Anordnung eines Rückstellelementes wie einer Feder. Alternativ kann ein hydraulischer Antrieb zur Rückstellung des Ventilelementes vorgesehen sein. Fig. 25 zeigt nun eine Variante, bei welcher das Ventilelement 156 druckgesteuert in seine erste Endlage zurückbewegt werden kann, so dass keine vertikale Ausrichtung der Achse S erforderlich ist. Die Schalteinrichtung 155' entspricht im Wesentlichen Teilen der Schalteinrichtung 155, welche anhand der Fig. 20 - 24 beschrieben wurde. Insbesondere das erste Axialende 177 des Führungsrohres 176 mit dem dort angeordneten Rückschlagventil 194 ist identisch ausgebildet. Der Unterschied der Ausgestaltung gemäß Fig. 25 zu der vorangehend beschriebenen Ausführungsform besteht in der Ausgestaltung des zweiten Axialendes 204 des Führungsrohres 176. Bei dem Ausführungsbeispiel gemäß Fig. 25 ist dieses zweite Axialende 204 spiegelbildlich zu dem ersten Axialende 177 ausgebildet. Das heißt auch dieses Axialende ist offen ausgebildet und durch ein Verschlusselement 178' verschlossen. Im Inneren des Führungsrohres 176 ist an diesem Ende eine Hülse 192' mit einem darin angeordneten Rückschlagventil 194' angeordnet. Die Hülse 192' umgebend ist ein Ringraum 190' ausgebildet, welcher über eine hier nicht gezeigte Öffnung mit dem Saugraum 166 des Umwälzpumpenaggregates 2 verbunden ist. Der Saugraum 166 und der übrige Teil des Umwälzpumpenaggregates 2 sind genauso ausgebildet, wie anhand der Fig. 20 - 24 beschrieben. Die Hülse 192' ist so gestaltet, dass dem Ventilelement 156 zugewandt, wenn dieses sich in seiner zweiten an die Hülse 192' angrenzenden Endlage befindet, ein Druckraum 196' verbleibt. Das Rückschlagventil 194' ist so angeordnet, dass es gegen den Druckraum 196' schließt, das heißt durch einen ausreichend hohen Druck in dem Druckraum 196' gegen die Federvorspannung geöffnet werden kann. An der dem Druckraum 196' und dem Ventilelement 156 abgewandten Seite des Rückschlagventils 194' ist das Innere der Hülse 192' durch Öffnungen 198' mit dem Ringraum 190' und über diesen mit dem Saugraum 166 verbunden.

Das Ventilelement 156 kann auch bei der Ausführungsform gemäß Fig. 25 in derselben Weise, wie anhand von Fig. 20 - 24 beschrieben wurde, in seine zweite, in Fig. 25 gezeigte Endstellung bewegt werden. Alternativ kann das Ventilelement 156 durch ein langsames Anfahren des Umwälzpumpenaggregates 2 in seiner ersten Endstellung bzw. Schaltstellung verbleiben, welche der in Fig. 23 gezeigten Endlage entspricht. Im Unterschied zu dem Ausführungsbeispiel gemäß Fig. 20 und 24 ist es bei der Ausführungsform gemäß Fig. 25 möglich, das Ventilelement 156 nicht durch Schwerkraft sondern hydraulisch zurück in seine erste Endlage zu bewegen. Hierzu wird beim Betrieb des Umwälzpumpenaggregat 2 dessen Drehzahl von der Steuereinrichtung 26 soweit gesenkt, dass der Druck in dem Anschluss 174, welcher über den geschlossenen zweiten hydraulischen Kreis B übertragen wird, soweit abfällt, dass die Dichtungen 202 sich entspannen und sich aus der dichtenden Anlage an dem Führungsrohr 176 lösen. Gleichzeitig reduziert sich der Sog an der Saugseite des Umwälzpumpenaggregates, so dass die Rückschlagventile 194 und 194' schließen. So wird ein Leckstrom aus dem Anschluss 124 in den Druckraum 196'ermöglicht, welcher dann dazu führt, dass das Ventilelement 156 in Richtung des ersten Axialendes 177 zurückbewegt wird. Nach einer vorbestimmten Zeit kann die Drehzahl des Umwälzpumpenaggregates 2 wieder derart erhöht werden, dass in dem Saugraum 166 ein derartiger Sog erzeugt wird, dass die Rückschlagventile 194 und 194' wieder öffnen, was eine Bewegung des Ventilelementes 156 bis in seine erste Endlage an der Hülse 192 ermöglicht.

Das Rückschlagventil 194' dient dazu, die Bewegung des Ventilelementes 156 in die in Fig. 25 gezeigte zweite Endlage zu bewirken. Wenn das Umwälzpumpenaggregat mit einer großen Drehzahl oder einer großen Beschleunigung gestartet wird, entsteht im Saugraum 166 ein derartiger Unterdruck, dass nicht nur das Rückschlagventil 194 sondern auch das Rückschlagventil 194' öffnet. So hat das geöffnete Rückschlagventil 194' dann dieselbe Funktion wie die Öffnung 184 in dem Ausführungsbeispiel gemäß Fig. 20 - 24. So wirkt bei der Bewegung des Ventilelementes 156 in die Schaltstellung am zweiten Axialende 204 in dem Druckraum 196' der saugseitige Druck aus dem Saugraum 166.

Die Ausführungsform gemäß Fig. 25 ermöglicht es somit, das Ventilelement 156 unabhängig von der Schwerkraft gezielt zwischen seinen beiden Endlagen hin und her zu bewegen, wobei die Bewegung gezielt durch entsprechende Ansteuerung des Antriebsmotors 158 erfolgt. Über den Antriebsmotor 158 werden die erforderlichen Drehzahlverläufe eingestellt, um das Ventilelement 156 in der beschriebenen Weise bewegen zu können. Insbesondere ist es auch möglich, bei einem Blockieren des Ventilelementes 156 dies wechselseitig von beiden Seiten mit Druck zu beaufschlagen, um das Blockieren zu lösen. Bei dieser Ausführungsform ist es darüber hinaus hilfreich, wenn der Steuereinrichtung 26 die Lage des Ventilelementes 156 bekannt ist. Ein mit entsprechender Sensorik ausgestattetes Umwälzpumpenaggregat 2 ist in der Lage, aus erfassten hydraulischen Größen und/oder elektrischen Größen den Durchfluss zu bestimmen. Da insbesondere die hydraulische Charakteristik eines Sekundärwärmetauschers 8 vorbekannt und unveränderlich ist, ist es aus hydraulischen Größen, insbesondere erfasster oder bestimmter Durchflüsse für die Steuereinrichtung 26, möglich, zu erkennen, welcher der hydraulischen Kreise A und B gerade geöffnet ist. Daran kann die Schaltstellung des Ventilelementes 156 erkannt werden. Ausgehend von der erkannten Schaltstellung des Ventilelementes 156 kann dann der Antriebsmotor in seinem Drehzahlverlauf so angesteuert werden, dass das Ventilelement 156 in eine gewünschte Schaltstellung bewegt wird, wie es vorangehend beschrieben wurde. Das hydraulische System gemäß diesem Ausführungsbeispiel umfasst somit vorzugsweise eine hierfür ausgebildete Steuereinrichtung 26 und ein entsprechend ausgebildetes Umwälzpumpenaggregat 2, welches in der Lage ist, die erforderlichen hydraulischen Größen zu erfassen.

### Bezugszeichenliste

2 - Umwälzpumpenaggregat
4 - Elektronikgehäuse
6 - Primärwärmetauscher
8 - Sekundärwärmetauscher
10 - Heizkörper
12, 14 - Abzweigpunkte
16 - Heizungsanlage
18 - Brauchwassereingang
20 - Brauchwasserausgang
22 - Vorlaufanschluss
24 - Rücklaufanschluss
26 - Steuereinrichtung
28 - Schalteinrichtung
30 - Pumpengehäuse
32 - Motorgehäuse
34 - Antriebsmotor
36 - Laufrad
38 - druckseitiger Anschluss
40, 42 - saugseitige Anschlüsse
44,46 - saugseitige Kammern
48, 50, 50' - Trennwände
52 - Druckraum
54, 54' - Ventilelement
56 - erstes Axialende
58 - Boden
60, 60' - zweites Axialende
62, 62' - Saugmund
64 - Schulter
66 - Druckfeder
68 - Stufe
70 - Öffnungen
72 - rohrförmiger Vorsprung
74 - Stifte
76 - axiale Stirnseite
78 - Ventilblock
80 - Anschluss
82, 84 - ausgangsseitige Anschlüsse
86, 88 - Ventile
90, 92 - Ventilelemente
94, 96 - Ventilsitze
98, 100 - Druckfedern
102 - Verzögerungseinrichtung
104 - Kolben
106 - Öffnung
108, 110 - stiftförmige Verlängerungen
112 - Ventilblock
114 - Auslass
116, 118 - Einlässe
120, 120', 120" - Ventile
122, 122" - Ventile
124, 124' - Ventilelement
126, 126' - Ventilsitz
128, 128" - Ventilelement
130 - Ventilsitz
134, 136 - Druckfeder
138, 138' - Pumpengehäuse
140 - Saugraum
142 - Vorsprung
144 - Innenseite
146 - Schulter
148 - Ringspalt
150 - Stirnseite
152 - Ringfläche
154 - Innenumfang
155, 155' - Schalteinrichtung
156 - Ventilelement
158 - Antriebsmotor
160 - Laufrad
162 - Pumpengehäuse
164 - Druckraum
166 - Saugraum
168 - Saugmund
170 - druckseitiger Anschluss
172, 174 - sauseitige Anschlüsse
176 - Führungsrohr
177 - erstes Axialende
178 - Verschlusselement
180, 182 - Öffnung
184, 186, 188 - Öffnung
190, 190' - Ringraum
192, 192' - Hülse
194, 194' - Rückschlagventil
196, 196' - Druckraum
198, 198' - Öffnung
200 - Anschlag
202 - Dichtung
204 - zweites Axialende

S - Längsachse
A - erster hydraulischer Kreis
B - zweiter hydraulischer Kreis
P - gemeinsamer Zweig der hydraulischen Kreise
v, w - Öffnungsrichtungen
x - Längs- bzw. Drehachse des Pumpenaggregates

## Patentansprüche

1. Hydraulisches System mit zumindest einem mit einem Drehzahlsteller (4, 26) versehenen Umwälzpumpenaggregat (2), zumindest einem mit dem Umwälzpumpenaggregat (2) verbundenen hydraulischen Kreis (A, B) sowie zumindest einer von einem Fluid in dem hydraulischen Kreis mit Druck beaufschlagten mechanischen Schalteinrichtung (86, 88; 120, 122; 120", 122"), welche in zumindest zwei unterschiedliche Schaltstellungen bewegbar ist, wobei die zumindest eine mechanische Schalteinrichtung (28; 86, 28; 120, 122) von dem Umwälzpumpenaggregat (2) mittels einer hydraulischen Kopplung über das Fluid bewegbar ist und der Drehzahlsteller ausgebildet ist, eine Bewegung der Schalteinrichtung (86, 88; 120, 122,120", 122") zu veranlassen, indem über eine Drehzahlanpassung des Umwälzpumpenaggregates über den hydraulischen Kreis zumindest eine auf die Schalteinrichtung (86, 88; 120, 122,120", 122") wirkende und eine Bewegung der Schalteinrichtung (86, 88; 120, 122,120", 122") verursachende hydraulische Kraft erzeugt wird, **dadurch gekennzeichnet, dass** die mechanische Schalteinrichtung (28; 86, 88; 120, 122; 120", 122") derart ausgebildet ist, dass sie auf Unterschiede im Verlauf eines Druckaufbaus des Fluids bei einer Drehzahländerung des Umwälzpumpenaggregates (2) derart reagiert, dass die Schalteinrichtung (28; 86, 88; 120, 122,120", 122") sich bei einer Drehzahländerung des Umwälzpumpenaggregates (2) mit einem ersten Verlauf des Druckaufbaus in eine erste Schaltstellung und bei einer Drehzahländerung des Umwälzpumpenaggregates (2) mit einem von diesem ersten Verlauf abweichenden zweiten Verlauf des Druckaufbaus in eine zweite Schaltstellung bewegt.

2. Hydraulisches System nach Anspruch 1, **dadurch gekennzeichnet, dass** die mechanische Schalteinrichtung (28; 86, 88; 120, 122; 120", 122") derart selbsthaltend ausgebildet ist, dass sie bis zu einer vorbestimmten Drehzahl oder Drehzahländerung des Umwälzpumpenaggregates (2) in der eingenommenen Schaltstellung verbleibt.

3. Hydraulisches System nach einem der vorangehenden Ansprüche, **dadurch gekennzeichnet, dass** der Drehzahlsteller (4, 26) derart ausgebildet ist, dass durch ihn zumindest zwei unterschiedliche Drehzahlverläufe des Umwälzpumpenaggregates (2) einstellbar sind, wobei der Drehzahlsteller (4, 26) vorzugsweise derart ausgebildet ist, dass das Umwälzpumpenaggregat (2) Drehzahländerungen mit zumindest zwei verschiedenen Beschleunigungsverläufen ermöglicht.

4. Hydraulisches System nach einem der vorangehenden Ansprüche, **dadurch gekennzeichnet, dass** die Schalteinrichtung derart ausgebildet ist, dass die Bewegungen in die zumindest zwei verschiedenen Schaltstellungen mit unterschiedlichen zeitlichen Verzögerungen erfolgen, wobei vorzugsweise die Bewegungen entlang unterschiedlich langer Wege und/oder entgegen unterschiedlich starker Dämpfungen, Trägheitskräfte und/oder Vorspannkräfte erfolgen.

5. Hydraulisches System nach einem der vorangehenden Ansprüche, **dadurch gekennzeichnet dass** das Umwälzpumpenaggregat (2) mit zumindest zwei hydraulischen Kreisen (A, B) verbunden ist und die mechanische Schalteinrichtung (28; 86, 88; 120, 122; 120", 122") über zumindest einen der hydraulischen Kreise derart mit Fluiddruck beaufschlagt ist, dass die Schalteinrichtung (28; 86, 88; 120, 122; 120", 122") mittels der von dem Fluiddruck erzeugten Kräfte bewegbar ist.

6. Hydraulisches System nach einem der vorangehenden Ansprüche, **dadurch gekennzeichnet, dass** das Umwälzpumpenaggregat (2) mit zumindest zwei hydraulischen Kreisen (A, B) verbunden ist und die zumindest eine mechanische Schalteinrichtung (28; 86, 88; 120, 122; 120", 122") als zumindest ein Ventil mit zumindest einem beweglichen Ventilelement (54; 54'; 90, 92; 124, 128,124", 128") zur Änderung des Verhältnisses der Durchflüsse durch die zumindest zwei hydraulischen Kreise (A, B) und insbesondere zum Umschalten eines Strömungsweges zwischen den zumindest zwei hydraulischen Kreisen (A, B) ausgebildet ist.

7. Hydraulisches System nach Anspruch 5 oder 6, **dadurch gekennzeichnet, dass** die Schalteinrichtung (28) zumindest eine erste Steuerfläche (64) aufweist, auf welche ein Fluiddruck in einem ersten der hydraulischen Kreise (A), vorzugsweise ein Fluiddruck am Ausgang des ersten hydraulischen Kreises (A), wirkt, und zumindest eine zweite Steuerfläche (60; 76) aufweist, auf welche ein Fluiddruck in einem zweiten der hydraulischen Kreise (B) oder an der Druckseite des Umwälzpumpenaggregates (2) wirkt.

8. Hydraulisches System nach Anspruch 7, **dadurch gekennzeichnet, dass** die Steuerflächen (64, 60; 76) mit dem zumindest einen Ventilelement (54; 54') derart verbunden sind, dass ein auf die Steuerflächen (64, 60; 76) wirkender Fluiddruck zumindest eine auf das Ventilelement (54; 54') wirkende Kraft bewirkt, welche zumindest teilweise in Richtung einer Bewegungsachse (x) des Ventilelementes (54; 54') gerichtet ist.

9. Hydraulisches System nach Anspruch 6 oder 7, **gekennzeichnet dadurch, dass** die erste Steuerfläche (64) größer als die zweite Steuerfläche (60; 76) ist.

10. Hydraulisches System nach einem der Ansprüche 7 bis 9, **dadurch gekennzeichnet, dass** die erste (64) und die zweite (60; 76) Steuerfläche derart angeordnet sind, dass die von dem Fluiddruck an der ersten und der zweiten Steuerfläche erzeugten Kräfte zumindest teilweise einander entgegengesetzt gerichtet sind.

11. Hydraulisches System nach einem der Ansprüche 7 bis 10, **dadurch gekennzeichnet, dass** die erste (64) und die zweite (60; 76) Steuerfläche in dem hydraulischen System derart platziert und dimensioniert sind, dass bei einer Drehzahländerung des Umwälzpumpenaggregates (2) ein Druckaufbau an der ersten Steuerfläche (64) langsamer erfolgt als an der zweiten Steuerfläche (60; 76), wobei vorzugsweise bei einer ersten schnelleren Drehzahländerung der schnellere Druckanstieg an der zweiten Steuerfläche (60; 76) eine Bewegung der Schalteinrichtung (28) bewirkt, während bei einer zweiten relativ langsameren Drehzahländerung ein Druckaufbau an der ersten (64) und zweiten (60; 76) Steuerfläche derart langsam erfolgt, dass ein Kräftegleichgewicht der auf die Steuerflächen (64, 60; 76) wirkenden Kräfte erhalten bleibt.

12. Hydraulisches System nach einem der vorangehenden Ansprüche, **dadurch gekennzeichnet, dass** die Schalteinrichtung (28; 86, 88; 120, 122; 120", 122") zusätzlich durch Schwerkraft, mit einer Magnet- und/oder Federkraft beaufschlagt ist, welche in der Richtung einer Bewegungsachse der Schalteinrichtung (28; 86, 88; 120, 122,120", 122") wirkt.

13. Hydraulisches System nach Anspruch 12 und einem der Ansprüche 9 bis 11, **dadurch gekennzeichnet, dass** die Schwer-, Magnet- und/oder Federkraft einer von dem Fluiddruck auf die zweite Steuerfläche wirkenden Kraft zumindest teilweise entgegengesetzt gerichtet ist.

14. Hydraulisches System nach einem der Ansprüche 6 bis 13, **dadurch gekennzeichnet, dass** das zumindest eine Ventilelement (54, 54') als beweglicher Hohlzylinder ausgebildet ist, wobei dessen erstes Axialende (56) eine mit dem zweiten hydraulischen Kreis (B) verbindbare Eintrittsöffnung bildet, der Hohlzylinder vorzugsweise in seiner Umfangswandung zumindest eine zweite Eintrittsöffnung (70) aufweist, welche mit dem ersten hydraulischen Kreis (A) verbindbar ist, und ein zweites Axialende (60, 60') des Hohlzylinders eine Austrittsöffnung bildet, welche mit einem Eingang des Umwälzpumpenaggregates (2) verbunden ist.

15. Hydraulisches System nach Anspruch 14, **dadurch gekennzeichnet, dass** das zweite Axialende (60, 60') des Hohlzylinders (54, 54') mit einem Saugmund (62, 62') eines Laufrades (36) des Umwälzpumpenaggregates (2) in Verbindung ist.

16. Hydraulisches System nach Anspruch 14 oder 15 und einem der Ansprüche 7 bis 12, **dadurch gekennzeichnet, dass** die erste (64) und die zweite (60; 76) Steuerfläche mit dem Hohlzylinder (54, 54') kraftübertragend verbunden sind, wobei vorzugsweise die erste (64) und/oder die zweite (60; 76) Steuerfläche an dem Hohlzylinder (54, 54') ausgebildet sind und insbesondere von einer axialen Stirnfläche (60) des Hohlzylinders (54) gebildet sind.

17. Hydraulisches System nach einem der Ansprüche 14 bis 16, **dadurch gekennzeichnet, dass** die zweite Steuerfläche (60; 76) von zumindest einem Flächenelement gebildet ist, welches im Druckbereich (52) des Umwälzpumpenaggregates (2) gelegen ist und vorzugsweise von einem Laufrad (36) des Umwälzpumpenaggregates (2) beabstandet ist.

18. Hydraulisches System nach einem der Ansprüche 6 bis 13, **dadurch gekennzeichnet, dass** das Ventilelement (156) der mechanischen Schalteinrichtung (155) als ein beweglicher Schieber ausgebildet ist, dessen in Bewegungsrichtung (S) erste axiale Stirnseite eine erste Steuerfläche und dessen in Bewegungsrichtung (S) zweite axiale Stirnseite eine zweite Steuerfläche bildet, welche mit dem Fluiddruck aus einem der hydraulischen Kreise (A, B), einem Fluiddruck an der Saugseite des Umwälzpumpenaggregates (2) oder einem Fluiddruck an der Druckseite des Umwälzpumpenaggregates (2) beaufschlagt sind.

19. Hydraulisches System nach Anspruch 18, **dadurch gekennzeichnet, dass** das Ventilelement (156) in einer ersten Schaltstellung den ersten hydraulischen Kreis (A) und in einer zweiten Schaltstellung den zweiten hydraulischen Kreis (B) verschließt, wobei das Ventilelement (156) die hydraulischen Kreise (A, B) mit einer sich parallel zu der Bewegungsrichtung (S) erstreckenden Fläche verschließt, welche vorzugsweise von zumindest einer Dichtung (202) begrenzt ist, welche derart beweglich ist, dass sie abhängig von dem an der Fläche anliegenden Fluiddruck in dichtende Anlage tritt.

20. Hydraulisches System nach Anspruch 18 oder 19, **dadurch gekennzeichnet, dass** die erste und/oder die zweite Steuerfläche jeweils einem Druckraum (196, 196') zugewandt ist, an welchem ein Ventil (194, 194') gelegen ist, welches ausgebildet ist, eine Druckbeaufschlagung des Druckraumes mit einem Fluiddruck aus einem der hydraulischen Kreise (A, B), der Saugseite (166) des Umwälzpumpenaggregates (2) oder der Druckseite des Umwälzpumpenaggregates (2) zu steuern, wobei das Ventil (194, 194') vorzugsweise druckabhängig öffnet.

21. Hydraulisches System nach einem der Ansprüche 18 bis 20, **dadurch gekennzeichnet, dass** die Schalteinrichtung (155) derart ausgebildet ist, dass zumindest eine der beiden Steuerflächen zur Bewegung des Ventilelementes (156) mit einem Fluiddruck aus demjenigen hydraulischen Kreis (A, B) beaufschlagt wird, welcher aktuell von dem Ventilelement (156) zumindest teilweise verschlossen ist.

22. Hydraulisches System nach einem der Ansprüche 1 bis 13, **dadurch gekennzeichnet, dass** die mechanische Schalteinrichtung zumindest ein erstes (90; 124) und ein zweites (92; 124) bewegliches Ventilelement aufweist, von denen das erste Ventilelement (90; 124) in einem ersten (A) der hydraulischen Kreise und das zweite Ventilelement (92; 128) in einem zweiten (B) der hydraulischen Kreise angeordnet ist, wobei das erste (90; 124) und das zweite Ventilelement (92; 128) unterschiedliche dynamische Eigenschaften aufweisen, insbesondere in ihrer Bewegung unterschiedlich stark gedämpft oder verzögert reagierend ausgebildet sind und/oder unterschiedlich starke der Bewegungsrichtung entgegengesetzte Vorspannkräfte aufweisen.

23. Hydraulisches System nach Anspruch 22, **dadurch gekennzeichnet, dass** das erste und das zweite Ventilelement (90; 124, 92; 128) derart gekoppelt sind, dass sich stets nur ein Ventilelement (90; 124, 92; 128) in seiner geöffneten Schaltstellung oder stets nur ein Ventilelement in seiner geschlossenen Schaltstellung befinden kann.

24. Hydraulisches System nach einem der vorangehenden Ansprüche, **dadurch gekennzeichnet, dass** es als hydraulisches Heizungs- und/oder Kühlsystem ausgebildet ist, wobei vorzugsweise einer (B) der zumindest zwei hydraulischen Kreise durch einen Sekundärwärmetauscher (8) zum Temperieren von Brauchwasser und einer (A) der zumindest zwei hydraulischen Kreise durch zumindest ein zu temperierendes Objekt (10) verläuft.

25. Hydraulisches System nach einem der vorangehenden Ansprüche, **dadurch gekennzeichnet, dass** das Umwälzpumpenaggregat (2) und die zumindest eine Schalteinrichtung (28; 86, 88; 120, 122; 120", 122") in einer gemeinsamen Baueinheit, insbesondere einer integrierten hydraulischen Baueinheit für eine Kompaktheizungsanlage angeordnet sind.

26. Verfahren zum Betrieb eines hydraulischen Kreislaufsystems mit zumindest einem Umwälzpumpenaggregat (2) und zumindest einer hydraulisch mit dem Umwälzpumpenaggregat (2) verbundenen mechanischen Schalteinrichtung (28; 86, 88; 120, 122), welche in zumindest zwei Schaltstellungen bewegbar ist, wobei eine Bewegung der Schalteinrichtung (28; 86, 88; 120, 122; 120", 122") zwischen einer ersten und einer zweiten Schaltstellung durch eine Drehzahlanpassung des Umwälzpumpenaggregates erfolgt, durch welche zumindest eine auf die Schalteinrichtung (28; 86, 28; 120, 122; 120", 122") wirkende und eine Bewegung der Schalteinrichtung (28; 86, 28; 120, 122; 120", 122") verursachende hydraulische Kraft erzeugt wird, **dadurch gekennzeichnet, dass** eine Bewegung der Schalteinrichtung (28; 86, 88; 120, 122; 120", 122") zwischen der ersten und der zweiten Schaltstellung in Abhängigkeit eines von dem Umwälzpumpenaggregat (2) erzeugten Verlaufs eines Druckaufbaus derart erfolgt, dass bei einem ersten Verlauf des Druckaufbaus die Schalteinrichtung (28; 86, 88; 120, 122; 120", 122") in eine erste Schaltstellung und bei einem zweiten von dem ersten Verlauf abweichenden Verlauf des Druckaufbaus die Schalteinrichtung (28; 86, 88; 120, 122; 120", 122") in eine zweite Schaltstellung bewegt wird.

## Claims

1. A hydraulic system with at least one circulation pump assembly (2) which is provided with a speed controller (4, 26), with at least one hydraulic circuit (A, B) which is connected to the circulation pump assembly (2) as well as with at least one mechanical switch device (86, 88; 120, 122; 120", 122") which is subjected to pressure by a fluid in the hydraulic circuit and which can be moved into at least two different switch positions, wherein
the at least one mechanical switch device (28; 86, 28; 120, 122) can be moved by the circulation pump assembly (2) via the fluid by way of a hydraulic coupling, and the speed controller is designed to initiate a movement of the switch device (86, 88; 120, 122; 120", 122") by way of at least one hydraulic force which acts upon the switch device (86, 88; 120, 122'; 120", 122") and which causes a movement of the switch device (86, 88; 120,122; 120", 122") being produced via the hydraulic circuit via a speed adaptation of the circulation pump assembly, **characterised in that** the mechanical switch device (28; 86, 88; 120, 122; 120", 122") is designed in a manner such that it reacts to differences in the course of a pressure build-up of the fluid given a speed change of the circulation pump assembly (2), in a manner such that the switch device (28; 86, 88; 120, 122; 120", 122") moves into a first switch position given a speed change of the circulation pump assembly (2) with a first course of the pressure build-up, and into a second switch position given a speed change of the circulation pump assembly (2) with a second course of the pressure build-up which is different to this first course.

2. A hydraulic system according to claim 1, **characterised in that** the mechanical switch device (28; 86, 88; 120, 122; 120", 122") is designed in self-holding manner, in a manner such that it remains in the assumed switch position up to a predefined speed or speed change of the circulation pump assembly (2).

3. A hydraulic system according to one of the preceding claims, **characterised in that** the speed controller (4, 26) is designed in a manner such that at least two different speed courses of the circulation pump assembly (2) can be set by it, wherein the speed controller (4, 26) is preferably designed in a manner such that the circulation pump assembly (2) permits speed changes with at least two different acceleration courses.

4. A hydraulic system according to one of the preceding claims, **characterised in that** the switch device is designed in a manner such that the movements into the at least two different switch positions are effected with different temporal delays, wherein preferably the movements are effected along differently long paths and/or counter to differently large damping, inertia forces and/or biasing forces.

5. A hydraulic system according to one of the preceding claims, **characterised in that** the circulation pump assembly (2) is connected to at least two hydraulic circuits (A, B), and the mechanical switch device (28; 86, 88; 120, 122; 120", 122") is subjected to fluid pressure via at least one of the hydraulic circuits, in a manner such that the switch device (28; 86, 88; 120, 122; 120", 122") is movable by way of the forces which are produced by the fluid pressure.

6. A hydraulic system according to one of the preceding claims, **characterised in that** the circulation pump assembly (2) is connected to at least two hydraulic circuits (A, B) and the at least one mechanical switch device (28; 86, 88; 120, 122; 120", 122") is designed as at least one valve with at least one movable valve element (54; 54'; 90, 92; 124, 128, 124", 128") for the change of the ratio of the flows through the at least two hydraulic circuits (A, B) and in particular for switching-over a flow path between the at least two hydraulic circuits (A, B).

7. A hydraulic system according to claim 5 or 6, **characterised in that** the switch device (28) comprises at least one first control surface (64), upon which a fluid pressure in a first of the hydraulic circuits (A), preferably a fluid pressure at the exit of the first hydraulic circuit (A) acts, and at least one second control surface (60; 76), upon which a fluid pressure in a second of the hydraulic circuits (B) or at the delivery side of the circulation pump assembly (2) acts.

8. A hydraulic system according to claim 7, **characterised in that** the control surfaces (64, 60; 76) are connected to the at least one valve element (54, 54') in a manner such that a fluid pressure acting upon the control surfaces (64, 60; 76) effects at least one force which acts upon the valve element (54; 54') and which is directed at least partly in the direction of a movement axis (X) of the valve element (54; 54').

9. A hydraulic system according to claim 6 or 7, **characterised in that** the first control surface (64) is larger than the second control surface (60; 76).

10. A hydraulic system according to one of the claims 7 to 9, **characterised in that** the first (64) and the second (60; 76) control surface are arranged in a manner such that the forces which are produced by the fluid pressure on the first and the second control surface are at least partly directed counter to one another.

11. A hydraulic system according to one of the claims 7 to 10, **characterised in that** the first (64) and the second (60; 76) control surface, in the hydraulic system are placed and dimensioned in a manner such that given a speed change of the circulation pump assembly (2), a pressure build-up on the first control surface (64) is effected more slowly than on the second control surface (60; 76), wherein preferably with a first more rapid speed change, the more rapid pressure increase at the second control surface (60; 76) effects a movement of the switch device (28), whereas with a second relatively slower speed change, a pressure build-up on the first (64) and second (60; 76) control surface is effected so slowly that a force equilibrium of the forces acting upon the control surfaces (64; 60; 76) is maintained.

12. A hydraulic system according to one of the preceding claims, **characterised in that** the switch device (28; 86, 88; 120, 122; 120", 122") is additionally subjected to gravity force, to a magnet force and/or spring force, and these act in the direction of a movement axis of the switch device (28; 86, 88; 120, 122; 120", 122").

13. A hydraulic system according to claim 12 and one of the claims 9 to 11, **characterised in that** the gravity force, magnet force and/or spring force are directed at least partly counter to a force which acts upon the second control surface by the fluid pressure.

14. A hydraulic system according to one of the claims 6 to 13, **characterised in that** the at least one valve element (54, 54') is designed as a movable hollow cylinder, wherein its first axial end (56) forms an entry opening which can be connected to the second hydraulic circuit (B), and the hollow cylinder preferably in its peripheral wall comprises at least one second entry opening (70) which is connectable to the first hydraulic circuit (A), and a second axial end (60, 60') of the hollow cylinder forms an exit opening which is connected to an entry of the circulation pump assembly (2).

15. A hydraulic system according to claim 14, **characterised in that** the second axial end (60, 60') of the hollow cylinder (54, 54') is in connection with a suction port (62, 62') of an impeller (36) of the circulation pump assembly (2).

16. A hydraulic system according to claim 14 or 15 and one of the claims 7 to 12, **characterised in that** the first (64) and the second (60; 76) control surface are connected to the hollow cylinder (54, 54') in a force-transmitting manner, wherein preferably the first (64) and/or the second (60; 76) control surface are formed on the hollow cylinder (54, 54') and in particular are formed by an axial end-face (60) of the hollow cylinder (54).

17. A hydraulic system according to one of the claims 14 to 16, **characterised in that** the second control surface (60; 76) is formed by at least one surface element which is situated in the pressure region (52) of the circulation pump assembly (2) and is preferably distanced to an impeller (36) of the circulation pump assembly (2).

18. A hydraulic system according to one of the claims 6 to 13, **characterised in that** the valve element (156) of the mechanical switch device (155) is designed as a movable slide whose axial face side which is first in the movement direction (S) forms a first control surface and whose axial face side which is second in the movement direction (S) forms a second control surface, and these are subjected to a fluid pressure from one of the hydraulic circuits (A, B), to a fluid pressure at the suction side of the circulation pump assembly (2) or to a fluid pressure at the delivery side of the circulation pump assembly (2).

19. A hydraulic system according to claim 18, **characterised in that** the valve element (156) in a first switch position closes the first hydraulic circuit (A) and in a second switch position closes the second hydraulic circuit (B), wherein the valve element (156) closes the hydraulic circuits (A, B) with a surface which extends parallel to the movement direction (S) and which is preferably delimited by at least one seal (202), said seal being movable in a manner such that it comes into sealing contact depending on the fluid pressure bearing on the surface.

20. A hydraulic system according to claim 18 or 19, **characterised in that** the first and/or the second control surface each face a delivery chamber (196, 196'), at which a valve (194, 194') is situated, said valve being designed to control a pressure subjection of the delivery chamber to a fluid pressure from one of the hydraulic circuits (A, B), from the suction side (166) of the circulation pump assembly (2) or from the delivery side of the circulation pump assembly (2), wherein the valve (194, 194') preferably opens in a pressure-dependent manner.

21. A hydraulic system according to one of the claims 18 to 20, **characterised in that** the switch device (155) is designed in a manner such that at least one of the two control surfaces is subjected to a fluid pressure of that hydraulic circuit (A, B) which is currently at least partly closed by the valve element (156), for moving the valve element (156).

22. A hydraulic system according to one of the claims 1 to 13, **characterised in that** the mechanical switch device comprises at least one first (90; 124) and a second (92; 124) movable valve element, of which the first valve element (90; 124) is arranged in a first (A) of the hydraulic circuits and the second valve element (92; 128) in a second (B) of the hydraulic circuits, wherein the first (90; 124) and the second valve element (92; 128) have different dynamic characteristics, in particular with regard to their movement are differently greatly damped or designed reacting in a delayed manner and/or have differently large biasing forces counter to the movement direction.

23. A hydraulic system according to claim 22, **characterised in that** the first and the second valve element (90; 124, 92; 128) are coupled in a manner such that always only one valve element (90; 124, 92; 128) can be in its opened switch position or always only one valve element can be in its closed switch position.

24. A hydraulic system according to one of the preceding claims, **characterised in that** it is designed as a hydraulic heating system and/or cooling system, wherein preferably one (B) of the at least two hydraulic circuits runs through a secondary heat exchanger (8) for the temperature control of service water and one (A) of the at least two hydraulic circuits runs through at least one object (10) to be temperature controlled,

25. A hydraulic system according to one of the preceding claims, **characterised in that** the circulation pump assembly (2) and the at least one switch device (28; 86, 88; 120, 122; 120", 122") are arranged in a common construction unit, in particular an integrated hydraulic construction unit for a compact heating facility.

26. A method for the operation of a hydraulic circulation system with at least one circulation pump assembly (2) and at least one mechanical switch device (28; 86, 88; 120, 122;120",122") which is connected hydraulically to the circulation pump assembly (2) and which can be moved into at least two switch positions, wherein a movement of the switch device (28; 86, 88; 120, 122;120",122") between a first and a second switch position is effected by way of speed adaptation of the circulation pump assembly, by way of which at least one hydraulic force which acts upon the switch device (28; 86, 88; 120, 122;120",122") and causes a movement of the switch device (28; 86, 88; 120, 122;120",122") is produced, **characterised in that** a movement of the switch device (28; 86, 88; 120, 122;120",122") between the first and the second switch position is effected in dependence on a course of a pressure build-up which is produced by the circulation pump assembly (2), that the switch device (28; 86, 88; 120, 122;120",122") is moved into a first switch position given a first course of the pressure build-up, and the switch device (28; 86, 88; 120, 122; 120",122") is moved into a second switch position given a second of the pressure build-up, which is different to the first course.

## Revendications

1. Système hydraulique ayant au moins un groupe motopompe de recirculation (2) pourvu d'un régulateur de vitesse de rotation (4, 26), au moins un circuit hydraulique (A, B) relié au groupe motopompe de recirculation ainsi qu'au moins un dispositif de commutation mécanique (86, 88; 120, 122; 120", 122") soumis à une pression par un fluide présent dans le circuit hydraulique, lequel dispositif est adapté pour pouvoir être déplacé vers au moins deux positions de commutation différentes,
ledit au moins un dispositif de commutation mécanique (28 ; 86, 88 ; 120, 122) étant adapté pour pouvoir être déplacé par le groupe motopompe de recirculation (2) à l'aide d'un accouplement hydraulique par le fluide, et le régulateur de vitesse étant configuré pour causer un déplacement du dispositif de commutation (86, 88 ; 120, 122 ; 120", 122") par le fait qu'une force hydraulique est engendrée par une adaptation de la vitesse de rotation du groupe motopompe de recirculation via le circuit hydraulique, la force agissant sur le dispositif de commutation (86, 88 ; 120, 122 ; 120", 122") et causant un déplacement du dispositif de commutation (86, 88 ; 120, 122 ; 120", 122"),
**caractérisé en ce que** le dispositif de commutation mécanique (28 ; 86, 88 ; 120, 122 ; 120", 122") est configuré de façon qu'il réagisse à des différences au cours de la montée en pression du fluide lors d'un changement de vitesse de rotation du groupe motopompe de recirculation (2) de façon telle que le dispositif de commutation (28 ; 86, 88 ; 120, 122 ; 120", 122") se déplace vers une première position de commutation lors d'un changement de vitesse de rotation du groupe motopompe de recirculation (2) avec une première évolution de la montée en pression et vers une deuxième position de commutation lors d'une deuxième évolution de la montée en pression, différente de cette première évolution.

2. Système hydraulique selon la revendication 1, **caractérisé en ce que** le dispositif de commutation mécanique (28 ; 86, 88 ; 120, 122 ; 120", 122") est configuré en auto-maintien de façon telle que, jusqu'à une vitesse de rotation prédéterminée ou un changement de vitesse de rotation prédéterminé du groupe motopompe de recirculation (2), il reste dans la position de commutation atteinte.

3. Système hydraulique selon l'une des revendications précédentes, **caractérisé en ce que** le régulateur de vitesse de rotation (4, 26) est configuré de façon que, à l'aide de celui-ci, au moins deux évolutions différentes de vitesse de rotation du groupe motopompe de recirculation (2) puissent être réglées, le régulateur de vitesse de rotation (4, 26) étant configuré, de préférence, de façon que le groupe motopompe de recirculation (2) rende possible des changements de vitesse de rotation selon au moins deux évolutions d'accélération différentes.

4. Système hydraulique selon l'une des revendications précédentes, **caractérisé en ce que** le dispositif de commutation est configuré de façon que les déplacements vers lesdites au moins deux positions de commutation différentes s'effectuent avec des décalages différents dans le temps, les déplacements s'effectuant, de préférence, le long de trajets de longueurs différentes et/ou à l'encontre d'efforts d'atténuation, d'inerties et/ou d'efforts de précontrainte différemment grands.

5. Système hydraulique selon l'une des revendications précédentes, **caractérisé en ce que** le groupe motopompe de recirculation (2) est relié à au moins deux circuits hydrauliques (A, B) et que le dispositif de commutation mécanique (28 ; 86, 88 ; 120, 122 ; 120", 122") est soumis, via au moins un des circuits hydrauliques, à une pression de fluide de façon que le dispositif de commutation (28 ; 86, 88 ; 120, 122 ; 120", 122") puisse être déplacé par les efforts engendrés par la pression de fluide.

6. Système hydraulique selon l'une des revendications précédentes, **caractérisé en ce que** le groupe motopompe de recirculation (2) est relié à au moins deux circuits hydrauliques (A, B) et ledit au moins un dispositif de commutation mécanique (28; 86, 88; 120, 122 ; 120", 122") est configuré comme au moins une valve ayant au moins un élément de valve (54 ; 54' ; 90, 92 ; 124, 128 ; 124", 128") mobile pour la modification du rapport des débits par lesdits au moins deux circuits hydrauliques (A, B) et plus particulièrement pour la commutation d'un trajet de flux entre lesdits au moins deux circuits hydrauliques (A, B).

7. Système hydraulique selon la revendication 5 ou 6, **caractérisé en ce que** le dispositif de commutation (28) comprend au moins une première surface de commande (64) sur laquelle agit une pression de fluide dans un premier des circuits hydrauliques (A), de préférence une pression de fluide à la sortie du premier circuit hydraulique (A), et comprend au moins une deuxième surface de commande (60 ; 76) sur laquelle agit une pression de fluide dans un deuxième des circuits hydrauliques (B) ou du côté refoulement du groupe motopompe de recirculation (2).

8. Système hydraulique selon la revendication 7, **caractérisé en ce que** les surfaces de commande (64, 60 ; 76) sont reliées audit au moins un élément de valve (54 ; 54') de telle manière qu'une pression de fluide agissant sur les surfaces de commande (64, 60 ; 76) provoque ou moins une force agissant sur l'élément de valve (54 ; 54'), laquelle est orientée, du moins en partie, en direction d'un axe de mouvement (x) de l'élément de valve (54 ; 54').

9. Système hydraulique selon la revendication 6 ou 7, **caractérisé en ce que** la première surface de commande (64) est plus grande que la deuxième surface de commande (60 ; 76).

10. Système hydraulique selon l'une des revendications 7 à 9, **caractérisé en ce que** la première (64) et la deuxième (60 ; 76) surface de commande sont disposées de façon telle que les forces engendrées par la pression de fluide à la première et la deuxième surface de commande sont orientées au moins partiellement de manière opposée les unes par rapport aux autres.

11. Système hydraulique selon l'une des revendications 7 à 10, **caractérisé en ce que** la première (64) et la deuxième (60 ; 76) surface de commande sont placées dans le système hydraulique et présentent des dimensions telles que, lors d'un changement de la vitesse de rotation du groupe motopompe de recirculation (2), une montée en pression se produit plus lentement sur la première surface de commande (64) que sur la deuxième surface de commande (60 ; 76), la montée en pression plus rapide à la deuxième surface de commande (60; 76) lors d'un premier changement plus rapide de la vitesse de rotation provoquant un mouvement du dispositif de commutation (28), alors que, lors d'un deuxième changement de vitesse de rotation relativement plus lent, une montée en pression à la première (64) et à la deuxième (60 ; 76) surface de commande s'effectue tellement lentement qu'un équilibre de forces des forces agissant sur les surfaces de commande (64, 60 ; 76) se maintient.

12. Système hydraulique selon l'une des revendications précédentes, **caractérisé en ce que** le dispositif de commande (28 ; 86, 88 ; 120 ; 122 ; 120", 122") est soumis, en plus de la pesanteur, à la force magnétique et /ou d'un ressort qui agit dans la direction d'un axe de mouvement du dispositif de commande (28 ; 86, 88 ; 120, 122, 120", 122").

13. Système hydraulique selon la revendication 12 et une des revendications 9 à 11, **caractérisé en ce que** la pesanteur, la force magnétique et/ou la force de ressort est orientée au moins en partie de manière opposée à une force agissant par la pression de fluide sur la deuxième surface de commande.

14. Système hydraulique selon l'une des revendications 6 à 13, **caractérisé en ce que** ledit au moins un élément de valve (54, 54') est configuré comme cylindre creux mobile, sa première extrémité axiale (56) formant une ouverture d'entrée adaptée pour pouvoir être reliée au deuxième circuit (B) hydraulique, le cylindre creux présentant de préférence dans sa paroi périphérique au moins une deuxième ouverture d'entrée (70), adaptée pour pouvoir être reliée au premier circuit (A) hydraulique, et une deuxième extrémité axiale (60, 60') du cylindre creux formant une ouverture de sortie qui est reliée à une entrée du groupe motopompe de recirculation (2).

15. Système hydraulique selon la revendication 14, **caractérisé en ce que** la deuxième extrémité axiale (60, 60') du cylindre creux (54, 54') est reliée à une bouche d'aspiration (62, 62') d'un rotor (36) du groupe motopompe de recirculation (2).

16. Système hydraulique selon la revendication 14 ou 15 ou une des revendications 7 à 12, **caractérisé en ce que** la première (64) et la deuxième (60 ; 76) surface de commande sont liées au cylindre creux (54, 54') en transmission de force, la première (64) et /ou la deuxième (60 ; 76) surfaces de commande étant formées de préférence au cylindre creux (54, 54') et étant constituées plus particulièrement par une surface frontale (60) axiale du cylindre creux (54).

17. Système hydraulique selon une des revendications 14 à 16, **caractérisé en ce que** la deuxième surface de commande (60 ; 76) est constituée par au moins un élément de surface qui est situé dans la zone de pression (52) du groupe motopompe de recirculation (2) et est de préférence à une distance d'un rotor (36) du groupe motopompe de recirculation (2).

18. Système hydraulique selon une des revendications 6 à 13, **caractérisé en ce que** l'élément de valve (156) du dispositif de commutation (155) mécanique est conçu comme une plaque de vanne mobile dont, en direction de mouvement (S), la première face frontale axiale forme une première surface de commande et dont, en direction de mouvement (S), la deuxième face frontale axiale forme une deuxième surface de commande, qui sont soumises à la pression de fluide d'un des circuits hydrauliques (A, B), d'une pression de fluide du côté aspiration du groupe motopompe de recirculation (2) ou d'une pression de fluide du côté refoulement du groupe motopompe de recirculation (2).

19. Système hydraulique selon la revendication 18, **caractérisé en ce que** l'élément de valve (156) ferme le premier circuit hydraulique (A) dans une première position de commutation et le deuxième circuit hydraulique (B) dans une deuxième position de commutation, l'élément de valve (156) fermant les circuits hydrauliques (A, B) avec une surface s'étendant parallèlement à la direction du mouvement (S), laquelle est délimitée de préférence par au moins un joint (202) qui est mobile de telle façon qu'il vient en appui à étanchement en fonction de la pression de fluide agissant sur la surface.

20. Système hydraulique selon la revendication 18 ou 19, **caractérisé en ce que** la première et/ou la deuxième surface de commande est orientée respectivement vers un espace de pression (196, 196') où est disposée une valve (194, 194') qui est configurée pour commander une mise sous pression de l'espace de pression avec une pression de fluide provenant d'un des circuits hydrauliques (A B), du côté aspiration (166) du groupe motopompe de recirculation (2) ou du côté refoulement du groupe motopompe de recirculation (2), la valve (194, 194') s'ouvrant de préférence en fonction de la pression.

21. Système hydraulique selon une des revendications 18 à 20, **caractérisé en ce que** le dispositif de commutation (155) est configuré de telle façon que, pour déplacer l'élément de valve (156), au moins une des deux surfaces de commande soit soumise à une pression provenant de celui des circuits hydrauliques (A, B) qui est actuellement, du moins en partie, fermé par l'élément de valve (156).

22. Système hydraulique selon une des revendications 1 à 13, **caractérisé en ce que** le dispositif de commutation mécanique comprend au moins un premier (90 ; 124) et un deuxième (92 ; 128) élément de valve mobile dont le premier élément de valve (90 ; 124) est disposé dans un premier (A) des circuits hydrauliques, et le deuxième élément de valve (92 ; 128) dans un deuxième (B) des circuits hydrauliques, le premier (90 ; 124) et le deuxième élément de valve (92 ; 128) présentant des caractéristiques dynamiques différentes, étant configurés notamment de façon à réagir, dans leur mouvement, avec des efforts différemment grands ou réagissant à retardement, et/ou présentant des forces de précontrainte d'intensités différentes opposées à la direction de mouvement.

23. Système hydraulique selon la revendication 22, **caractérisé en ce que** le premier et le deuxième élément de valve (90 ; 124, 92 ; 128) sont accouplés de telle façon que seul un élément de valve (90 ; 124, 92 ; 128) peut se trouver constamment dans sa position ouverte de commutation ou seul un élément de valve constamment dans sa position fermée de commutation.

24. Système hydraulique selon une des revendications précédentes, **caractérisé en ce qu'**il est configuré comme système hydraulique de chauffage et/ou de refroidissement, de préférence, un (B) desdits au moins deux circuits hydrauliques passant par un échangeur thermique secondaire (8) pour tempérer de l'eau sanitaire et un (A) desdits au moins deux circuits hydrauliques passant par au moins un objet (10) à tempérer.

25. Système hydraulique selon une des revendications précédentes, **caractérisé en ce que** le groupe motopompe de recirculation (2) et ledit au moins un dispositif de commande (28 ; 86, 88 ; 120 ; 122 ; 120", 122") sont disposés dans un module commun, notamment un module hydraulique intégré pour une installation de chauffage compacte.

26. Procédé pour faire fonctionner un système de circuit hydraulique comprenant au moins un groupe motopompe de recirculation (2) et au moins un dispositif de commutation mécanique (28 ; 86, 88 ; 120, 122) relié hydrauliquement au groupe motopompe de recirculation (2), lequel dispositif est adapté pour pouvoir être déplacé en au moins deux positions de commutation, un déplacement du dispositif de commutation (28 ; 86, 88 ; 120, 122 ; 120", 122") entre une première et une deuxième position de commutation étant effectué par une adaptation de la vitesse de rotation du groupe motopompe de recirculation par laquelle est engendrée pour le moins une force hydraulique agissant sur le dispositif de commutation (28 ; 86, 88 ; 120, 122 ; 120", 122") et provoquant un déplacement du dispositif de commutation (28 ; 86, 88 ; 120, 122; 120", 122"),
**caractérisé en ce qu'**un déplacement du dispositif de commutation (28 ; 86, 88 ; 120, 122 ; 120", 122") entre la première et la deuxième position de commutation est effectué, en fonction d'une évolution d'une montée en pression engendrée par le groupe motopompe de recirculation (2), de façon telle que, lors d'une première évolution de la montée en pression, le dispositif de commutation (28 ; 86, 88 ; 120, 122 ; 120", 122") est déplacé vers une première position de commutation et lors d'une deuxième évolution, différente de la première évolution, le dispositif de commutation (28 ; 86, 88 ; 120, 122 ; 120", 122") est déplacé vers une deuxième position de commutation.
